# EUROPEAN PATENT APPLICATION

(11) **EP 4 617 138 A1**
(43) Date of publication of application: **17.09.2025**
(21) Application number: 25162295.7
(22) Date of filing: 07.03.2025
(51) Int. Cl.: B60W 50/12, B60K 35/10, B60W 50/14, B60W 50/00

(54) **DRIVER ASSIST APPARATUS, DRIVER ASSIST METHOD, AND NON-TRANSITORY STORAGE MEDIUM**

(30) Priority: 14.03.2024 JP 2024040479
(71) Applicant: TOYOTA JIDOSHA KABUSHIKI KAISHA, Toyota-shi, Aichi-ken, 471-8571 (JP)
(72) Inventor: YOSHIKAWA, Takahiko, Toyota-shi, 471-8571 (JP)
(74) Representative: J A Kemp LLP

(57) **Abstract**

A driver assist apparatus (12) includes one or more processors configured to: collectively provide instructions of settings with group, the settings being set to driver assist functions included in the group, and the group being configured so that the driver assist function of a vehicle (10) is allowed to be added to or deleted from the group; and execute condition restriction control to restrict satisfaction of a specific condition based on a relationship between a plurality of the driver assist functions in the group.

## Description

### BACKGROUND OF THE INVENTION

### 1. Field of the Invention

The disclosure relates to a driver assist apparatus, a driver assist method, and a non-transitory storage medium.

### 2. Description of Related Art

Japanese Unexamined Patent Application Publication No. 2007-196854 (JP 2007-196854 A) describes an apparatus and a method that group a plurality of driver assist functions based on driver assist details and that are capable of activating driver assist functions in response to an instruction from a user.

### SUMMARY OF THE INVENTION

In the related art, a selected driver assist function (hereinafter, which may be simply referred to as function) is allowed to be added to or deleted from a group. There is a function that does not activate depending on a condition; however, if the function is added to or deleted from a group, a situation can occur where the function does not activate.

For example, there is a case where an underlying function is present. For example, a lane tracing assist function assists in steering so that a vehicle can drive at the center of the same lane. The lane tracing assist function needs a radar cruise control function as an underlying function. The radar cruise control function assists with vehicle speed control, such as acceleration and deceleration, according to an inter-vehicle distance from a preceding vehicle. An emergency driving stop system function determines whether there is an abnormality, such as a driver's sudden illness. The emergency driving stop system function needs the lane tracing assist function for detecting the grip and operation of a steering wheel, as an underlying function. If an underlying function is deleted from a group, a situation can occur where a remaining function does not activate as a result. Conversely, when a function is added to a group in a state where there is no underlying function in the group, a situation can occur where the added function does not activate.

There is also a case where a conflicting function is present. For example, the radar cruise control function accompanied by acceleration conflicts with a speed limiter function that suppresses acceleration to a vehicle speed higher than or equal to a vehicle speed set by a user. A group to which a high assist level is set and a group to which a low assist level is set in eco-driving can conflict with each other in settings of driver assist functions themselves. If functions that cannot activate at the same time are present in a group, a situation can occur where one of the functions does not activate.

The disclosure provides a driver assist apparatus, a driver assist method, and a program capable of suppressing confusion of a user resulting from non-activation of a driver assist function depending on a condition.

A first aspect of the disclosure provides a driver assist apparatus. A driver assist apparatus includes one or more processors configured to: collectively provide instructions of settings with group, the settings being set to driver assist functions included in the group, and the group being configured so that the driver assist function of a vehicle is allowed to be added to or deleted from the group; and execute condition restriction control to restrict satisfaction of a specific condition based on a relationship between a plurality of the driver assist functions in the group.

With the driver assist apparatus according to the first aspect of the disclosure, the driver assist functions are grouped, and the driver assist apparatus restricts satisfaction of a specific condition in providing instructions to the group. Thus, it is possible to inhibit a user from unintentionally making setting that causes a malfunction in activation of the driver assist functions.

In the driver assist apparatus according to the above aspect, the specific condition may be a state where a first driver assist function is present in the group in a state where a second driver assist function that underlies activation of the first driver assist function is not present in the group. With the driver assist apparatus according to the above aspect, it is possible to define an underlying driver assist function in the specific condition and inhibit occurrence of setting without the underlying function.

In the driver assist apparatus according to the above aspect, the specific condition may be when the second driver assist function is deleted from the group while the first driver assist function and the second driver assist function both are present in the group. With the driver assist apparatus according to the above aspect, it is possible to inhibit deletion of an underlying function when a user operates to delete the underlying function.

In the driver assist apparatus according to the above aspect, the specific condition may be when the first driver assist function is added to the group while the second driver assist function is not present in the group. With the driver assist apparatus according to the above-aspect, it is possible to inhibit addition of a function that needs an underlying function in a state where the underlying function is not present.

In the driver assist apparatus according to the above aspect, the condition restriction control may be control to delete the first driver assist function from the group when the specific condition is satisfied. With the driver assist apparatus according to the above aspect, it is possible to improve convenience by collectively deleting functions that need an underlying function when a user operates to delete the underlying function.

In the driver assist apparatus according to the above aspect, the condition restriction control may be control to add the second driver assist function to the group when the specific condition is satisfied. With the driver assist apparatus according to the above aspect, it is possible to improve convenience by adding an underlying function together at the time when a user adds a function.

In the driver assist apparatus according to the above aspect, the condition restriction control may include displaying a character string or icon indicating that activation of the first driver assist function needs the second driver assist function. With the driver assist apparatus according to the above aspect, it is possible to improve the convenience of a user by visually informing an underlying function.

In the driver assist apparatus according to the above aspect, the condition restriction control may be control to restrict addition of the driver assist function to the group or deletion of the driver assist function from the group. With the driver assist apparatus according to the above aspect, it is possible to inhibit occurrence of setting that causes a malfunction in activation of the driver assist functions.

A second aspect of the disclosure provides a driver assist method executed by a computer. The driver assist method includes: executing condition restriction control to restrict satisfaction of a specific condition based on a relationship between a plurality of driver assist functions of a vehicle in a group configured so that the driver assist function is allowed to be added to or deleted from the group; and collectively providing instructions of settings with the group, the setting being set to the driver assist functions included in the group.

A third aspect of the disclosure provides a non-transitory storage medium. A non-transitory storage medium storing instructions that are executable by one or more processors and that cause the one or more processors to perform functions characterized by comprising: executing condition restriction control to restrict satisfaction of a specific condition based on a relationship between a plurality of driver assist functions of a vehicle in a group configured so that the driver assist function is allowed to be added to or deleted from the group; and collectively providing instructions of settings with the group, the setting being set to the driver assist functions included in the group.

With the technology of the disclosure, it is possible to suppress confusion of a user resulting from non-activation of a driver assist function depending on a condition.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a driver assist system according to an embodiment;
FIG. 2 is a view that shows an example of a setting screen for setting driver assist functions by group;
FIG. 3 is a view that shows an example of a setting screen for individually setting driver assist functions in a group;
FIG. 4 is a view that shows an example in which icons representing driver assist functions are respectively assigned to the driver assist functions;
FIG. 5 is a view that shows an example of a screen with which driver assist functions are allowed to be added to a group by selecting the icons of the driver assist functions;
FIG. 6 is a block diagram that shows the hardware configuration of a driver assist apparatus;
FIG. 7 is an example of the functional configuration of the driver assist apparatus;
FIG. 8 is a view that shows an example of a mode in which an icon blinks and vibrates;
FIG. 9 is a flowchart that illustrates the flow of a driver assist process serving as a driver assist method executed in the driver assist apparatus according to the present embodiment;
FIG. 10A-1 is a table that shows an example of settings assigned to driver assist functions included in a safe setting group corresponding to a second embodiment;

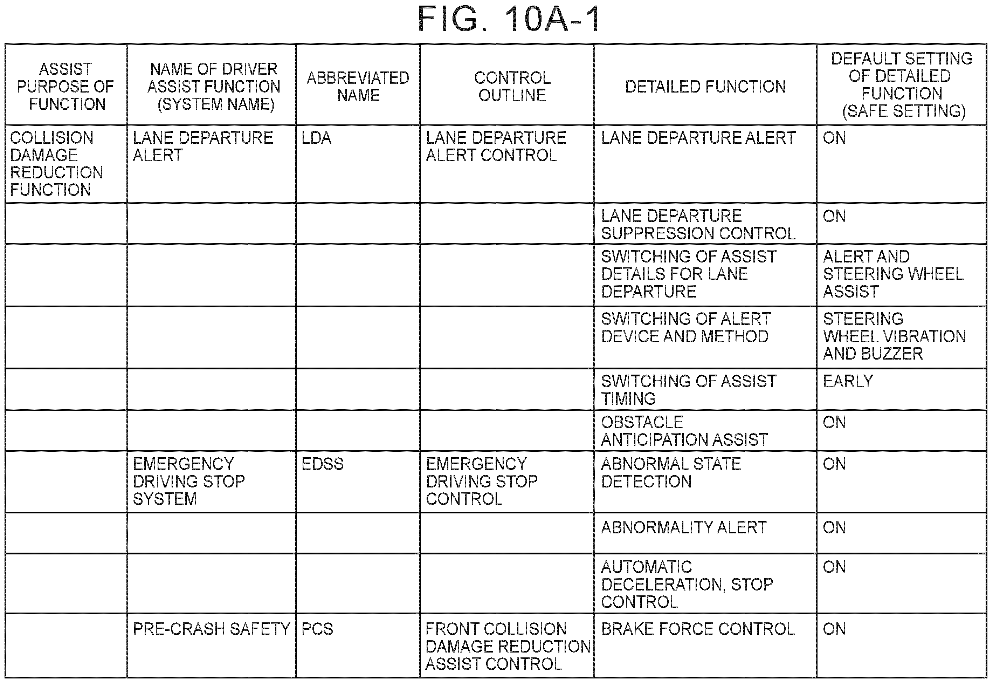

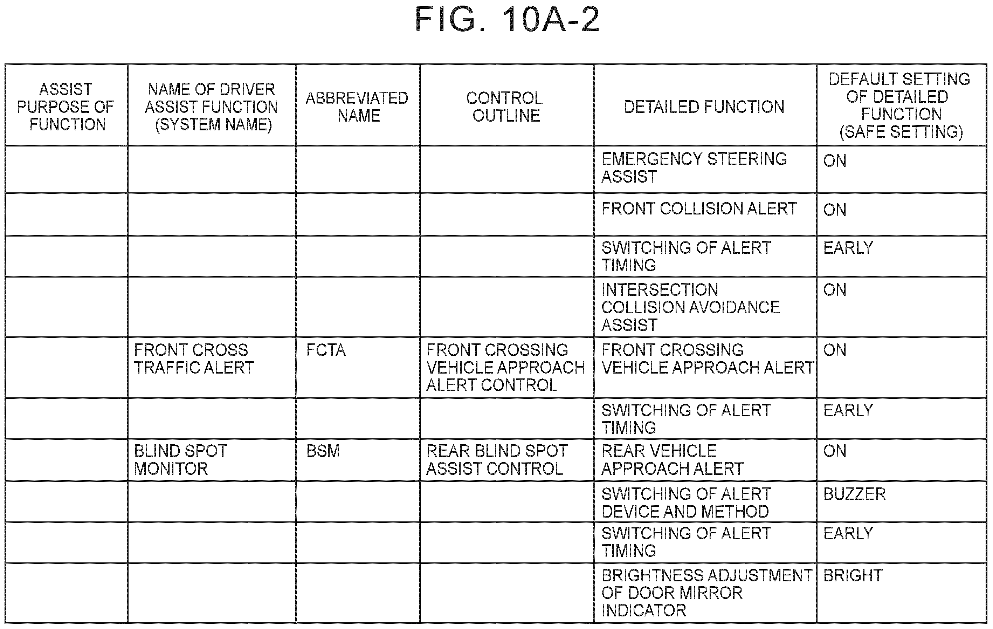

FIG. 10A-2 is a table that shows an example of settings assigned to driver assist functions included in a safe setting group corresponding to a second embodiment;

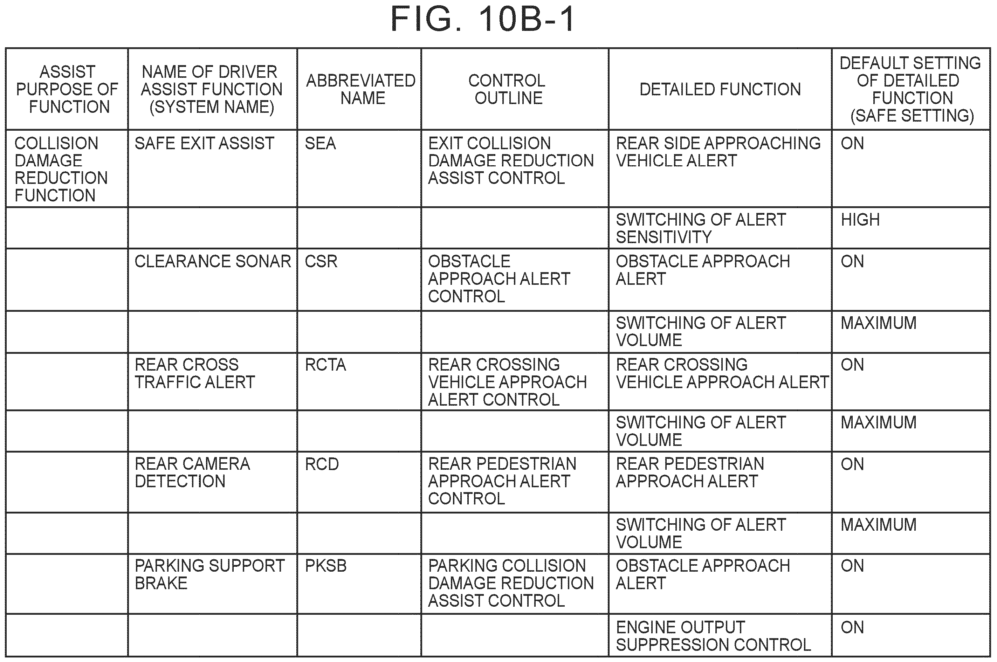

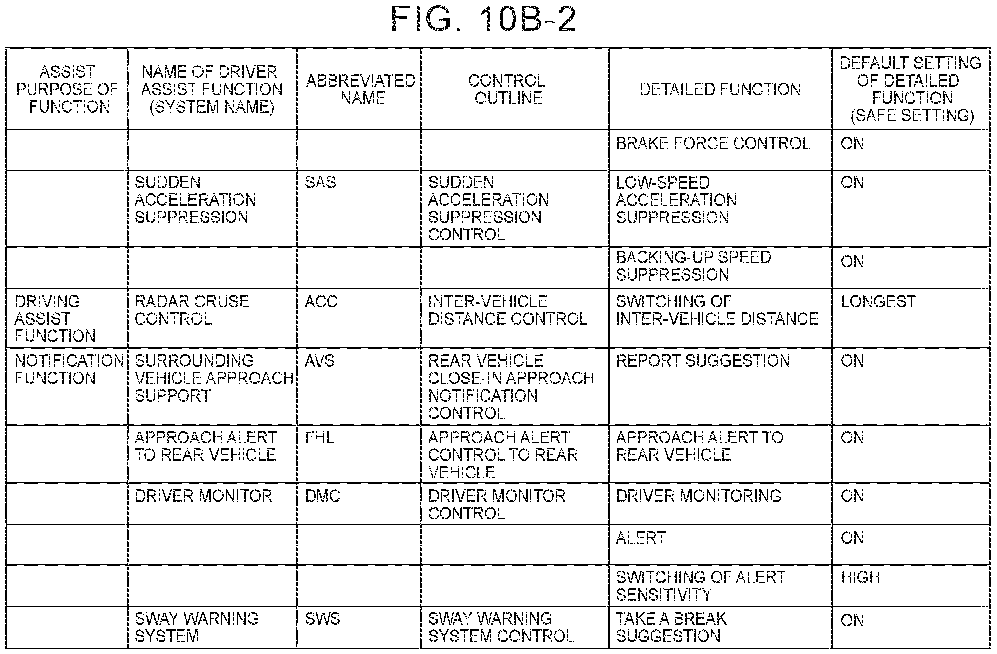

FIG. 10B-1 is a table that shows an example of settings assigned to driver assist functions included in the safe setting group corresponding to the second embodiment;
FIG. 10B-2 is a table that shows an example of settings assigned to driver assist functions included in the safe setting group corresponding to the second embodiment;

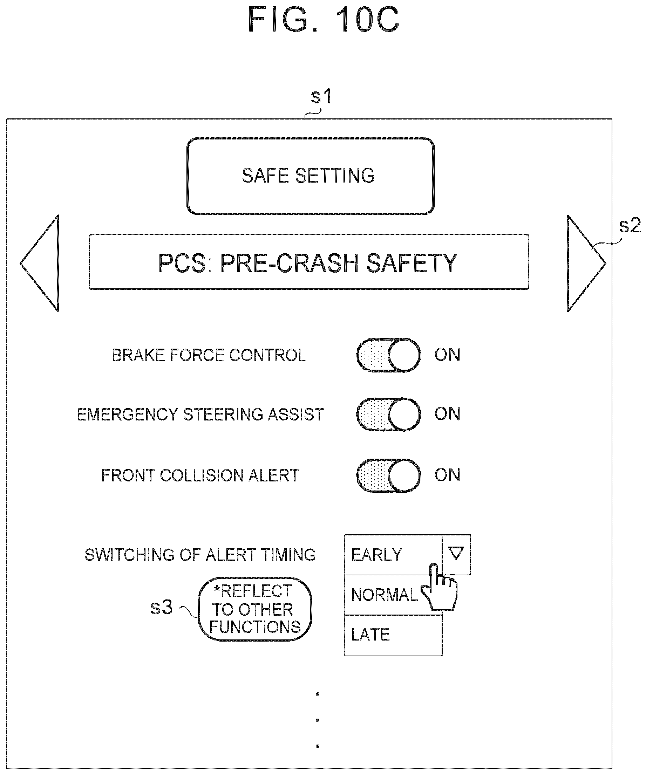

FIG. 10C is an example of a setting screen with which settings of individual detailed functions are allowed to be changed;

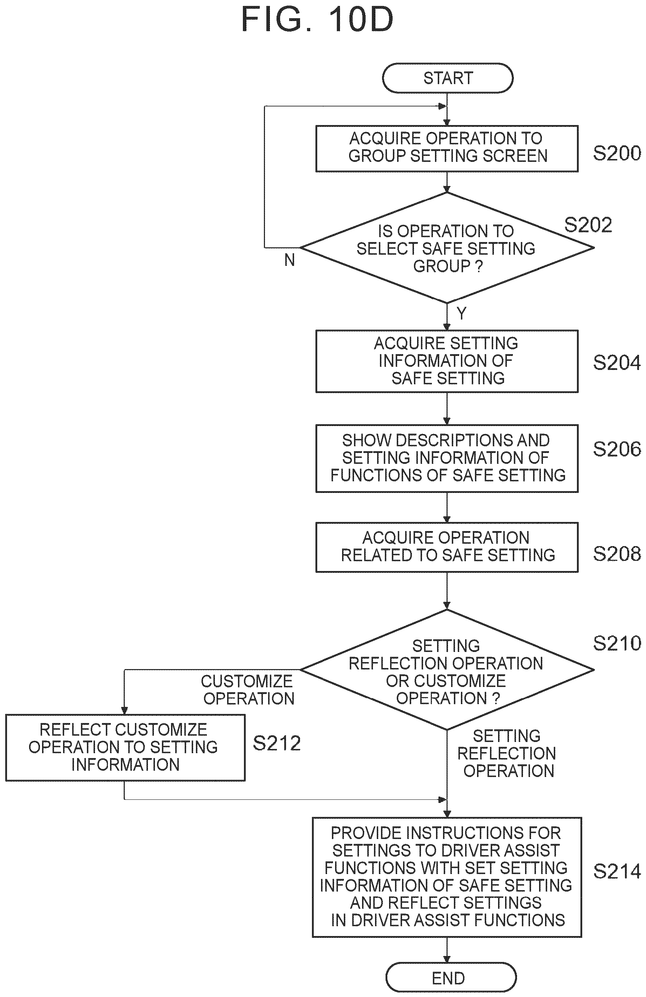

FIG. 10D is a flowchart that illustrates the flow of a driver assist process serving as a driver assist method according to the second embodiment;

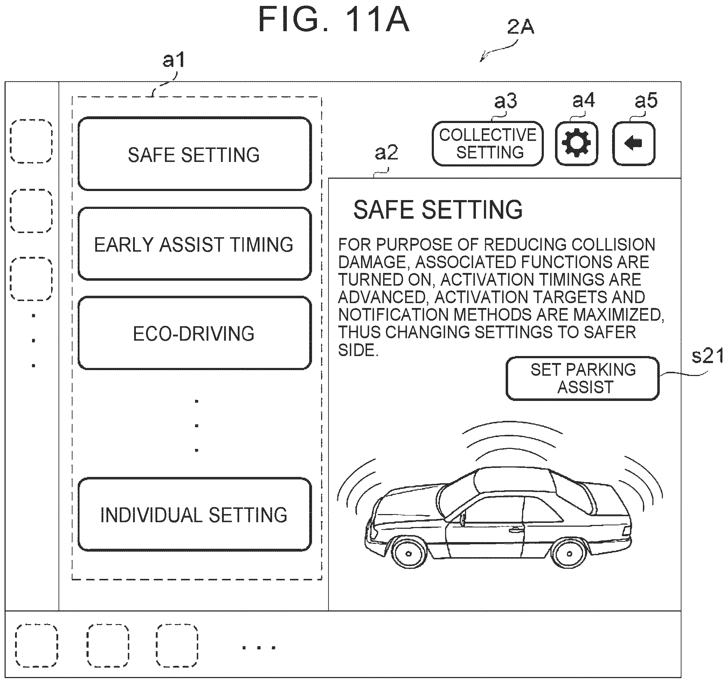

FIG. 11A is an example of a setting screen with which settings concerned with parking assist are allowed to be selected;

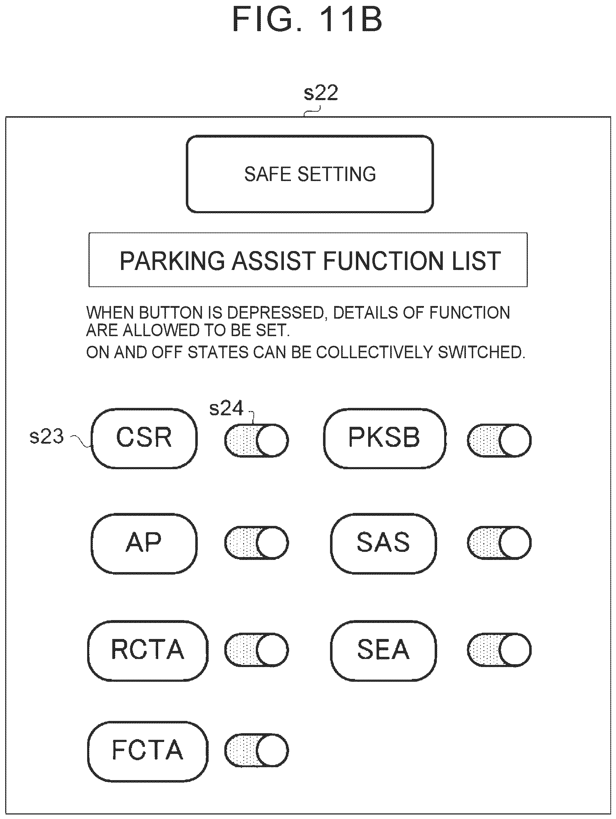

FIG. 11B is an example of a function list screen of parking assist;

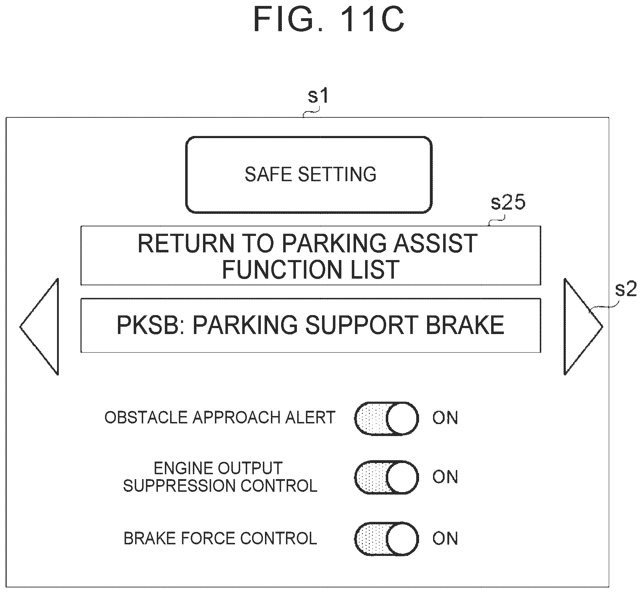

FIG. 11C is an example of a setting screen with which settings of detailed functions related to parking assist are allowed to be changed;

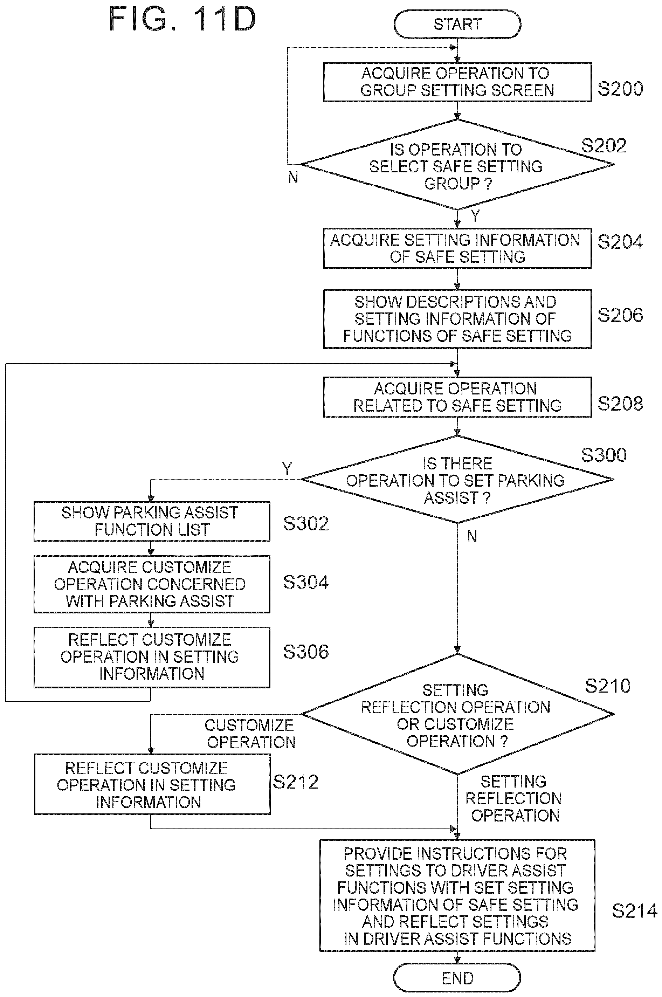

FIG. 11D is a flowchart that illustrates the flow of a driver assist process serving as a driver assist method according to a third embodiment;

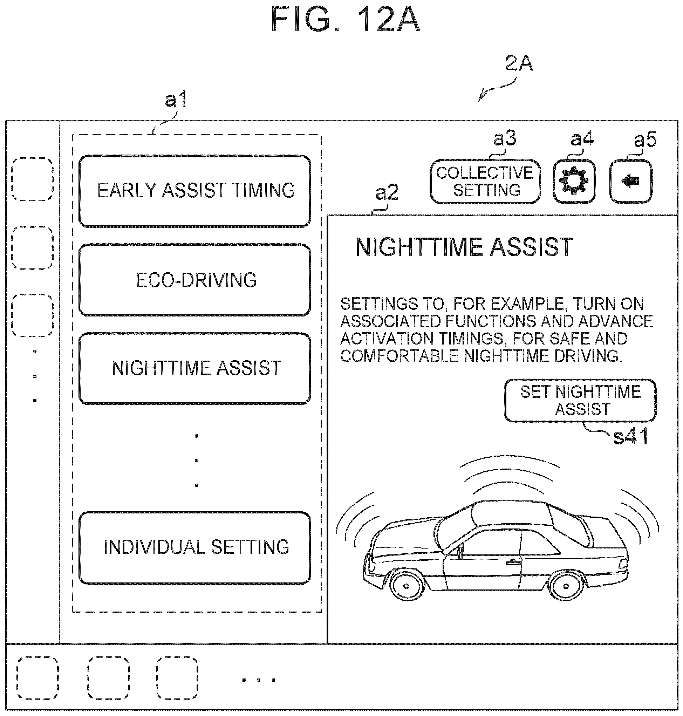

FIG. 12A is an example of a setting screen with which settings concerned with a nighttime assist function are allowed to be selected;

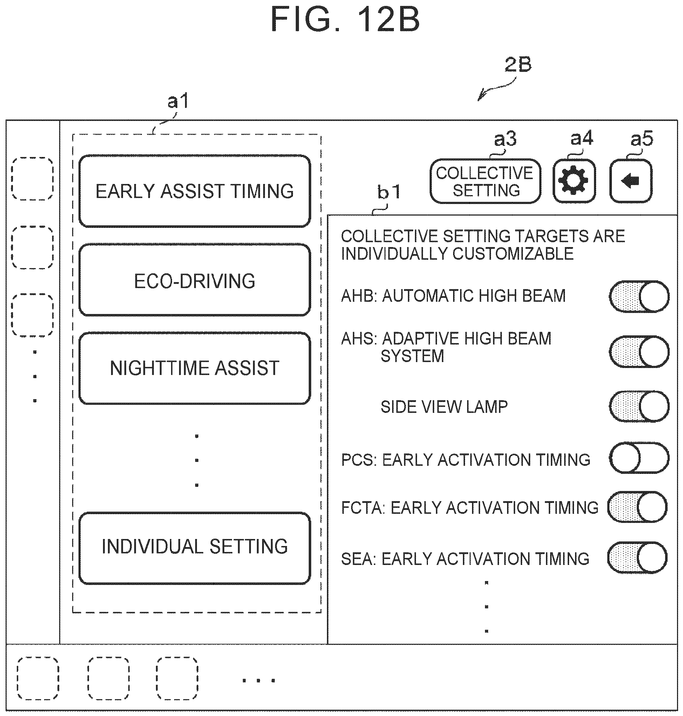

FIG. 12B is an example of a setting screen with which individual driver assist functions of the nighttime assist function are allowed to be customized;

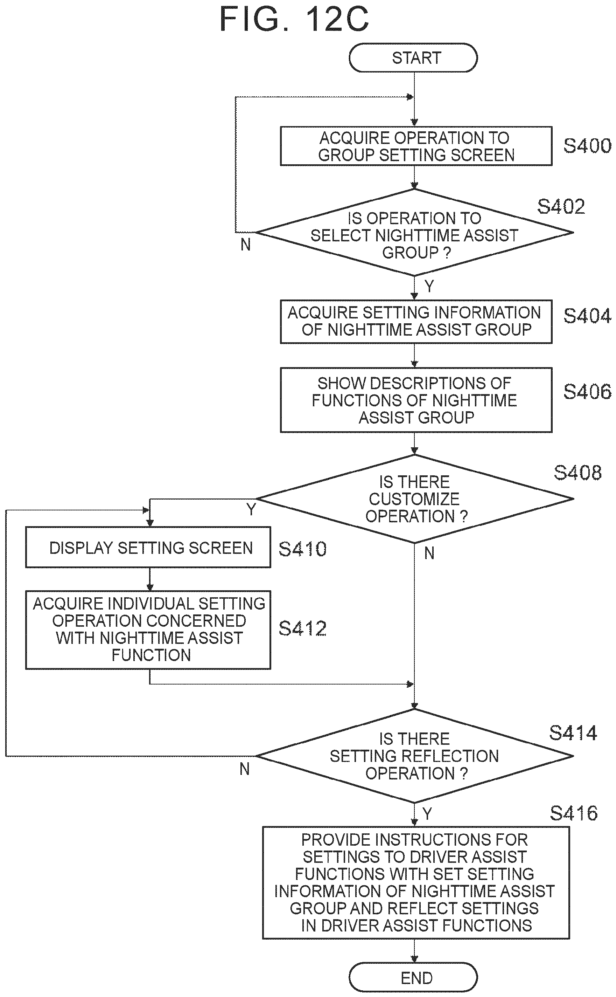

FIG. 12C is a flowchart that illustrates the flow of a driver assist process serving as a driver assist method executed by a driver assist apparatus according to a fourth embodiment;

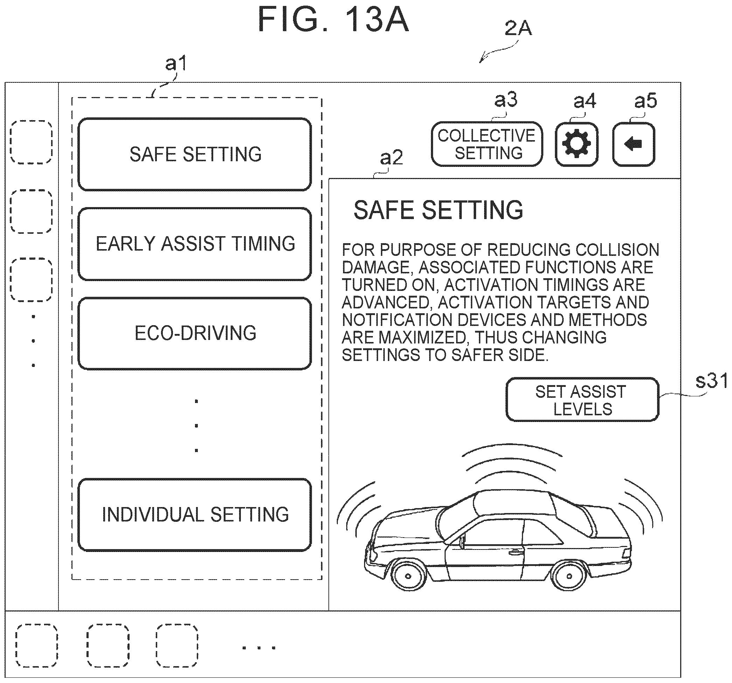

FIG. 13A is an example of a setting screen with which settings concerned with assist level are allowed to be selected;

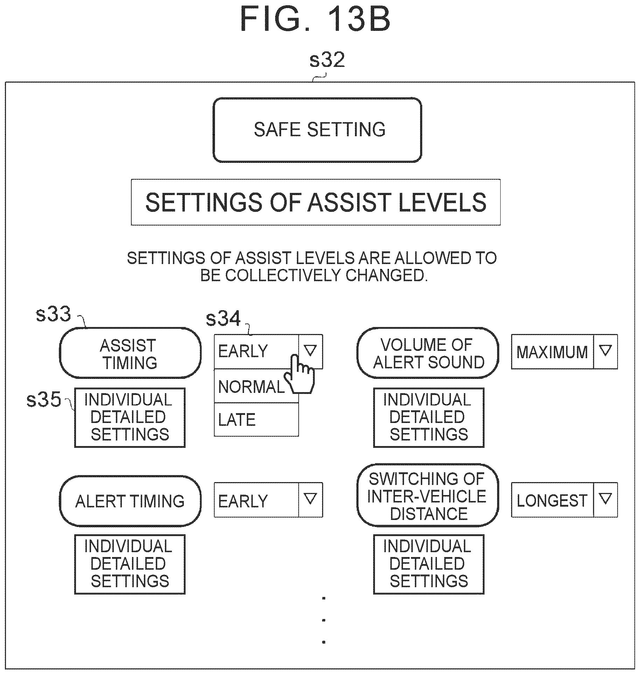

FIG. 13B is an example of an assist level list screen;

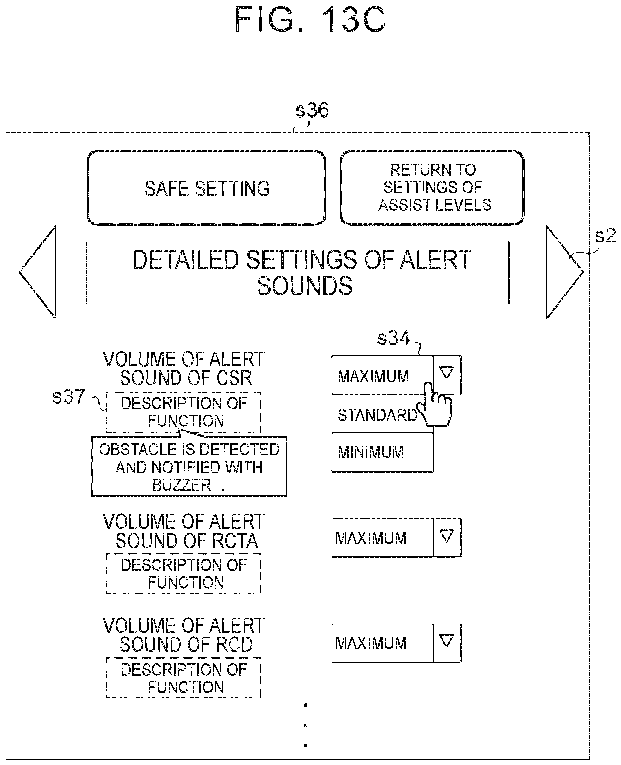

FIG. 13C is an example of a detailed screen with which assist levels are allowed to be individually set;

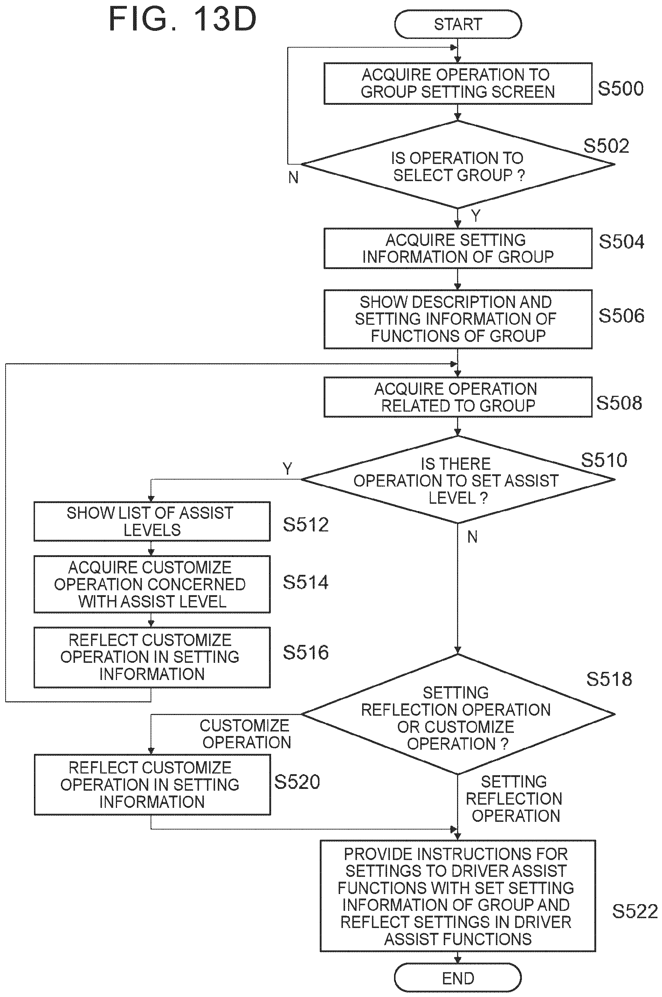

FIG. 13D is a flowchart that illustrates the flow of a driver assist process serving as a driver assist method according to a fifth embodiment;

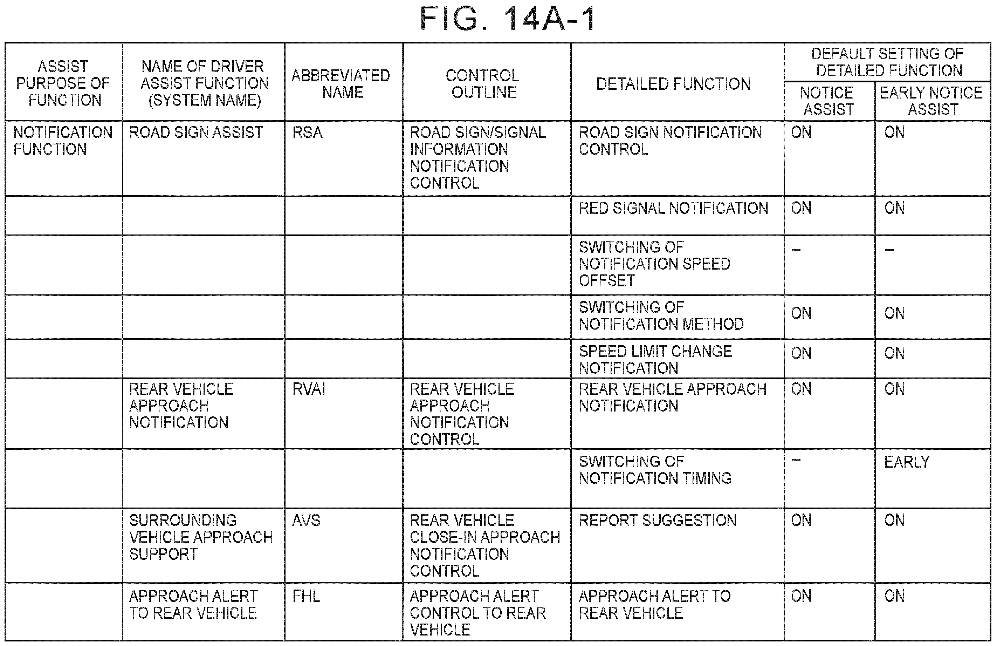

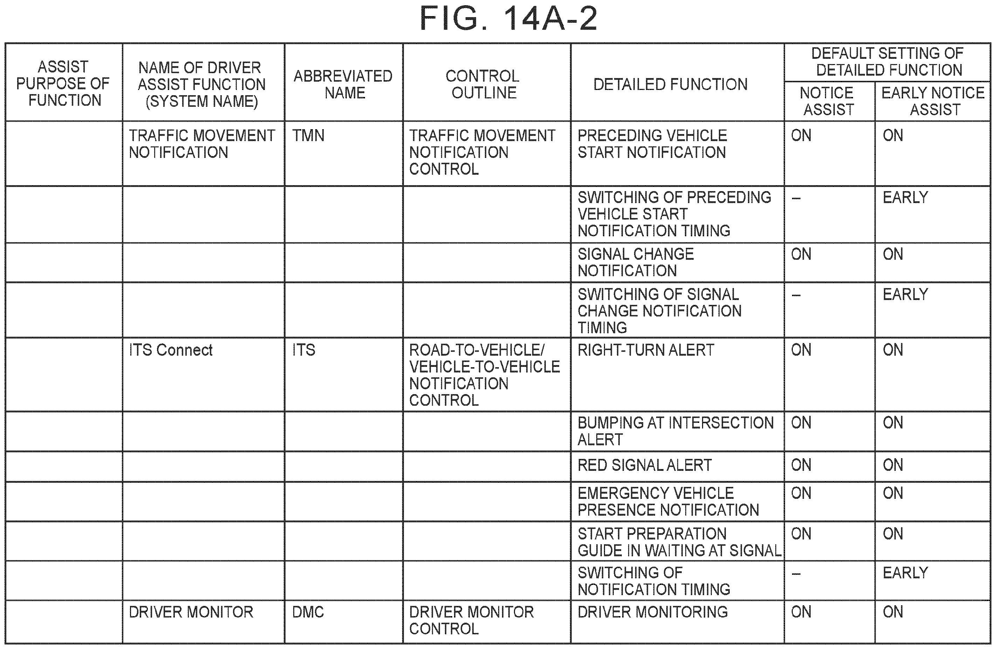

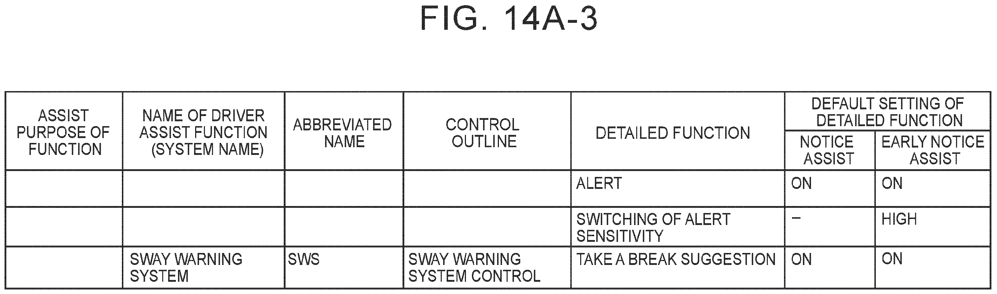

FIG. 14A-1 is an example of settings of monitoring notification functions assigned to a notification assist group;
FIG. 14A-2 is an example of settings of monitoring notification functions assigned to a notification assist group;
FIG. 14A-3 is an example of settings of monitoring notification functions assigned to a notification assist group;

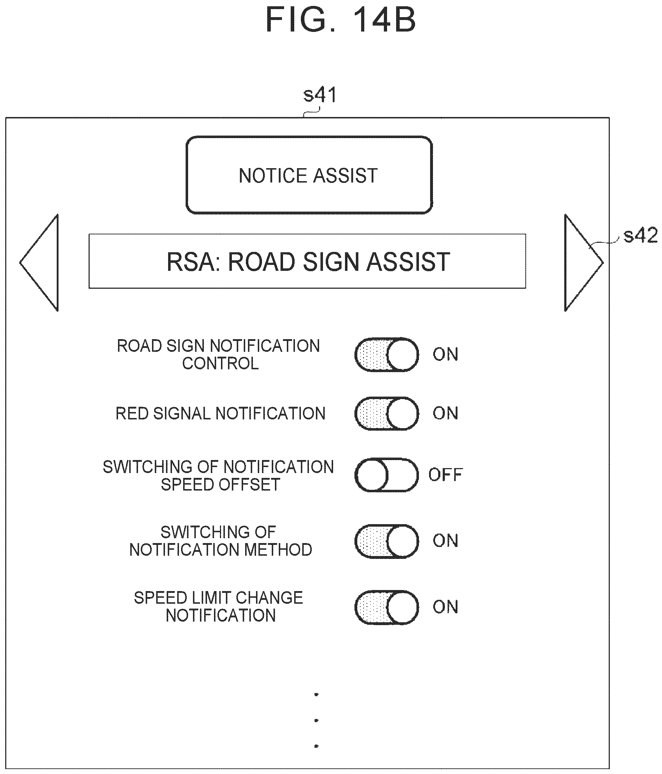

FIG. 14B is an example of a setting screen with which settings of individual detailed functions of notification assist are allowed to be changed;

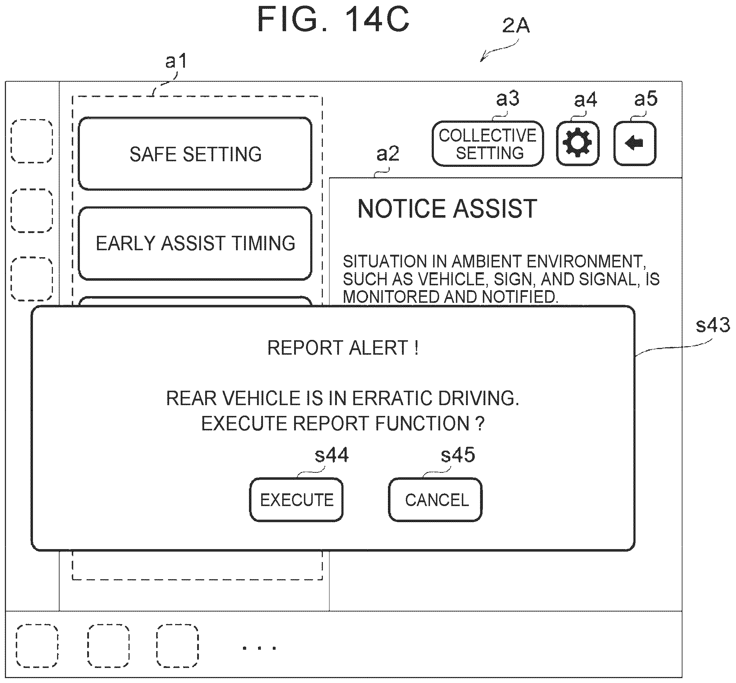

FIG. 14C is an example of a screen that suggests reporting as an activation suggestion;

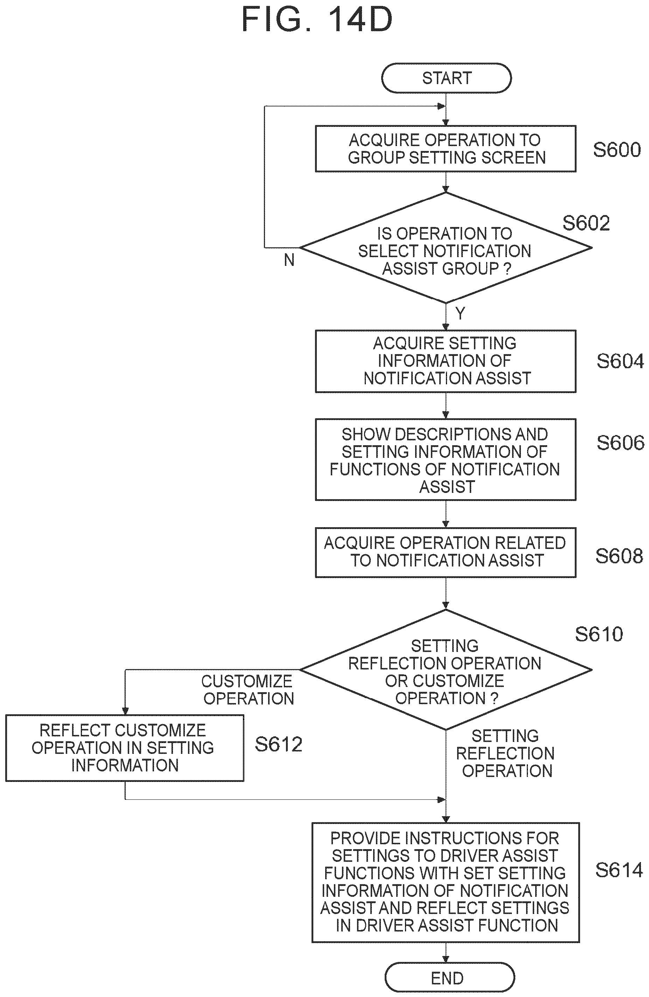

FIG. 14D is a flowchart that illustrates the flow of a driver assist process serving as a driver assist method according to a sixth embodiment;

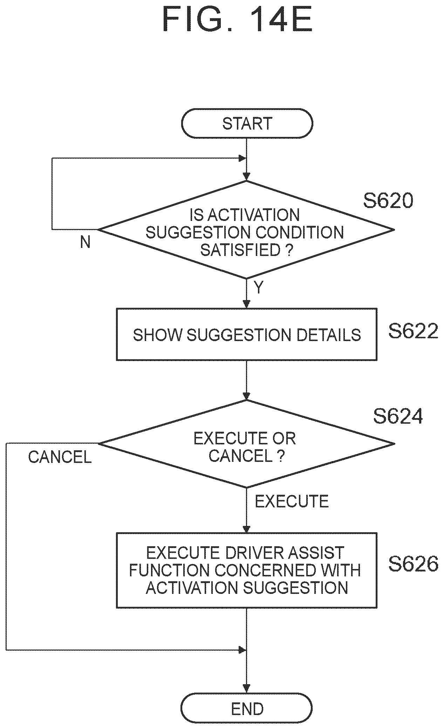

FIG. 14E is a flowchart that illustrates the flow of a driver assist process concerned with activation suggestion according to the sixth embodiment;

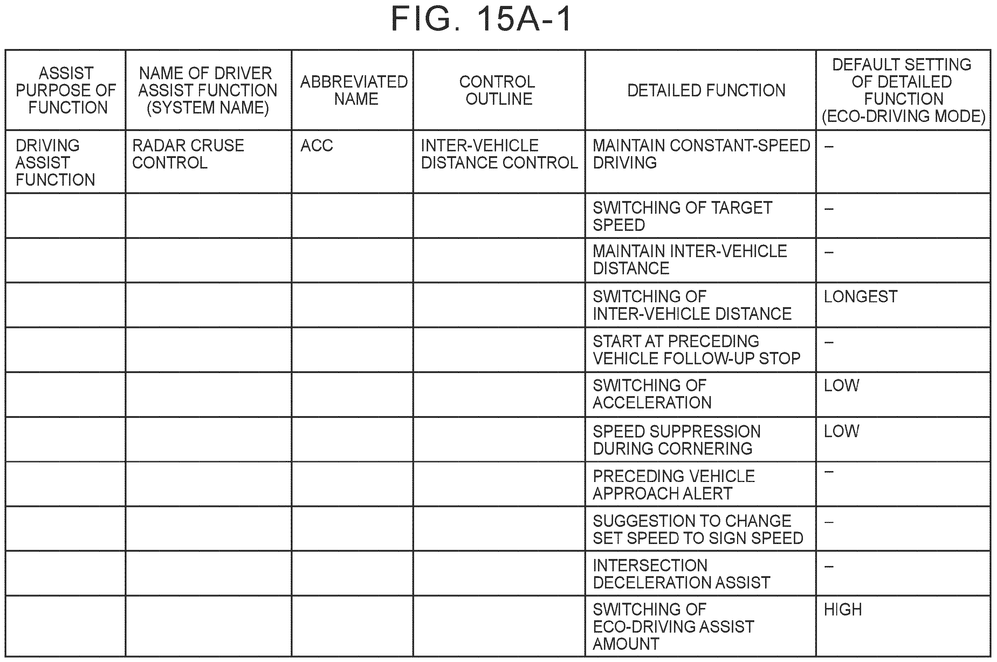

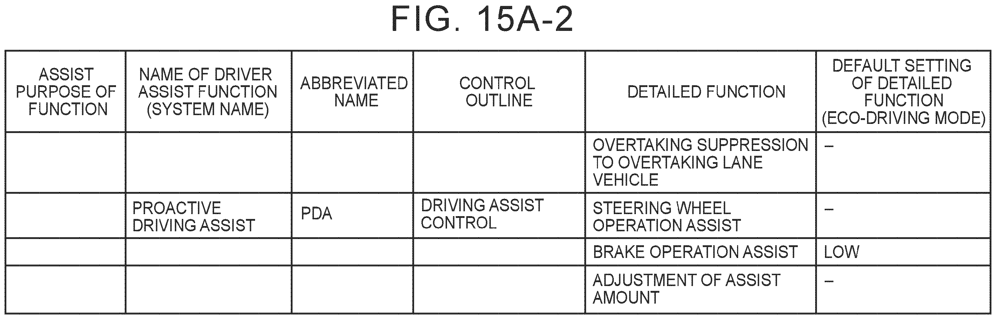

FIG. 15A-1 is an example of settings of driver assist functions assigned to an eco-driving mode group;
FIG. 15A-2 is an example of settings of driver assist functions assigned to an eco-driving mode group;

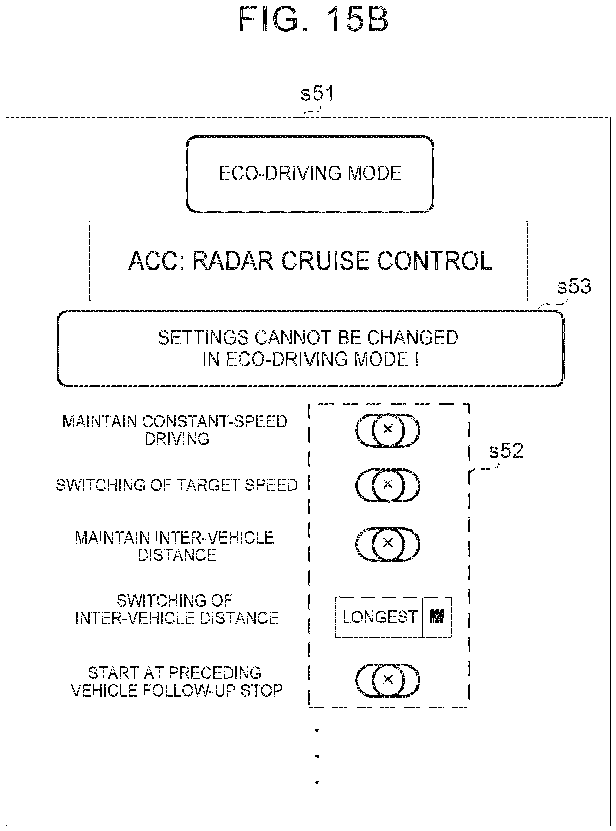

FIG. 15B is an example of a detailed screen showing the details of functions of an eco-driving mode;

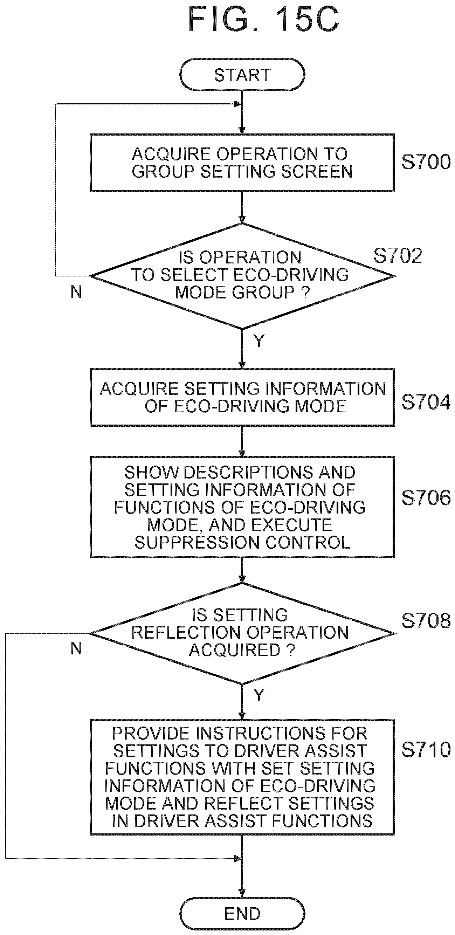

FIG. 15C is a flowchart that illustrates the flow of a driver assist process serving as a driver assist method according to a seventh embodiment;

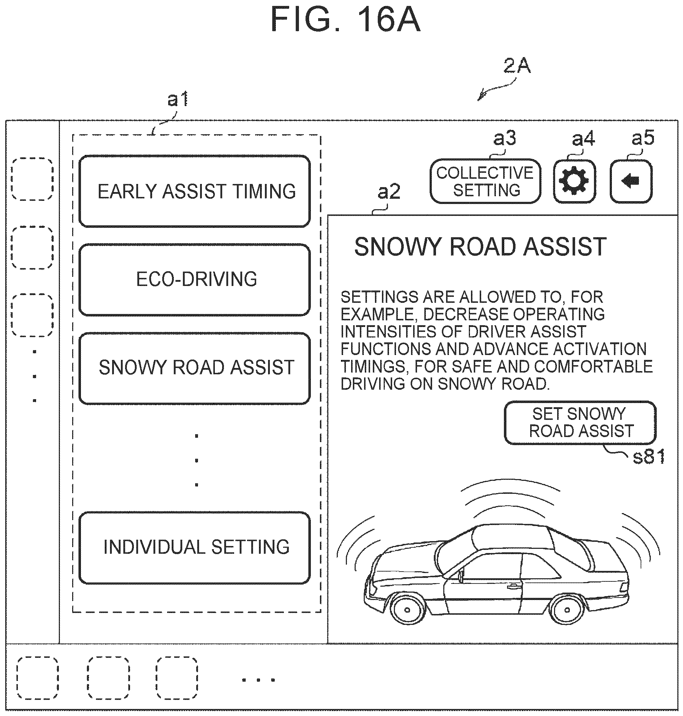

FIG. 16A is an example of a setting screen with which settings concerned with a snowy road assist function are allowed to be selected;

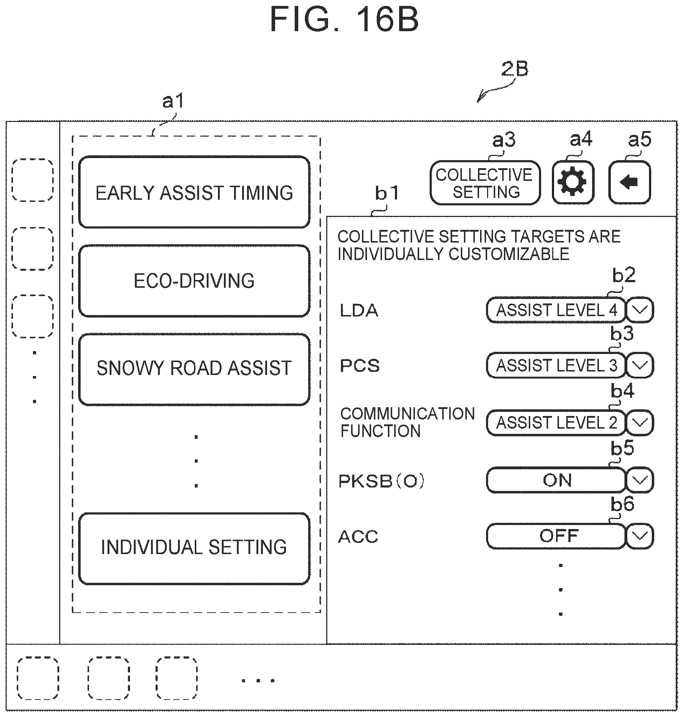

FIG. 16B is an example of a setting screen with which individual driver assist functions of the snowy road assist function are allowed to be customized;

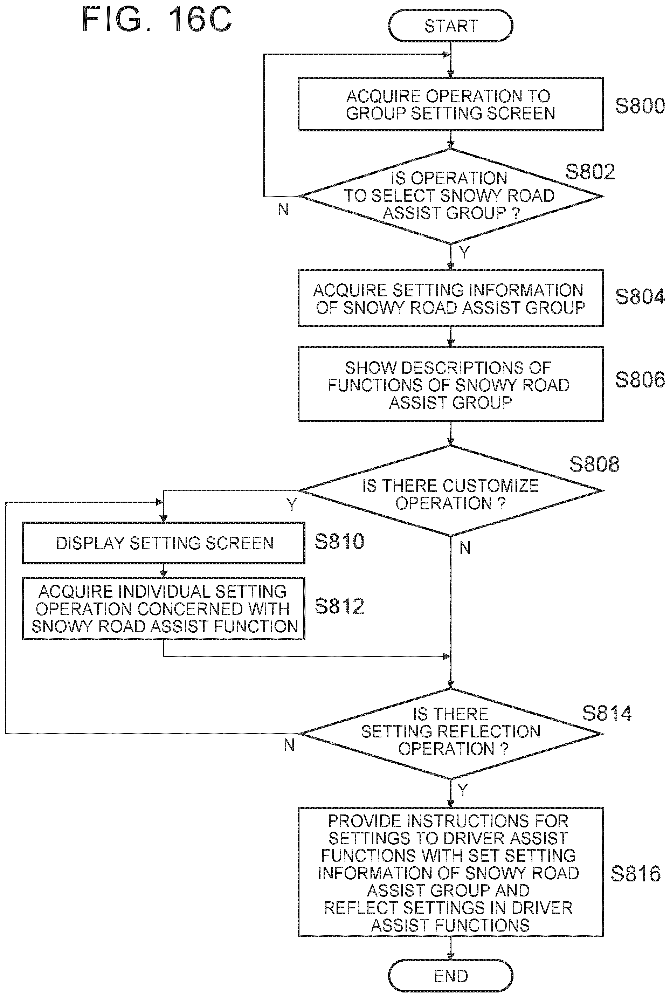

FIG. 16C is a flowchart that illustrates the flow of a driver assist process serving as a driver assist method executed by a driver assist apparatus according to an eighth embodiment;

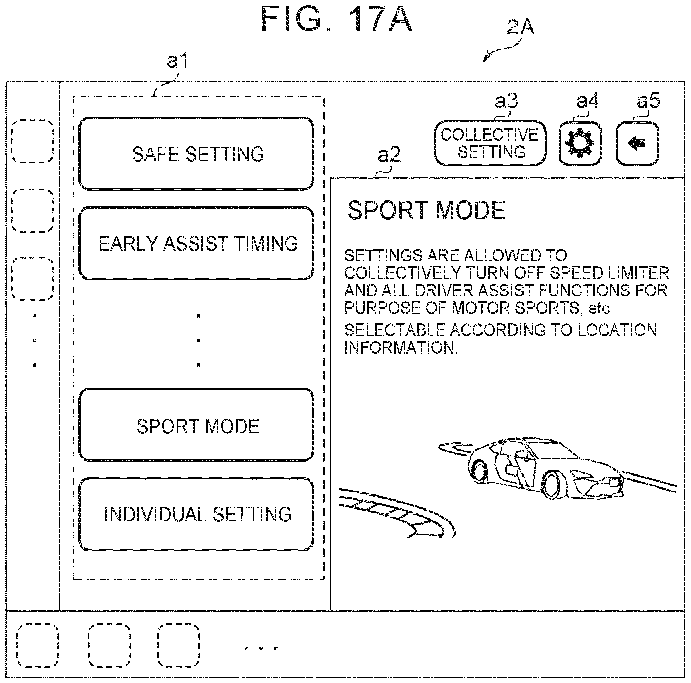

FIG. 17A is a view that shows an example of a setting screen for setting driver assist functions by group according to a ninth embodiment;

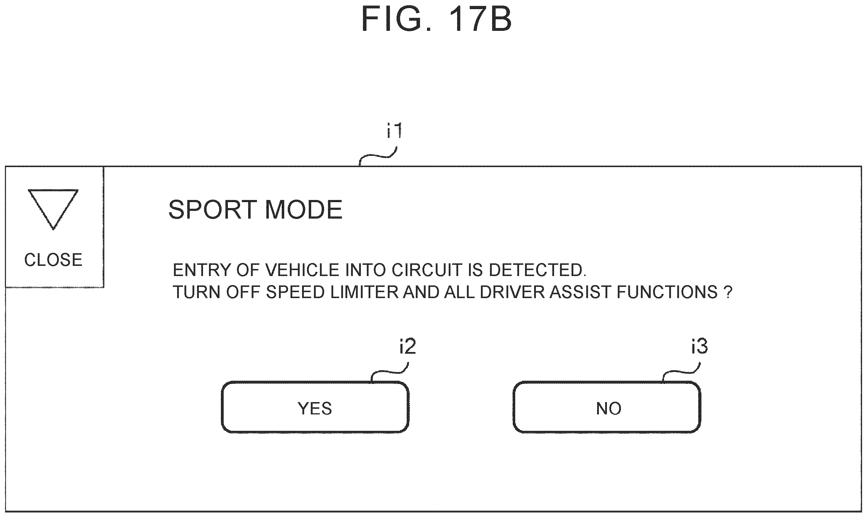

FIG. 17B is a view that shows an example of a suggestion screen that makes a suggestion to set driver assist functions by group according to the ninth embodiment;

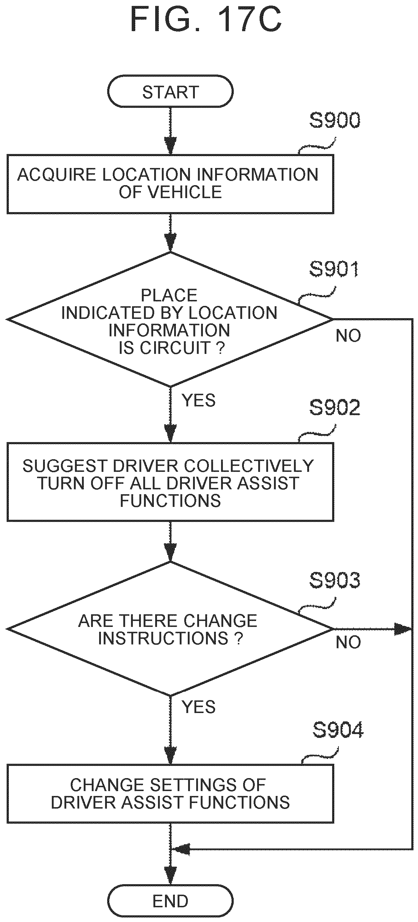

FIG. 17C is a flowchart that illustrates the flow of a driver assist process serving as a driver assist method according to the ninth embodiment;

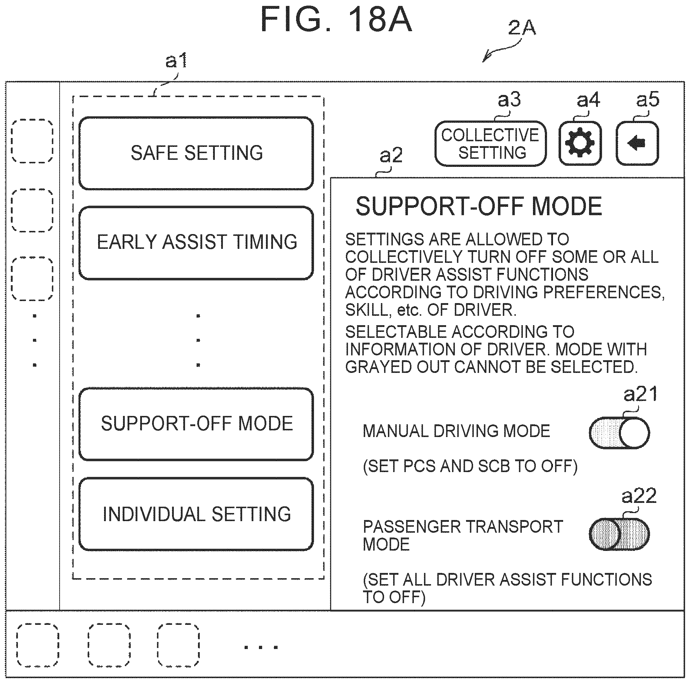

FIG. 18A is a view that shows an example of a setting screen for setting driver assist functions by group according to a tenth embodiment;

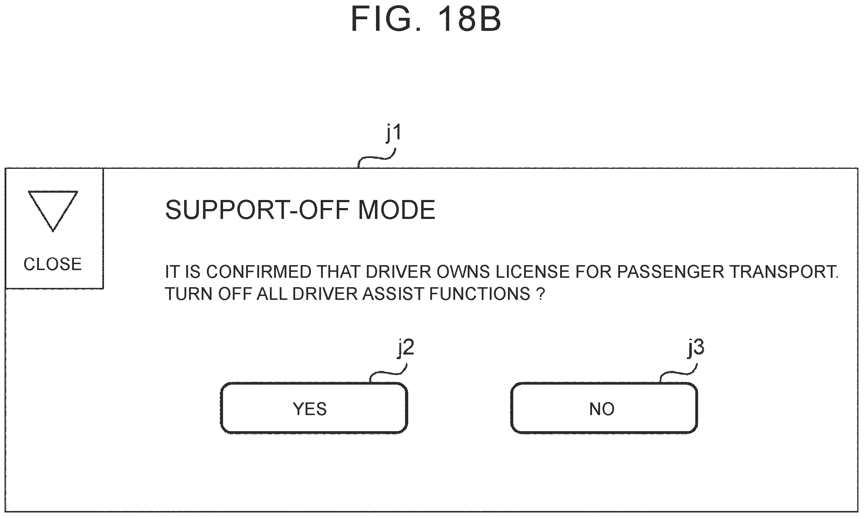

FIG. 18B is a view that shows an example of a suggestion screen that makes a suggestion to set driver assist functions by group according to the tenth embodiment;

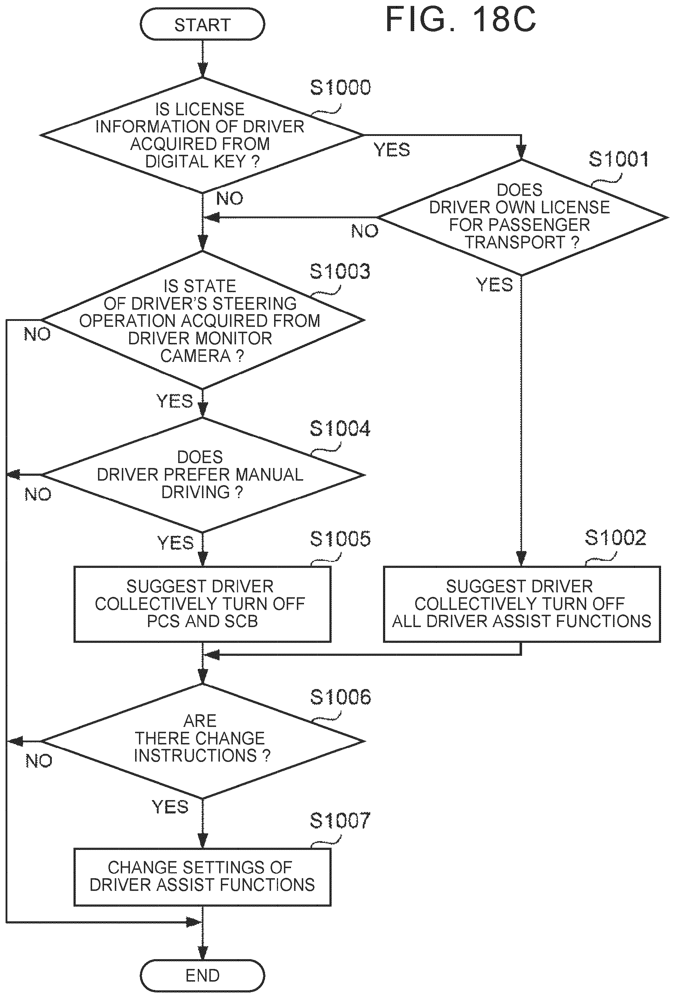

FIG. 18C is a flowchart that illustrates the flow of a driver assist process serving as a driver assist method according to the tenth embodiment;

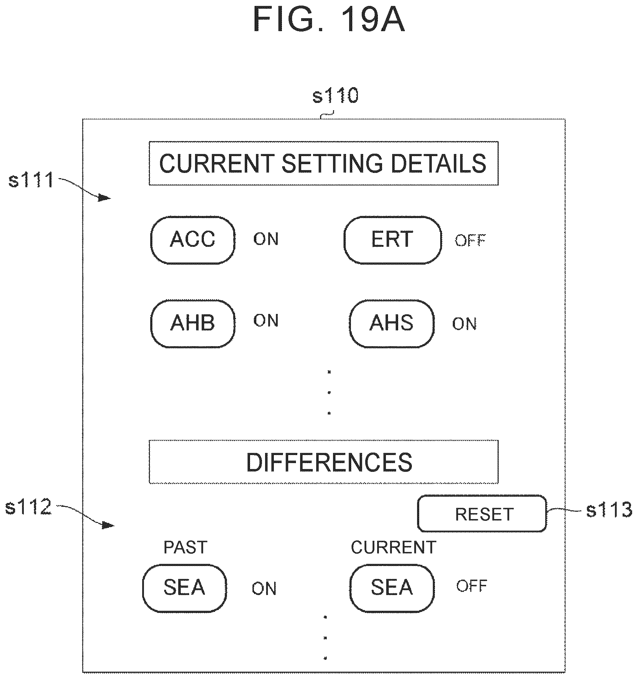

FIG. 19A is a first example of a confirmation screen showing current setting details of driver assist functions;

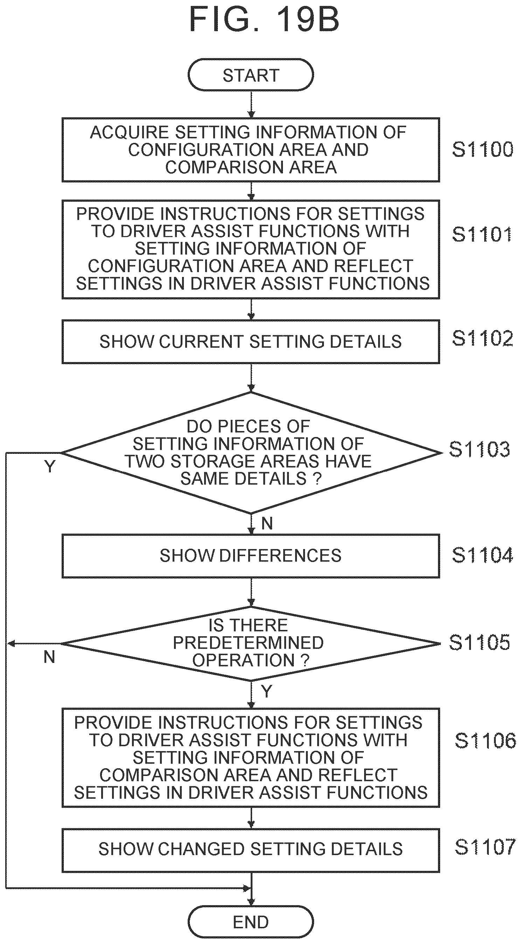

FIG. 19B is a first flowchart that illustrates the flow of a driver assist process serving as a driver assist method executed by a driver assist apparatus according to an eleventh embodiment;

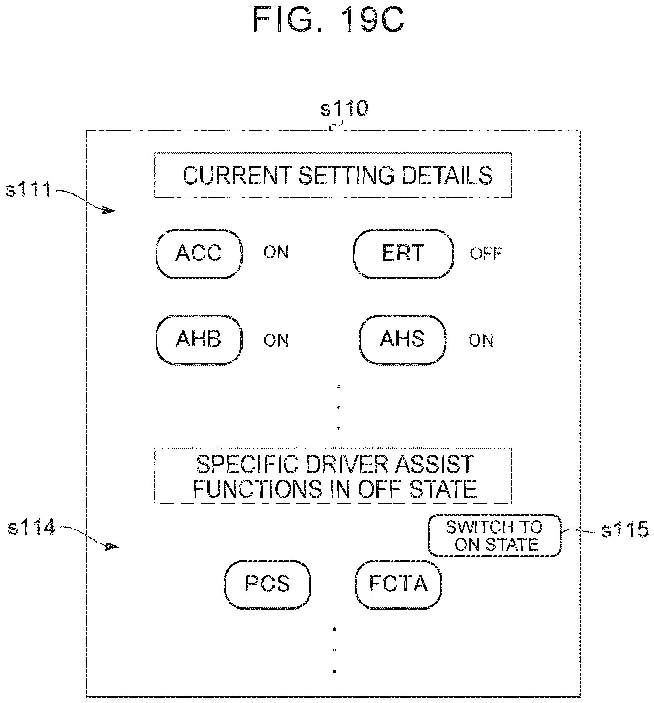

FIG. 19C is a second example of a confirmation screen showing current setting details of driver assist functions;

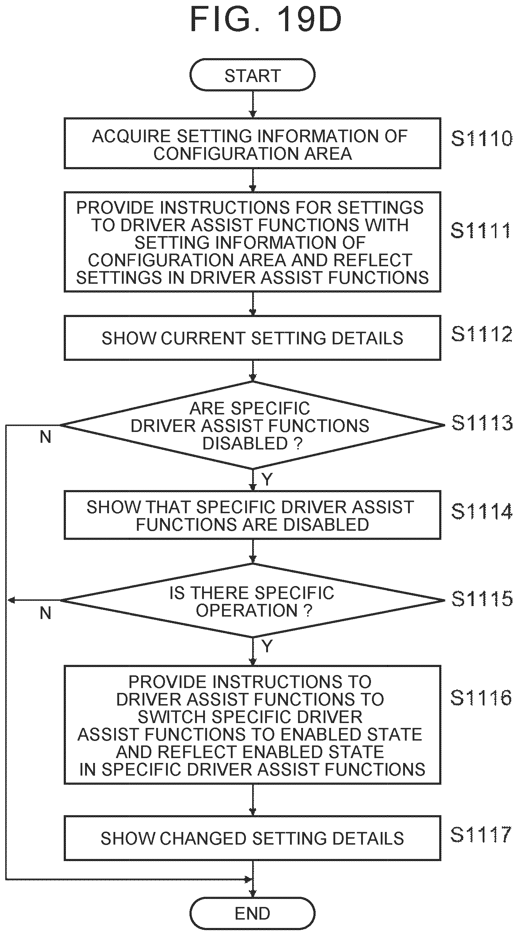

FIG. 19D is a second flowchart that illustrates the flow of a driver assist process serving as a driver assist method executed by the driver assist apparatus according to the eleventh embodiment;

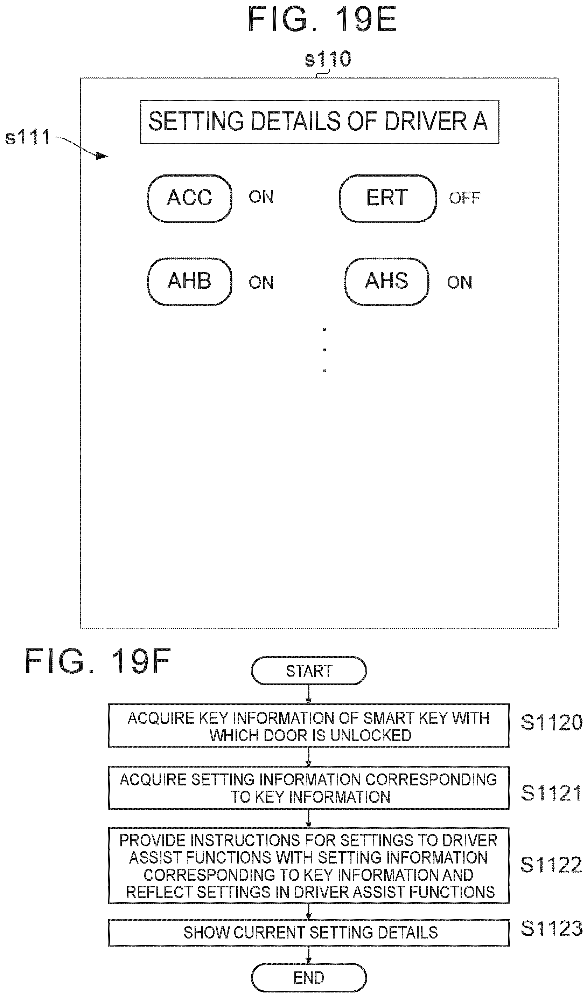

FIG. 19E is a third example of a confirmation screen showing current setting details of driver assist functions;
FIG. 19F is a third flowchart that illustrates the flow of a driver assist process serving as a driver assist method executed by the driver assist apparatus according to the eleventh embodiment;

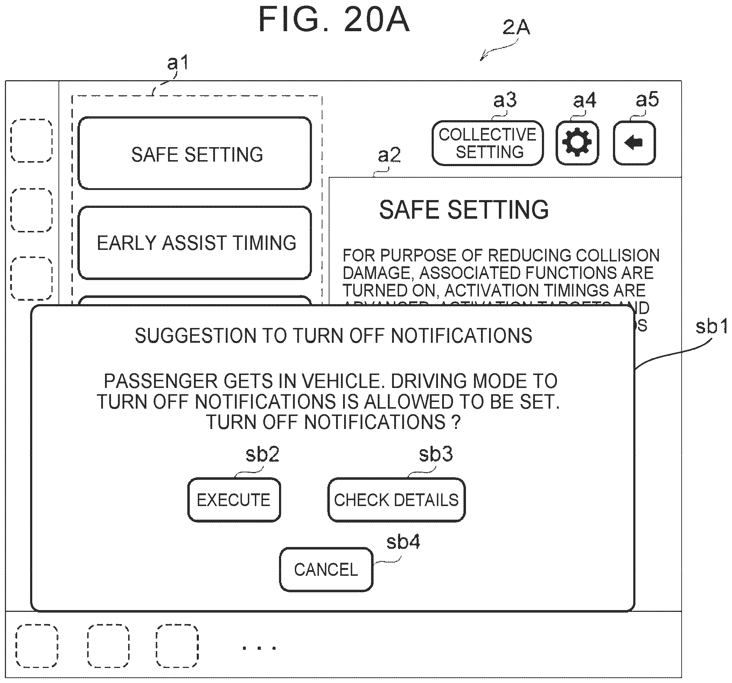

FIG. 20A is an example of a screen that suggests a chauffeur mode;

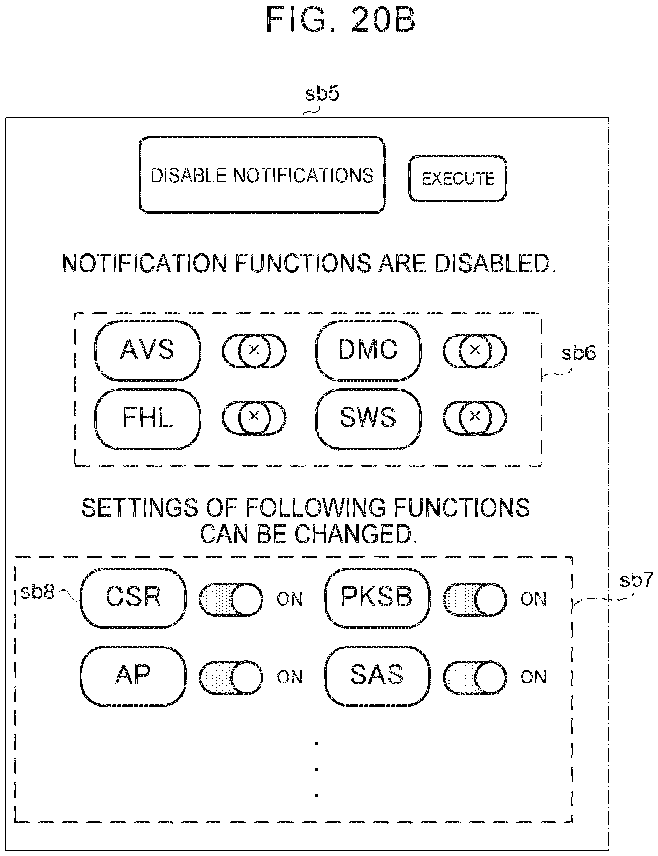

FIG. 20B is an example of a setting screen by driver assist function, concerned with disabling of notification functions;

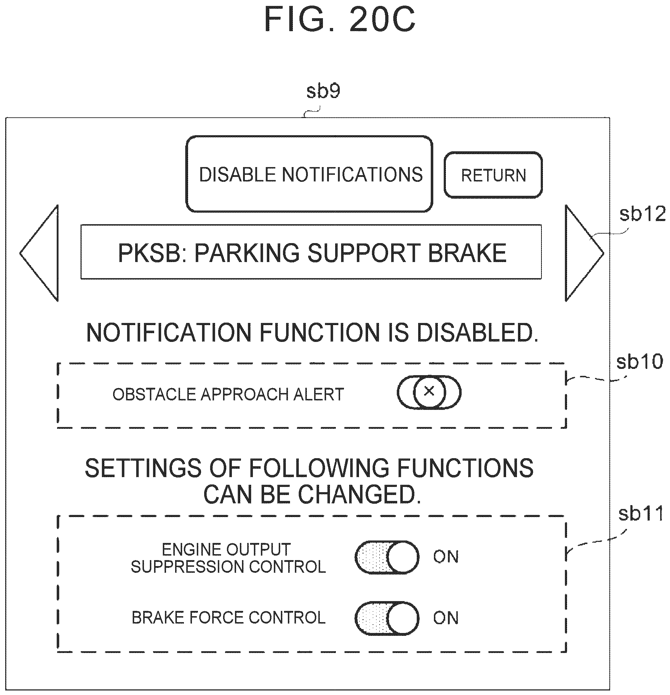

FIG. 20C is an example of a detailed screen by detailed function, concerned with disabling of notification functions; and

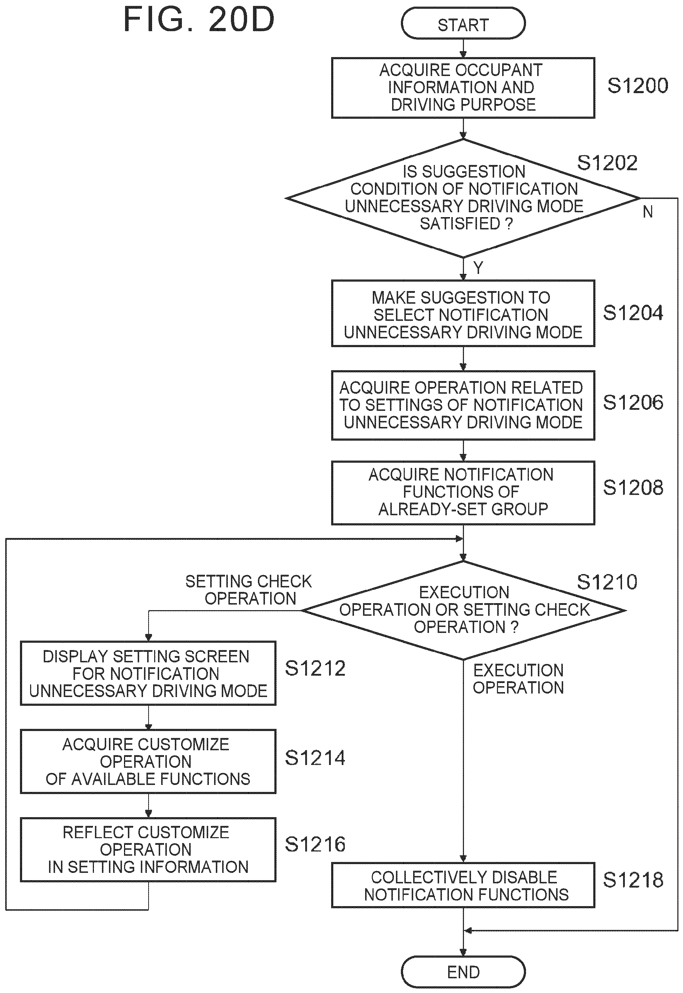

FIG. 20D is a flowchart that illustrates the flow of a driver assist process serving as a driver assist method according to a twelfth embodiment.

### DETAILED DESCRIPTION OF EMBODIMENTS

Hereinafter, embodiments of the disclosure will be described in detail with reference to the accompanying drawings.

An assumption of the embodiments of the disclosure will be described. The technology of the disclosure, as an assumption, adds a plurality of driver assist functions to a group and collectively provides instructions for settings to the driver assist functions included in the group. By collectively providing instructions by group in this way, settings are collectively reflected (collective setting) for the driver assist functions included in the group. Here, a group is a function group obtained by grouping driver assist functions of a vehicle according to a purpose of a driving scene and is configured so that the driver assist function is allowed to be added to or deleted from the group. Examples of the group include "safe setting", "driving assist function ON", "driving assist function ON at high assist level", "parking assist function ON", "parking assist function ON at high alarm sound", "notice assist function ON", "notice assist function ON with early notification", "early assist timing", "eco-driving", and "system activation suggestion OFF". Collective setting is setting for driver assist functions that belong to a group and is setting of individual driver assist functions assigned in advance according to a purpose of a group. For example, in the "eco-driving" group, such a setting that the "acceleration change" level of radar cruise control is set to "low" is assigned. The technology of the disclosure is capable of collectively providing instructions for settings to individual driver assist functions included in a group by reflecting collective setting. A user is able to arbitrarily change settings assigned to a group. When each driver assist function receives an instruction for a setting, the driver assist function reflects a value of the setting of the instruction, and the function is controlled. With a group and collective setting, it is possible to collectively reflect settings according to the purpose of the group in individual driver assist functions, which leads to improvement in the convenience of a user. Individual driver assist functions addable to groups and the groups will be described later in "description of driver assist functions" and "description of groups". Modes of the groups will be illustrated in second and subsequent embodiments.

### First Embodiment

A first embodiment will be described. A driver assist system according to the present embodiment manages a plurality of driver assist functions by group as described above. As in the case of the above-described inconvenience, when driver assist functions are managed by group, there are an "underlying function" and a "conflicting function" to be considered among functions so that a situation does not occur where a function does not activate. In the present embodiment, condition restriction control is executed. Condition restriction control restricts satisfaction of a specific condition resulting from operation of a user. The specific condition is a condition based on a relationship among a plurality of driver assist functions in a group and is a condition defining restrictions regarding an underlying function and a conflicting function. The details of the specific condition will be described later.

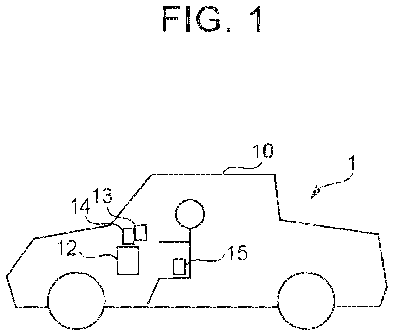

FIG. 1 is a diagram that shows the configuration of a driver assist system according to the first embodiment. As shown in FIG. 1, the driver assist system 1 includes a driver assist apparatus 12, a switch interface 13, a multimedia device 14, and a mobile terminal 15. The driver assist apparatus 12 is provided in a vehicle 10. The switch interface 13 receives operation of a user to a driver assist function. The multimedia device 14 includes a screen that is capable of displaying setting screens of driver assist functions and that allows a user to operate. The mobile terminal 15 is held by a driver and carried into the vehicle 10. Examples of the driver assist apparatus 12 include computers, such as an electronic control unit (ECU). A configuration example of the driver assist system according to the present embodiment is common to the embodiments described later. In the following description, a case where the driver is an example of the user according to the disclosure will be described as an example. Alternatively, a fellow passenger who is able to operate the multimedia device 14 may be the user.

The switch interface 13 and the multimedia device 14 include an interface with which groups are allowed to be set. The switch interface 13 is made up of, for example, various switches to which addition of a driver assist function to a group, change of a driver assist function in a group, and deletion of a driver assist function from a group are assigned in advance. For various switches, a selected interface may be provided according to a vehicle type. Examples of the mobile terminal 15 include computers, such as a smartphone, a tablet terminal, and a smart watch.

The multimedia device 14 has a touch panel display and displays a group setting screen. The group setting screen displays a list of groups and a list of individual driver assist functions in a group. With the group setting screen, operation, such as selection of a group and addition, change, and deletion of a driver assist function to and from a group, is allowed. The multimedia device 14 includes a navigation function for map view using GPS, and other multimedia functions.

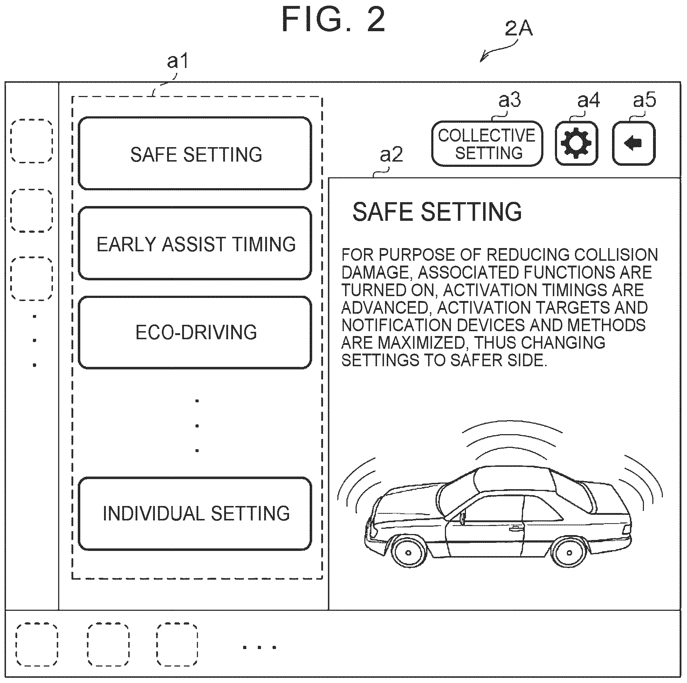

FIG. 2 is a view that shows an example of a setting screen for setting driver assist functions by group. In the example of FIG. 2, a setting screen (2A) includes a selection area (a1) in which one of the groups is allowed to be selected to switch a view, a display area (a2) in which the description of the switched group is shown, a collective setting button (a3), a customize button (a4), and a return button (a5). When a user selects a group from the selection area (a1), the selected group shows up in the display area (a2). When the collective setting button (a3) is depressed in a state where the group is displayed, instructions for settings respectively assigned to the driver assist functions belonging to the group are collectively provided to the driver assist functions, and the settings are reflected as collective setting of the group. When the customize button (a4) is depressed, individual driver assist functions allowed to be set in the group are displayed, and an individual driver assist function is allowed to be added and deleted. Alternatively, icons respectively representing driver assist functions may be respectively assigned to the driver assist functions, and the driver assist functions may be allowed to be added to and deleted from a group by selecting or operating the icons. An individual driver assist function allowed to be added and deleted here includes a driver assist function itself and individual detailed functions included in the driver assist function. When the return button (a5) is depressed, the view is changed to a view showing collective setting of a group set last time.

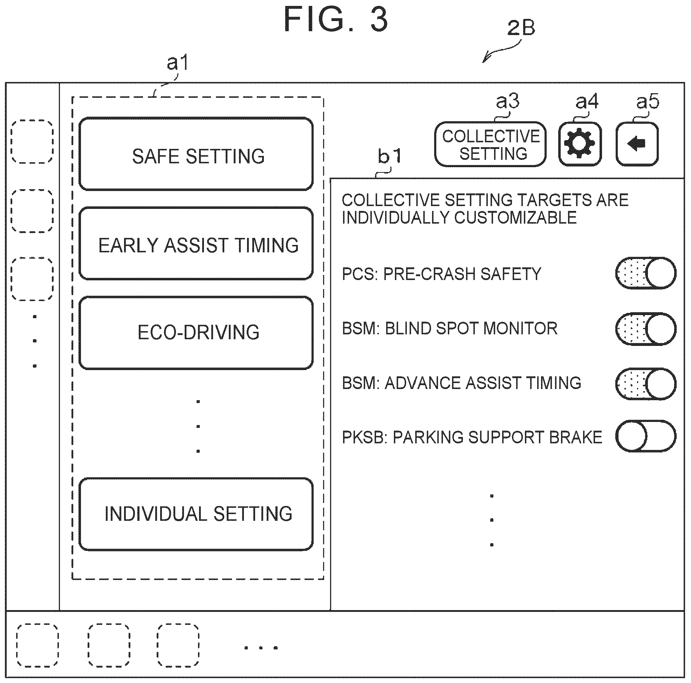

FIG. 3 is a view that shows an example of a setting screen for individually setting driver assist functions in a group. On a setting screen (2B), in a setting area (b1), switching between an on state and an off state is allowed with an interface for switching an individual driver assist function to an on state or an off state.

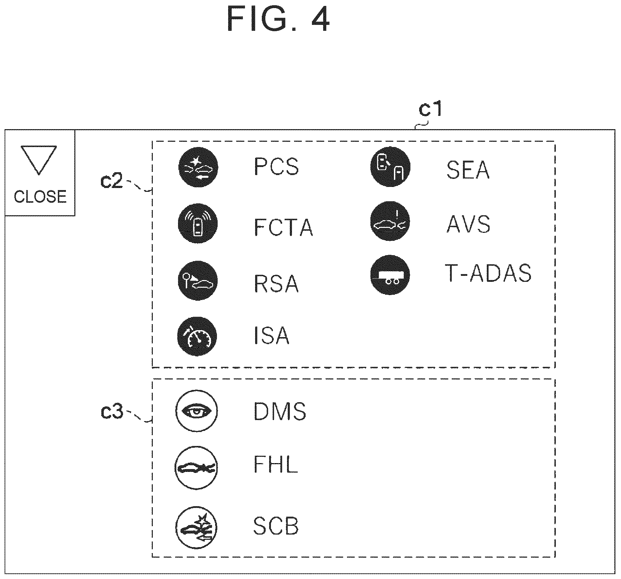

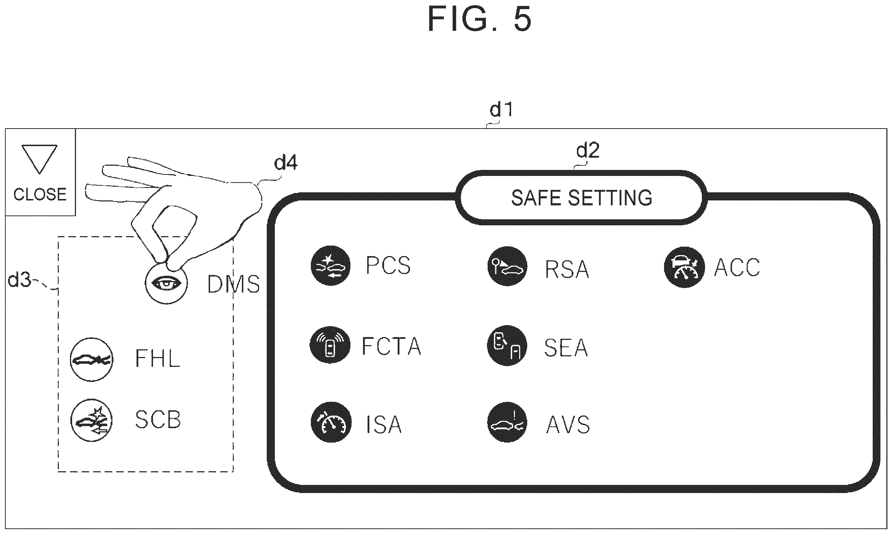

FIG. 4 is a view that shows an example in which icons representing driver assist functions are respectively assigned to the driver assist functions. The illustrated screen shows a case where, in a setting area (c1), driver assist functions added to a group are shown as colored icons (c2) and non-added driver assist functions are shown as non-colored icons (c3). The setting area (c1) may be shown in an expanded view by switching the view of the setting area (b1) or may be shown in an overlapping view. A user may be allowed to select driving assist functions to be added to a group by performing operation to select icons. Additionally, marks indicating that the icons are selected may be attached to the icons. FIG. 5 is a view that shows an example of a screen with which driver assist functions are allowed to be added to a group by selecting the icons of the driver assist functions. The illustrated screen shows, in a setting area (d1), a "safe setting" group area (d2) as a group in setting and the icons of the driver assist functions pre-assigned in the group. A user is able to add a driver assist function by selecting the icon of the driver assist function that the user wants to add from a selection area (d3) and moving the icon to the group area (d2). When an icon is selected by tapping from the selection area (d3), an operating icon (d4) may be shown to indicate that the icon is selected and being moved.

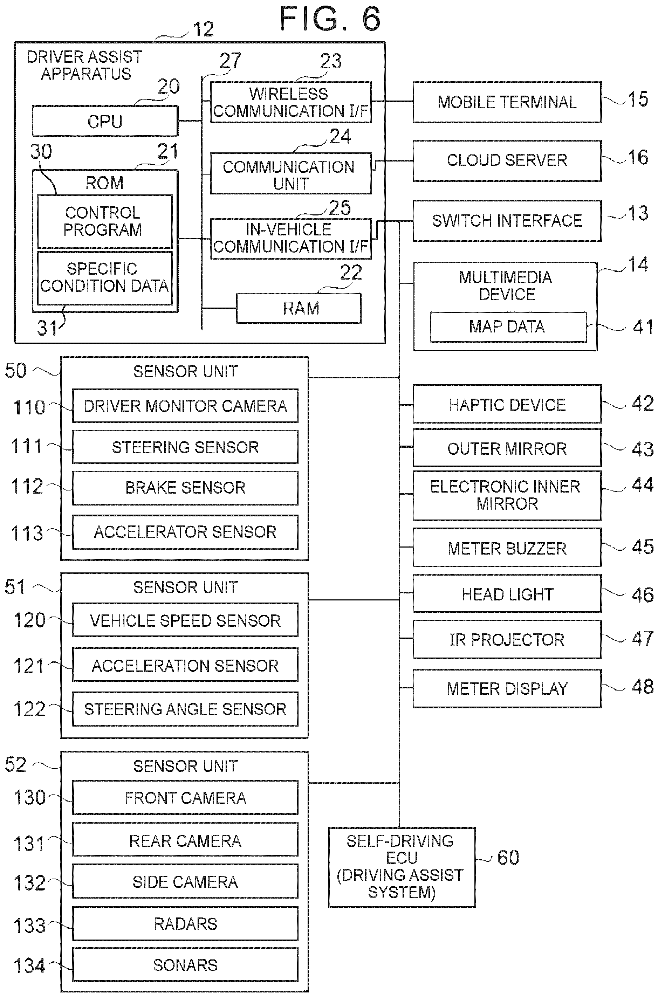

FIG. 6 is a block diagram that shows the hardware configuration of the driver assist apparatus 12. The driver assist apparatus 12 includes a central processing unit (CPU) 20, a read only memory (ROM) 21, a random access memory (RAM) 22, a wireless communication interface (I/F) 23, an in-vehicle communication I/F 25, and a communication unit 24. The CPU 20, the ROM 21, the RAM 22, the wireless communication I/F 23, the communication unit 24, and the in-vehicle communication I/F 25 are communicably connected to one another via a bus 27.

The CPU 20 is a central processing unit. The CPU 20 runs various programs and controls various units. In other words, the CPU 20 reads programs from the ROM 21 and runs the programs by using the RAM 22 as a work area.

The ROM 21 serving as a storage unit stores various programs and various data. In the present embodiment, the ROM 21 stores a control program 30 and specific condition data 31. The RAM 22 temporarily stores programs and data as a work area. The control program 30 is a program that controls a plurality of driver assist functions by group. The specific condition data 31 is data recording determination criteria of the specific condition.

The wireless communication I/F 23 is an interface for connection with the mobile terminal 15 by wireless communication. A configuration in which the driver assist apparatus 12 and the mobile terminal 15 directly communicate with each other will be described as an example; however, the technology of the disclosure is not limited to this mode. For example, a mode in which the driver assist apparatus 12 and the mobile terminal 15 communicate with each other via a server computer or the like provided in a network may be adopted.

The communication unit 24 is an interface for connection with a network at the time of communicating with an external server, such as a cloud server 16. For example, a communication standard, such as Long Term Evolution (LTE), is used for the interface. The driver assist apparatus 12 is also capable of communicating with the mobile terminal 15 via the cloud server 16.

The in-vehicle communication I/F 25 is an interface for connection with in-vehicle devices. For example, a communication standard based on a controller area network (CAN) protocol is used for the interface. The in-vehicle devices include the switch interface 13, the multimedia device 14, a haptic device 42, an outer mirror 43, an electronic inner mirror 44, a meter buzzer 45, a headlight 46, an IR projector 47, a meter display 48, a sensor unit 50, a sensor unit 51, a sensor unit 52, a self-driving ECU 60, and the like. The self-driving ECU 60 is an ECU that controls autonomous driving of the vehicle 10. Autonomous driving in the present embodiment, for example, means autonomous driving in which the vehicle 10 is the one that drives itself and means autonomous driving at a level higher than or equal to autonomous driving level 3 defined by Society of Automotive Engineers (SAE). The self-driving ECU 60 is configured to be capable of executing autonomous driving process higher than or equal to level 3. The driver assist apparatus 12 and the autonomous driving ECU 60 are separately configured; however, the driver assist apparatus 12 and the self-driving ECU 60 may be integrated. A classification of the sensor units 50, 51, 52 is an example and is not limited thereto.

The sensor unit 50 includes a driver monitor camera 110, a steering sensor 111, a brake sensor 112, and an accelerator sensor 113.

The driver monitor camera 110 is a camera that records a driving situation of a driver. The driver monitor camera 110 is equipped with an ECU for controlling recording and detecting the situation of the driver from the recorded moving image. The steering sensor 111 senses a steering wheel touch of the driver. The brake sensor 112 detects the depression amount of a brake pedal. The accelerator sensor 113 detects the depression amount of an accelerator pedal.

The sensor unit 51 includes a vehicle speed sensor 120, an acceleration sensor 121, and a steering angle sensor 122 for detecting the behavior of the vehicle 10. A vehicle speed, an acceleration, and a steering angle are respectively detected by the sensors of the sensor unit 51.

The sensor unit 52 includes a front camera 130, a rear camera 131, a side camera 132, a plurality of radars 133, and a plurality of sonars 134.

The front camera 130 is a camera provided around a front end, such as a windshield upper part, of the vehicle 10 and records obstacles ahead of the vehicle 10 and a moving image of a preceding vehicle. A moving image recorded by the front camera 130 is, for example, displayed on the display or the like of the multimedia device 14. The rear camera 131 is a camera provided around a rear end of the vehicle 10 and is a camera that, for example, records a moving image for helping with parking and helping with rear vision. A moving image recorded by the rear camera 131 is, for example, displayed on the electronic inner mirror 44 or the like. The side camera 132 is made up of a plurality of cameras provided around right and left parts of the vehicle 10 and, for example, records two directions on the front right and left sides and two directions on the rear right and left sides. Moving images recorded by the side camera 132 are displayed on the display or the like of the multimedia device 14.

The radars 133 are made up of a radar group and include, for example, a front radar 133A, a rear radar 133B, a front side radar 133C, a rear side radar 133D, a plurality of blind spot monitor (hereinafter, BSM) radars (or sensors) 133E, and the like. Because the BSM radars 133E also work as sensors, the BSM radars 133E are also referred to as BSM sensors 133E with the same reference sign. The sonars 134 are a plurality of ultrasonic wave sonars (clearance sonar) installed at the front, rear, right, and left sides of the vehicle 10 for sensing different directions.

The map data 41 is saved in the multimedia device 14 as data provided from a navigation function of the multimedia device 14. The haptic device 42 feeds back to a tactile sense of an occupant by a device vibrating a seatbelt, or the like, giving force, vibration, motion, and the like to the occupant of the vehicle 10.

The outer mirror 43 is, for example, provided around the base of an A pillar in a vehicle cabin and, for example, displays a moving image obtained by recording an area behind the host vehicle with the rear camera 131. The outer mirror 43 may be equipped with a BSM indicator.

The electronic inner mirror 44 is a driver support apparatus made up of an electronic inner mirror display 44A, an electronic inner mirror camera 44B, and a video transmission cable 44C. The electronic inner mirror display 44A is provided at a vehicle upper side and substantially the center in a vehicle width direction of the windshield in the vehicle cabin. The electronic inner mirror camera 44B records an area behind the vehicle. The video transmission cable 44C transmits a moving image. The electronic inner mirror display 44A can switch a view from a specular mirror to an electronic inner mirror by operating a switch lever. The electronic inner mirror display 44A, for example, displays a moving image obtained by recording an area behind the host vehicle with the electronic inner mirror camera 44B while driving forward or while backing up. A rear view can be checked without a field of view being obstructed by a headrest, baggage, or the like. The privacy of an occupant can be protected by not showing a rear seat. An approach of a rear vehicle can be notified to a user by turning on amber light at a liquid crystal screen edge of the electronic inner mirror display 44A in cooperation with the BSM radars 133E.

The meter buzzer 45 notifies a user with a buzzer sound. The headlight 46 supports an adaptive high-beam system (hereinafter, AHS), determines the brightness of the lamp of a forward vehicle, a street light, or the like with the front camera 130, and controls the light distribution of a headlamp. The IR projector 47 projects light for helping in recording with various cameras. The meter display 48 is a display that is installed around a meter and that performs auxiliary display.

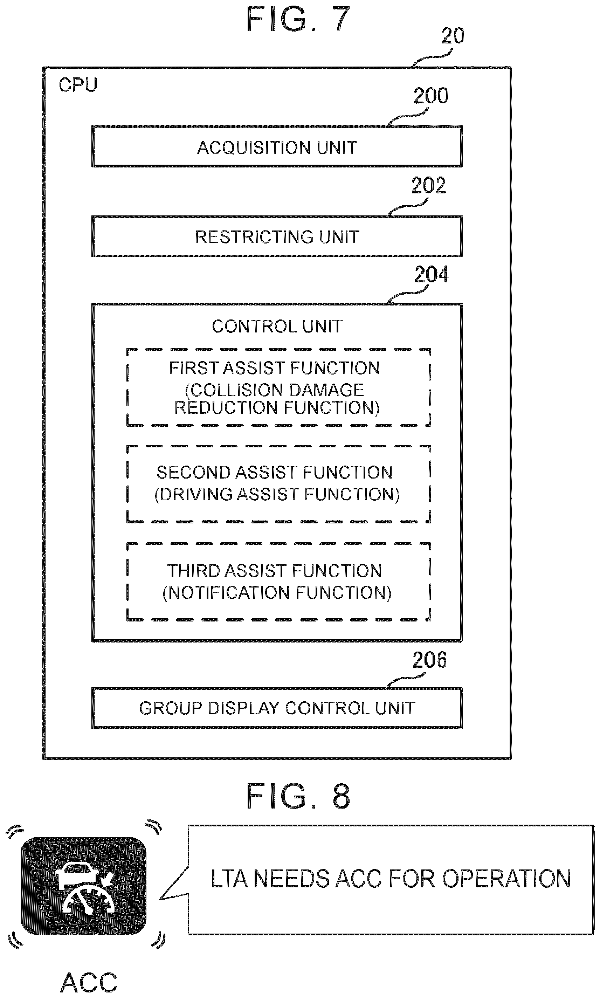

FIG. 7 is an example of the functional configuration of the driver assist apparatus 12. As shown in FIG. 7, the functional configuration of the driver assist apparatus 12 includes various units that work by the CPU 20 running the control program 30, and includes an acquisition unit 200, a restricting unit 202, a control unit 204, and a group display control unit 206. The restricting unit 202 executes condition restriction control for operation of a group. Driver assist functions that are controlled by the control unit 204 are classified into function groups (a first assist function, a second assist function, and a third assist function) for purposes of driver assist. The first assist function is a function group of driver assist functions related to collision avoidance assist. The second assist function is a function group of driver assist functions regarding driving assist. The third assist function is a function group of notification-related driver assist functions. A setting example of a function group set for a group will be illustrated in the second and subsequent embodiments in which modes of a group are described in details.

The acquisition unit 200 acquires operation of a user related to a group operated on the setting screen of the multimedia device 14. Examples of the operation of the user related to a group include operation to select a group, operation to add a driver assist function to a group or delete a driver assist function from a group, and operation to change set values of driver assist functions in a group. A group is designated by operation.

The restricting unit 202 determines whether a specific condition is likely to be satisfied in response to operation of the user related to a group and executes condition restriction control when the specific condition is likely to be satisfied. The specific condition is set for an underlying function and is also set for a conflicting function. Condition restriction control executes inhibition control and display control as measures for restricting satisfaction of the specific condition resulting from operation of the user, as will be described below. The restricting unit 202 in condition restriction control inhibits satisfaction of the specific condition and displays a character string or icon indicating the specific condition.

After the determination of the restricting unit 202, the control unit 204 provides instructions for settings to the driver assist functions included in the group designated by operation through operation of the user related to the group and reflects the settings of the group in the driver assist functions. As described above, instructions for settings can be collectively provided to the driver assist functions included in the group under control of the control unit 204.

The group display control unit 206 controls display such that, for the group set by the control unit 204, the set details are reflected in the view on the setting screen of the multimedia device 14. In display control, for example, main functions included in the group, settings of the functions, corresponding driving scenes, and the like are indicated by icons, images, descriptions, or the like. Display control according to the detail of a group will be described in the following embodiments.

The specific condition will be described. The specific condition for an underlying function is a state where one of driver assist functions is present in a group in a state where the other one of the driver assist functions, which underlies activation of the one of the driver assist functions, is not present in the group. The specific condition for a conflicting function is a state where both one of driver assist functions and the other one of the driver assist functions, which conflicts with the one of the driver assist functions, are present in a group. The "first driver assist function" and the "second driver assist function" according to the disclosure may be respectively regarded as "one of driver assist functions" and "the other one of the driver assist functions".

The specific condition for an underlying function includes the following case (1) and case (2). Case (1) is when the other one of driver assist functions is deleted from a group while both one of the driver assist functions and the other one of the driver assist functions are present in the group. Case (2) is when one of driver assist functions is added to a group while the other one of the driver assist functions is not present in the group.

Inhibition control in condition restriction control is control to delete one of driver assist functions from a group when the specific condition of case (1) is likely to be satisfied. Inhibition control in condition restriction control is control to add the other one of the driver assist functions to a group when the specific condition of case (2) is likely to be satisfied. Alternatively, deletion of the other one of the driver assist functions may be restricted in case (1), and addition of one of the driver assist functions may be restricted in case (2).

When the specific condition for an underlying function as described above is likely to be satisfied in response to operation of a user, the restricting unit 202 inhibits satisfaction of the specific condition for an underlying function and notifies the user through the view on the multimedia device 14 in condition restriction control. The restricting unit 202 displays a character string or icon indicating that activation of one of the driver assist functions needs the other one of the driver assist functions on the group setting screen of the multimedia device 14 as display control of condition restriction control. When, for example, LTA, ADTJA, or the like that needs ACC as an underlying function is attempted to be turned on while ACC serving as the underlying other one of driver assist functions is off, LTA, ADTJA, or the like does not activate because ACC is an underlying function. In this case, the restricting unit 202 displays the icon of ACC and descriptive text as a warning. Examples of the descriptive text include "LTA needs ACC for operation", "LTA operates when ACC is in operation", "LTA and ACC need to be disposed in the same group", and "Is it OK that LTA function does not activate without ACC function?". Select buttons to add or delete these functions may be displayed together to allow selection. An icon may be highlighted by blinking the icon, shaking the icon, temporarily changing the color of the icon, or the like. FIG. 8 is a view that shows an example of the mode of blinking and vibration of an icon. Thus, when the user attempts to dispose LTA in a group, the user can be informed that ACC is needed. As another example of an underlying function, a side view lamp does not work unless AHB is on, or the like. The names and details of these abbreviated driver assist functions will be described later in the "description of driver assist functions".

A case of the specific condition for a conflicting function is when the other one of driver assist functions is added to a group while one of the driver assist functions is present in the group. In this case, inhibition control in condition restriction control deletes the one of driver assist functions from the group when the specific condition for a conflicting function is likely to be satisfied. Alternatively, addition of the other one of the driver assist functions to the group may be restricted. When the specific condition for a conflicting function as described above is likely to be satisfied in response to operation of a user, the restricting unit 202 inhibits satisfaction of the specific condition for a conflicting function and notifies the user through the view on the multimedia device 14 in condition restriction control. The restricting unit 202 displays a character string or icon indicating that one of the driver assist functions and the other one of the driver assist functions cannot be present together on the group setting screen of the multimedia device 14 as display control of condition restriction control. When, for example, ACC in eco-run mode that is one of the driver assist functions is attempted to be turned on while ACC in normal mode that is the other one of the driver assist functions is on, the functions conflict with each other. In this case, the restricting unit 202 displays a warning icon and descriptive text indicating that the icon of eco-run mode is not allowed. Examples of the descriptive text include "Cannot be disposed in the same group", "Cannot be used together", and "Cannot activate at the same time".

The restricting unit 202 may put restrictions, such as disabling an operation command by displaying the operation command as grayed out, hiding the driver assist function, and disabling selection, as condition restriction control to restrict addition to or deletion from the group.

Determination criteria of the above-described specific condition for an underlying function and specific condition for a conflicting function are recorded in the specific condition data 31.

### Flow of Control

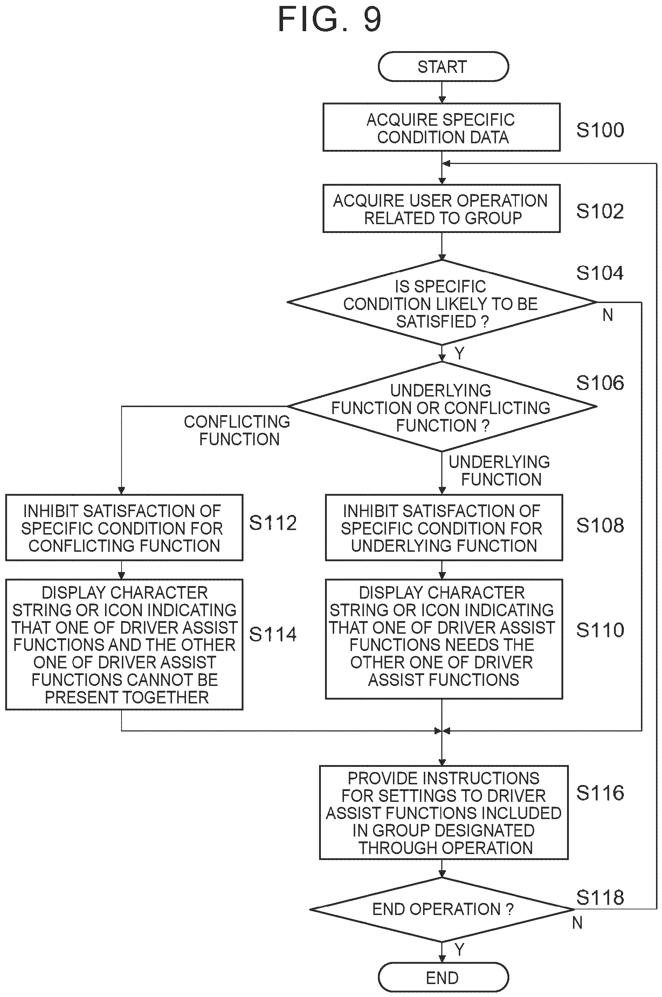

FIG. 9 is a flowchart that illustrates the flow of a driver assist process serving as a driver assist method executed in the driver assist apparatus 12 according to the present embodiment. The driver assist process is executed when, for example, a user launches the group setting screen and starts operation. The group setting screen may be launched when it is necessary to prompt confirmation of a group, such as when a driver, different from a previous driver, gets on the vehicle.

In step S100, the CPU 20 acquires the specific condition data 31 from the ROM 21.

In step S102, the CPU 20 acquires operation of the user related to a group.

In step S104, the CPU 20 determines whether the specific condition is likely to be satisfied in response to the operation of the user related to a group by using the specific condition data 31. When the specific condition is likely to be satisfied, the process proceeds to step S106; whereas, when the specific condition is not likely to be satisfied, the process proceeds to step S116.

In step S106, the CPU 20 determines whether the specific condition that is likely to be satisfied is the specific condition for an underlying function or the specific condition for a conflicting function. In the case of the specific condition for an underlying function, the process proceeds to step S108; whereas, in the case of the specific condition for a conflicting function, the process proceeds to step S112.

In step S108, the CPU 20 inhibits satisfaction of the specific condition for an underlying function as inhibition control of condition restriction control.

In step S110, the CPU 20 shows a character string or icon indicating that activation of one of the driver assist functions needs the other one of the driver assist functions on the group setting screen of the multimedia device 14 as display control of condition restriction control. Display of condition restriction control is to guide the user so that operation to satisfy the specific condition is suppressed and operation related to a group by the user can be acquired again.

In step S112, the CPU 20 inhibits satisfaction of the specific condition for a conflicting function as inhibition control of condition restriction control.

In step S114, the CPU 20 shows a character string or icon indicating that one of the driver assist functions and the other one of the driver assist functions cannot be present together on the group setting screen of the multimedia device 14 as display control of condition restriction control.

In step S116, the CPU 20 provides instructions for settings to driver assist functions included in the group designated by operation through the operation of the user related to a group and reflects the settings of the group in the driver assist functions.

In step S118, the CPU 20 determines whether operation to end setting of the group has been performed. When the end operation has been performed, the process ends; whereas, when the end operation has not been performed, the process returns to step S102 and repeats the process.

As described above, the driver assist system 1 according to the present embodiment is capable of suppressing confusion of a user resulting from non-activation of a driver assist function depending on a condition.

Other than the mode in the description of the above-described embodiment, condition restriction control may be configured to, for example, allow generation of a group in which the specific condition is satisfied and not provide instructions to collectively set the group or not allow the set function to be exercised. In this case, display control of condition restriction control may be configured to display a part of the view (the setting area (b1) in FIG. 3) of the group on the setting screen as grayed out so that a user is able to grasp the driver assist function of which the specific condition is satisfied, thus allowing the user to grasp that the driver assist function is not exercised. Alternatively, the user may be guided to perform operation such that settings of the group of which the specific condition is satisfied are cancelled.

Hereinafter, the description of driver assist functions and the description of groups will be described.

### Description of Driver Assist Functions

### (1) Radar Cruise Control (Adaptive Cruise Control/Dynamic Radar Cruise Control (ACC/DRCC))

Devices needed by the function include the front camera 130 and the front radar 133A. The function is a driver assist function that recognizes a preceding vehicle with the front camera 130 and the front radar 133A (a monocular camera and a millimeter-wave radar) and that assists in follow-up driving maintaining an inter-vehicle distance according to a vehicle speed. A scene to use is, for example, driving on an expressway. There are assist region expansion and eco-run mode (fuel saving ACC) as extended functions. Assist region expansion corresponds to deceleration assist with respect to a landmark by cooperation with map data. Examples of the landmark include a roundabout, a temporary stop spot, a yield, a toll gate, and a no-sign T-intersection. Deceleration before a curve can also be expected to improve its accuracy and performance by using map data. When ACC is launched in eco-run mode, ACC assists in fuel efficiency priority driving and contributes to CO2 reduction during driving. An anxiety about the death of battery assumed as inconvenience in a battery EV can be reduced.

### (2) Extended Resume Time

Devices needed by the function include the front camera 130, the front radar 133A, the driver monitor camera 110, and the multimedia device 14. The function is a driver assist function that automatically starts the host vehicle in coordination with the start of a preceding vehicle and executes follow-up control up to a set vehicle speed only when the system determines that the driver is monitoring ahead in a scene in which the vehicle repeats stop and start in traffic jam or the like. When the vehicle starts, a driver is informed through indication and buzzer. A period of time from a last vehicle stop to a next vehicle start, during which driver operation is not needed, is, for example, shorter than or equal to three seconds in existing ACC and shorter than or equal to three minutes in the case of extended start time with the function. During driving, the driver has a forward-looking duty. A scene to use is, for example, driving in traffic jam on an expressway.

### (3) Automatic High Beam (AHB)

Devices needed by the function include the front camera 130. The function is a driver assist function that ensures distant visibility by turning on high beam during normal times and, when an oncoming vehicle or the like comes, detects a vehicle light ahead and automatically switches the headlamp between high and low. A scene to use is, for example, nighttime driving.

### (4) Adaptive High-Beam System (AHS)

Devices needed by the function include the front camera 130 and an AHS-supported headlight 46. The function is a driver assist function that ensures distant visibility by turning on high beam during normal times, determines the brightness of the lamp of a forward vehicle, a street light, or the like, and controls the light distribution of the headlamp. Adoption of a high-definition LED type is also assumed. With the evolution of light source units, finer light distribution control can be implemented, with the result that function extension and performance improvement are possible. Further improvement in visibility and considerations to surroundings are also possible. A scene to use is, for example, nighttime driving, and high beam activation is possible at the start of an engine.

### (5) Proactive Driving Assist (PDA)

Devices needed by the function include the front camera 130 and the front radar 133A. The function is a driver assist function that assists a driver in driving even in a scene, such as an ordinary road, and that supports appropriate operation depending on a driving situation. The function includes assist functions provided by deceleration assist (DA) and steering assist (SA) that will be described below. Examples of the details of the included functions include [1] deceleration assist (DA) with respect to a preceding vehicle, [2] deceleration assist (DA) with respect to a curve, [3] right-left turn deceleration assist (DA) with respect to a signalized intersection, and [4] in-lane driving constant steering assist (SA). A scene to use is, for example, driving on an ordinary road or an expressway.

### (6) Deceleration Assist (DA)

Devices needed by the function include the front camera 130 and the front radar 133A. The function is a driver assist function that, when interruption of a preceding vehicle or an adjacent vehicle is detected, gently decelerates in response to the driver turning off the accelerator so that the inter-vehicle distance is not too close. When it is determined that the speed of the host vehicle is high with respect to a curve ahead, the host vehicle is gently decelerated in response to the driver turning off the accelerator. Deceleration based on RSA cooperation is also possible. In the related art, deceleration control targets are a vehicle, a curve, and an intersection, and deceleration assist is also performed on a sign recognized with RSA, such as a stop sign. It is possible to support deceleration assist during accelerator operation (one-pedal cooperation). In the related art, deceleration assist is performed only when the accelerator is completely off; however, a deceleration assist region is expanded by starting assist from the timing when the accelerator is eased up and the vehicle starts decelerating. Thus, it is possible to perform deceleration in good time with respect to a target to be decelerated (a preceding vehicle, a curve, an intersection, and a sign). A scene to use is, for example, driving on an ordinary road or an expressway.

### (7) Steering Assist (SA)

Devices needed by the function include the front camera 130 and the front radar 133A. The function is a driver assist function that anticipates operation of a driver and that supports the operation by a change in reaction from steering. While driving straight ahead, unnecessary operation is suppressed by applying reaction to steering of the driver to such an extent that ease of turn is not impaired. At the entrance of a curve, only the reaction in an operation direction is reduced for steering of the driver to facilitate driver operation. While cornering, reaction around a cornering steering angle is increased for steering of the driver to suppress excessive operation. At the exit of the curve, only the reaction in the operation direction is increased for steering of the driver to facilitate return operation. Only a change in reaction is used, but the steering wheel is not automatically turned. A scene to use is, for example, driving on an ordinary road or an expressway.

### (8) Emergency Driving Stop System (EDSS)

Devices needed by the function include the front camera 130, the front radar 133A, the driver monitor camera 110, the front side radar 133C and the rear side radar 133D for roadside retreat, the steering sensor 111, and the multimedia device 14. The multimedia device 14 determines whether to perform roadside retreat with the navigation function while driving on an expressway. The function is a function that determines whether the condition of a driver is normal or abnormal and, when it is determined to be abnormal, executes vehicle stop control in a lane while signaling to outside the vehicle. Expansion of an available scene of EDSS is also assumed. In the related art, the function supports only an expressway; however, the function is applicable also to an ordinary road. In the related art, EDSS is launched only when a driver abnormality is detected during LTA is active; however, EDSS is launched even when LTA is inactive. A scene to use is, for example, driving on an ordinary road or an expressway.

### (9) Front Cross Traffic Alert (FCTA)

Devices needed by the function include the front camera 130, the front radar 133A, and the front side radar 133C. With the function, when the host vehicle enters an intersection at low speed, the following two functions mainly activate. The first function is to inform a driver of an approach of an intersecting vehicle with HUD display. The second function is to, when the system determines that the driver is likely to start regardless of an approach of an intersecting vehicle, further give a warning with MID display and buzzer to prompt for deceleration. A scene to use is, for example, driving at an intersection.

### (10) Lane Change Assist (LCA)

Devices needed by the function include the front camera 130, the front radar 133A, the front side radar 133C, the rear side radar 133D, the steering sensor 111, and the multimedia device 14. Whether to use the multimedia device 14 depends on a country where the vehicle is used. With the function, lane change assist is started in response to turn signal operation by a driver. Steering assist and surroundings monitoring assist are performed during a lane change, and a turn signal automatically turns off after the lane change. A scene to use is, for example, driving on an expressway.

### (11) Lane Departure Alert (LDA)

Devices needed by the function include the front camera 130 and the front radar 133A. The function is a driver assist function that, when the system determines that the vehicle is likely to depart a lane, notifies a driver with display and buzzer or steering wheel vibration to prompt the driver to perform departure avoidance operation. Furthermore, lane departure suppression is assisted by adding steering force to the steering wheel and display. The function has addition of a function and extensibility of cooperation. For example, a function to recognize the ends of a three-dimensional object is added. Thus, it is possible to additionally recognize the ends of single structures and three-dimensional objects (utility poles, median strips, and wall ends) that easily lead to severe accidents. Switching of controllability according to a departure risk is possible. It is possible to ensure safety and improve inconvenience by determining the degree of risk from sensing targets (structures, such as guard rails and utility poles, white lines, and the ends of roads) and information from the driver monitor camera 110 and switching controlled variables, timing, and ease of cancellation according to the degree of risk. It is possible to change controlled variables and control timing for reducing inconvenience due to LDA. The control timing is delayed by improving the lateral jerk of LDA to reduce inconvenience. Addition of trailer LDA is also assumed. By adding LDA control that takes into consideration trailer characteristics, off performance (avoidance of sway) is given a higher priority in the related art, but on performance (allowable departure amount) is additionally covered. Addition of Reduced mode is assumed. Activation targets are narrowed according to a risk, reduced mode in which activation scenes are reduced is allowed to be selected, with the result that inconvenience is removed. It is assumed to cooperate with a function that predicts the activities of pedestrians and host vehicle and provides the prediction to applications. Thus, unnecessary activation and early activation are reduced by predicting a driver's intentional lane departure and cancelling or suppressing the activation of LDA. A scene to use is, for example, driving on an ordinary road or an expressway.

### (11B) Obstacle Anticipation Assist (OAA)

Devices needed by the function include the front camera 130 and the front radar 133A. The function is a driver assist function that senses a pedestrian on a roadside with the front camera 130 and the front radar 133A and performs steering operation and deceleration to avoid the pedestrian while driving on an ordinary road. The function contributes to defensive driving. Deceleration assist for a pedestrian waiting for crossing a road at the time of passage of a crosswalk, steering and deceleration assist for a pedestrian hidden behind a stopped vehicle group, steering and deceleration assist for a pedestrian hidden at a blind spot of a wall or the like, and the like are possible. A scene to use is, for example, driving on an ordinary road or an expressway.

### (12) Lane Tracing Assist (LTA)

Devices needed by the function include the front camera 130 and the front radar 133A. The system assists with part of necessary steering force so that the vehicle can drive at the center in the same lane during ACC control. A scene to use is, for example, driving on an expressway.

### (13) Over The Air (OTA)

Devices needed by the function include the self-driving ECU 60. The function is a function that updates software by wireless communication with a DCM. It is possible to deal with the market and update or add functions without driving to a dealer. In other words, it is possible to update or add functions without driving to a dealer. Examples of addition of functions include addition of an activation target or an activation scene. Expansion of an available range is assumed. In the related art, only the front camera 130 and part of the control program of advanced drive are targets; whereas sensors such as other cameras and millimeter-wave radars, and the programs of advanced park and the like are also targets for software updates. A scene to use is, for example, at the time of software updates.

### (14) Pre-Collision System (PCS)

Devices needed by the function include the front camera 130 and the front radar 133A. The function is a driver assist function that detects a vehicle, a pedestrian, a bicycle rider, and a motorcycle on a road with the front camera 130 and the front radar 133A (a monocular camera and a millimeter-wave radar). When the system determines that the possibility of collision is high, the system alarms with a buzzer and a display, or the like. By assisting brake depression force when the brake is depressed or automatically activating the brake when the brake is not depressed, the function assists in collision avoidance or contributes to reduction of collision damage. When the system determines that the possibility to collide with an oncoming vehicle at the front is high, the system activates an alert and the brake to assist in reducing damage. The function also has expandability of encounter accident supporting scenes. It is also possible to activate for an electric scooter and assist in collision avoidance for an animal or a single structure. A scene to use is, for example, driving on an ordinary road, an intersection, or an expressway.

### (15) Road Sign Assist (RSA)

Devices needed by the function include the front camera 130 and the multimedia device 14. The function shows road signs, that is, "Maximum speed", "No swerving to the right", and "Stop", on the display of the multimedia device 14. When the system determines that the vehicle is not in accordance with road signs or signals of "Maximum speed", "No entry", and "Red signal", the system provides notification with blinking of display and buzzer. Through these display and notification, oversight of a road sign or the like is reduced to promote safe driving. The types of supporting road signs and signals depend on countries and regions, so the types of supporting road signs and traffic signals are localized. A function that recognizes a sign for preventing wrong-way driving and informs a driver if driving on the wrong way is detected is also assumed as wrong-way driving prevention assist. A scene to use is, for example, driving on an ordinary road or an expressway.

### (16) Traffic Movement Notification (TMN)

Devices needed by the function include the front camera 130 and the front radar 133A. The function informs the driver that the traffic signal is turned if the host vehicle remains stopped even when stop indication of the traffic signal is cancelled. If the host vehicle remains stopped after a preceding vehicle starts, the driver is informed that the preceding vehicle has started. A scene to use is, for example, driving on an ordinary road.

### (17) Speed Limiter (ISA)

Devices needed by the function include the front camera 130. The function is a function that suppresses acceleration to a vehicle speed set by the driver, or higher. A limit vehicle speed may be set based on a speed limit sign recognized by RSA.

### (18) Advanced Drive with Traffic Jam Assist (ADTJA)

Devices needed by the function include the front camera 130, the front radar 133A, the driver monitor camera 110, the front side radar 133C, the rear side radar 133D, and a navigation map of the multimedia device 14. During a traffic jam, the function controls an inter-vehicle distance and steering operation, and continues ACC and LTA control. After the vehicle is stopped as well, the host vehicle is started again without driver's operation. It is necessary that the driver is in charge of surroundings monitoring, the system determines that a safety margin is high as an underlying condition for system activation, and the driver is in a forward looking state. A scene to use is, for example, driving on an expressway.

### (19) Rear Cross Traffic Alert (RCTA)

Devices needed by the function include the two BSM radars 133E, the meter buzzer 45, the outer mirror 43 with the BSM indicator, the rear camera 131, and the multimedia device 14. The function is a driver assist function that recognizes a vehicle approaching from behind on both sides with the BSM radars 133E when backing up out of a parking space and informs the driver of the presence of the vehicle with blinking of an indicator of a door mirror and buzzer alert. Expansion of activation targets is also assumed (supporting sensing of a motorcycle and a bicycle). A scene to use is, for example, backing up into a parking space.

### (20) Rear Camera Detection (RCD)

Devices needed by the function include the digital rear camera 131 and the multimedia device 14. The function is a driver assist function that detects the approach of a pedestrian on the rear side with the rear camera 131 when backing up out of a parking space, calls attention to the driver with video display and sound, and supports confirmation of safety of the pedestrian. Expansion of activation targets is also assumed (supporting sensing of a crouching pedestrian, a lying person, a scooter, and a person riding on a toy vehicle). A scene to use is, for example, backing up into a parking space or backing up out of a parking space.

### (21) Back Monitor (BM)

Devices needed by the function include the rear camera 131 and the multimedia device 14. The function is a driver assist function that assists in back up parking by displaying a video behind the vehicle, recorded by the rear camera 131, and fixed lines indicating the vehicle width on the monitor of the multimedia device 14 while backing up. A scene to use is, for example, backing up into a parking space.

### (22) Back Guide Monitor (BGM)

Devices needed by the function include the rear camera 131 and the multimedia device 14. The function is a driver assist function that assists in back up parking by displaying a video behind the vehicle, recorded by the rear camera 131, and guide lines interlocking with steering operation while backing up. A scene to use is, for example, backing up into a parking space.

### (23) Panoramic View Monitor (PVM)

Devices needed by the function include the front camera 130, the right and left side cameras 132, the rear camera 131, the eight sonars 134, the multimedia device 14, and the IR projector 47. The function assists a driving scene with many blind spots by displaying a bird's eye view on the monitor based on videos recorded with the front, rear, right, and left four cameras. In addition, the function assists a further wide range of driving scenes as compared to S-PVM by using three-dimensional video expression (indoor and outdoor views, passing-through image, and enveloping image). The function can be designed with an interface design that allows free viewpoint operation, like a smart device. Thus, it is possible to assist in checking surroundings, not reached by the related system. A scene to use is, for example, backing up into a parking space, backing up out of a parking space, moving at low speed, or the like.

### (24) Side Monitor (SIM)

Devices needed by the function include the one-side side camera 132, the rear camera 131, the eight sonars 134, and the multimedia device 14. The function assists in driving at low vehicle speed by displaying videos of the side camera 132 and the rear camera 131 installed in the vehicle. A scene to use is, for example, backing up into a parking space, backing up out of a parking space, moving at low speed, or the like.

### (25) Multi Terrain Monitor (MTM)

Devices needed by the function include the front camera 130, the right and left side cameras 132, the rear camera 131, the eight sonars 134, and the multimedia device 14. For an off-road environment in which exiting outside the vehicle cabin may lead to a danger, the function performs blind spot recognition assist by using videos from the four cameras mounted at the front, rear, right, and left of the vehicle. The function contributes to improvement in covering off-road ground. A scene to use is, for example, driving on a glade road, a mogul road, a rocky road, or the like.

### (26) Parking Support Brake (Object) (PKSB(O))

Devices needed by the function include the eight sonars 134. The function detects a stationary object, such as a wall in the host vehicle traveling direction, with the ultrasonic sonars. The system detects excessive depression of the accelerator, delay of depression of the brake, or the like, in the detected state, and assists in collision damage reduction by notice with an alert, suppression of the driving force of the vehicle, automatic brake, and the like. A scene to use is, for example, parking, moving out of a parking space, moving at low speed, or the like.

### (27) Parking Support Brake (Object + Vehicle) (PKSB (O + V))

Devices needed by the function include the BSM sensors 133E (two at the rear right and left sides of the vehicle), the rear camera 131, and the like. The function is used together with the functions of (21), (22), and (24). The function detects a vehicle approaching in the right and left direction behind the host vehicle with the BSM sensors 133E when the host vehicle is backing up and assists in collision damage reduction with suppression of the driving force of the vehicle, automatic brake, and the like when the possibility to collide with the vehicle is high. RCTA is included in this system. A scene to use is, for example, backing up out of a parking space.

### (28) Parking Support Brake (Object + Vehicle + Pedestrian) (PKSB (O + V + P))

RCD of (21) is included in this system. The devices of RCD are used. The function detects a pedestrian behind the host vehicle with the rear camera 131 when the host vehicle is backing up and, when the possibility to collide with the pedestrian is high, assists in collision damage reduction with suppression of the driving force of the vehicle, automatic brake, and the like. A scene to use is, for example, backing up out of a parking space.

### (29) Parking Support Brake (Surrounding Stationary Object) (All-Around PKSB)

Devices needed by the function include a predetermined ECU (not shown) and the sonars 134 (12 (eight for front and rear and four for right and left)) 60. The ECU is, for example, a CSRECU (with AP) or a PVMECU (front, rear, right, and left cameras). When there are concerns of collision with a stationary object, such as a wall, when parking, the all-around PKSB activates once the sensors detect a surrounding stationary object. The function mitigates a collision and contributes to collision damage reduction. The system activates by detecting a stationary object to the side of the host vehicle in the event of a collision due to an inner wheel difference during driving forward or an outer wheel difference during backing up. There is a moving object alert using the PVM cameras (front, rear, right, and left) as an additional function, and, when a moving object, such as a pedestrian, a motorcycle, and a vehicle, approaches the host vehicle, an alert is issued for notification. The function is set together with a function related to automatic parking. A scene to use is, for example, a parking scene.

### (30) Sudden Acceleration Suppression (SAS)

Devices and functions needed by the function include the function of (28) and a smart key. A sudden acceleration suppression function activates when an engine or a hybrid system is started after the vehicle is unlocked with a smart key for support (plus support mode). Regardless of the presence or absence of an obstacle, the function suppresses acceleration of the vehicle when excessive depression or wrong depression of the accelerator is detected and calls attention to the driver with alert buzzer and display indication. The function is assumed to work as a standard function by limiting to times when backing up regardless of the presence or absence of a predetermined smart key. It is also assumed to suppress acceleration at the time of full-throttle of the accelerator by detecting a parking area. A scene to use is, for example, normal driving.

### (31) Advanced Park (AP)

Devices needed by the function include the devices used in (28), the function of PVM (23), and the side sonars (four). A parking position is detected by the ultrasonic sonars and the front, rear, right, and left cameras. AP is a function that automatically performs parking when the driver points out a parking position shown on the multimedia device 14. AP also assists in moving out of a parking space from a parked state. In automatic operation, the accelerator, the brake, steering, and shift are operated. The function may have a path memory function. The path memory function performs assist suited for various environments by parking along the memorized path. Safe assist is performed by tracking the same path as the driver. A registered path is retrieved or detected, and the system suggests the driver use the path to aim to improve an initial usage rate and a persistence rate. A scene to use is, for example, parking or moving out of a parking space.

### (32) Remote Control Parking (RCP)

Devices and functions needed by the function include the devices used in (28), the side sonars (four), the function of PVM (23), and smart antennas (six). By operating advanced park of (28) outside the vehicle with a smartphone, the function automatically performs parking and assists in moving out of a parking space from a parked state. A scene to use is, for example, parking or moving out of a parking space.

### (33) Blind Spot Monitor (BSM)/BSM (Long)

Devices needed by the function include the BSM sensors 133E (two) and the outer mirror 43 with the BSM indicator. The function recognizes a vehicle present in a rear side area with the BSM sensors 133E and assists in confirmation of safety of surroundings at the time of a lane change by turning on or blinking the door mirror indicator. The level of BSM (Long) is allowed to be set. The function of entangling alert is also assumed. The function detects a bicycle, a minibike, or the like riding alongside the host vehicle and issues entangling alert at the time of right or left turn. A scene to use is, for example, a lane change.

### (34) Safe Exit Assist (SEA)

Devices needed by the function include the BSM sensors 133E (two), the outer mirror 43 with the BSM indicator, and the multimedia device 14 (display). A vehicle or a bicycle approaching from behind is recognized by the BSM sensors 133E. The function assists in collision avoidance or damage reduction when the door is opened or when an occupant gets off the vehicle, by blinking of the door mirror indicator, buzzer alert, or the like. In the case of a power slide door, when an occupant attempts to open the door, the power slide door is stopped in the middle or operation to open the power slide door is cancelled. An occupant is notified with buzzer, blinking of the indicator in the door mirror, indication on the meter display, or sound notification. In the case of e-latch, when an occupant attempts to open the door, operation to open the door is cancelled. An occupant is notified with buzzer, blinking of the indicator in the door mirror, indication on the meter display, or sound notification. A scene to use is, for example, getting off the vehicle.

### (35) Flashing Hazard Lights (FHL)

Devices needed by the function include the BSM sensors 133E (two), and the multimedia device 14 (display). The function blinks a hazard lamp at high speed to call attention to a subsequent vehicle that is highly likely to bump into the rear. The function detects a subsequent vehicle driving in the same lane as the host vehicle with a rear side millimeter-wave radar of the blind spot monitor and determines whether the subsequent vehicle is likely to bump into the rear based on a distance, relative velocity, direction, and the like, to the subsequent vehicle. When the possibility of bumping into the rear is high, hazard lamp is blinked at high speed for about two seconds to call attention to the subsequent vehicle. A scene to use is, for example, while stopped or driving.

### (36) Secondary Collision Brake (Rear Impacts while Stopped) (SCB (RIS))

Devices needed by the function include the BSM sensors 133E (two), the brake sensor 112, and the multimedia device 14 (display). While the host vehicle is stopped, a rear vehicle is detected with the rear side millimeter-wave radar of the blind spot monitor. When the system determines that the vehicle is highly likely to bump into the rear, the system activates the brake of the host vehicle to decelerate the speed of the host vehicle when the rear vehicle bumps into the rear thereafter. In contrast to secondary collision brake that activates the brake after frontal collision or side collision while the host vehicle is driving, rear collision during a stop is handled by using the rear side millimeter-wave radar to newly handle rear collision, and the brake is activated before collision. Earlier deceleration is possible. A scene to use is, for example, while stopped.

### (37) Rear Vehicle Approaching Indication (RVAI)

Devices needed by the function include the BSM sensors 133E (two), the multimedia device 14 (display), opt.HUD (meter display), and the electronic inner mirror 44. The function detects a vehicle behind the host vehicle with the rear side millimeter-wave radar of the blind spot monitor. When the rear vehicle is approaching, the function provides notification with the meter display, color head-up display, and buzzer. The function guides sightlines to the inner mirror and assists in determination as to whether to avoid the rear vehicle. It is also possible to provide notification with the electronic inner mirror 44. A scene to use is, for example, driving on an expressway.

### (38) Approaching Vehicle Support (AVS) (Recording Function, Report Notification Function)

Devices and system needed by the function include the BSM sensors 133E (two), the multimedia device 14 (display), opt.helpnet (registered trademark), and a drive recorder (not shown, front and rear). When a rear vehicle is extremely near the vehicle, the system suggests the driver connect to the police or helpnet (registered trademark) and conveys a coping method. When the drive recorder (front and rear) is installed, not only constant recording but also "event recording and notice" is performed. Unnecessary overwriting is inhibited by automatically recording a situation and saving the situation in an exclusive recording area. Approval with voice recognition is also assumed. A scene to use is, for example, driving on an expressway.

### (39) Advanced Drive (AD)

Devices needed by the function include the front camera 130, the front radar 133A, the front and rear side radars (133C, 133D), the driver monitor camera 110, the steering sensor 111, the PVM camera (the rear camera 131 and the side camera 132), redundant devices (not shown), and the multimedia device 14. The multimedia device 14 is made up of high-definition map data and a car navigation system. The redundant devices include a redundant power supply, a redundant EPS, a redundant brake, a redundant YrG sensor, and a redundant buzzer. AD is an advanced driver assist function that executes steering and acceleration deceleration control under the supervision of the driver on an automobile road (hands-off at autonomous driving Lv2 is possible). Reduction of driver load when driving for a long time or a long distance can be expected. The function assists in overtaking and a lane change toward a destination through car navigation cooperation by identifying the host vehicle position at a lane level using a high-definition map. A scene to use is, for example, driving on an automobile road. An ordinary highway is also assumed in some of foreign countries, such as North America.

### (40) Autonomous Emergency Steering (AES) (Active Steering Function)

Devices needed by the function include the front camera 130, the front radar 133A, and an EPS (not shown). The EPS may be, for example, associated with the steering sensor 111 and the steering angle sensor 122. The system performs steering while applying a light brake and assists in avoiding a collision in a lane. The function activates when the system determines that the vehicle is highly likely to collide with an activation target object and there is sufficient space for avoidance in the driving lane. For safety measures, the function is controlled not to activate when an obstacle, such as an oncoming vehicle, a preceding vehicle, and a subsequent vehicle, is detected around an adjacent lane. The function is controlled not to activate for a target moving at a lateral velocity higher than or equal to a certain value, such as a crossing pedestrian. A scene to use is, for example, driving (at, for example, a speed at which brake avoidance is difficult) on an ordinary road.

### (41) Driver Monitor System (DMS)

Devices needed by the function include the driver monitor camera 110. The function detects the position and orientation of the face of the driver and the open-closed state of the eyes of the driver with the driver monitor camera 110, and the system determines whether it is in a state where the driver is able to check a surrounding situation and perform driving operation. The function provides notification with a buzzer sound when needed.

### (42) Trailer Driving Assist (T-ADAS)

Devices needed by the function include the front camera 130, the BSM sensors 133E (two), and the like. The function is a generic name for various functions concerned with trailer driving assist. The various functions include T-DRCC, T-PCS, T-LDA, T-BSM, TBG, and T-PVM. T-DRCC is a function that, even when a vehicle weight changes during towing, adjusts acceleration and deceleration during usage of ACC to optimal ones during towing. T-PCS is a function that, even when a vehicle weight changes during towing, adjusts the timings of alert and brake control to optimal ones during towing. T-LDA is a function that detects the possibility of lane or road departure even during towing and suppresses departure by operating steering. T-BSM is a function that expands a detection area during trailer towing so that an area up to around a bumper rear end of a towing vehicle can be detected to reduce collision risk at the time of a lane change. TBG is a function that achieves backup assist during trailer towing with steering assist. T-PVM is a PVM function specialized to during trailer towing or truck.

### (43) Sway Warning System (SWS)

Devices needed by the function include the steering sensor 111 and the steering angle sensor 122. The driver monitor camera 110 or the multimedia device 14 may be used. The function is a driver assist function that estimates careless driving (for example, sudden steering) or drowsy driving (for example, long-period sway) based on a yaw rate, a steering angle velocity, and the like, and suggests the driver to take a rest when it is determined to be appropriate. A suggestion to take a rest is made with buzzer and display.

### (44) Clearance Sonar (CSR)

Devices needed by the function include the sonars 134. The multimedia device 14 may be used. The function detects a stationary object and intermittently changes a whistle interval of buzzer according to a distance from the stationary object to assist with a positional relationship with an obstacle and a distance from the obstacle so as to be visually, aurally understandable. The position of the stationary object is displayed in detail.

### Description of Groups

### (C1) Safe Setting

With the setting of this group, collision damage is reduced. This group aims to turn on the systems concerned with collision damage reduction, advance the timings of activation (activation timing(s)), and maximize the efficiencies of activation targets and operations of notification functions. Indispensable driver assist functions are PCS, LDA, and PKSB. The clearance sonar is used as a device needed for detection.

### (C2) Driving Assist Function ON

With the settings of this group, to assist with comfortable driving operation by reducing daily driver load, the systems concerned with driving assist are collectively turned on. Driver assist functions that indispensably need to be changed are LTA and PDA.

### (C3) Driving Assist Function ON at High Assist Level

With the settings of this group, in addition to (C2), the amounts of assist from the systems are maximized to set a high degree of intervention of the systems. Driver assist functions that indispensably need to be changed are ACC and PDA in addition to the functions of (C2). In ACC, the value of acceleration and the value of the amount of assist of PDA are set to be high.

### (C4) Parking Assist Function ON

With the settings of this group, to reduce driver load in a parking scene, the systems concerned with parking assist are collectively turned on. A driver assist function that indispensably needs to be changed is PKSB. The clearance sonar is used as a device needed for detection.

### (C5) Parking Assist Function ON at High Alert Sound

With the settings of this group, in addition to (C4), the sound level at the time of an alert is maximized so that an alert target is easily found.

### (C6) "Notice Assist" (Notice Assist-Related Function ON)

With the settings of this group, to reduce oversight of ambient environments, such as a vehicle, a sign, and a traffic signal, the systems concerned with recognition information notification assist are collectively turned on. Driver assist functions that indispensably need to be changed are RSA and TMN. In TMN, preceding vehicle start notification and signal change notification are turned on.

### (C7) Notice Assist ON at Early Notification (Notice Assist-Related Function ON and Early Notification)

With the settings of this group, in addition to (C6), the notification timings are set to earlier timings so that a recognition target is easily found. With this settings, the timing of TMN and the notification timings are set to be earlier.

### (C8) Early Assist Timing

With the settings of this group, to early perform assist and notification for various risks, assist timings of the associated functions are made earlier. Driver assist functions that indispensably need to be changed are LDA and PCS. In LDA, the assist timing is set to "early". In PCS, the alert timing is set to "early".

### (C9) Eco-Driving Mode

With the settings of this group, to achieve driving that takes environments into consideration, the amounts of assist of the systems concerned with acceleration, deceleration, and steering are set to be mild. A driver assist function that indispensably needs to be changed is ACC. In ACC, the acceleration is set to low, and the value of eco-driving assist is set to high.

### (C10) System Activation Suggestion OFF

With the settings of this group, to eliminate inconvenience related to activation suggestions from the systems, activation suggestions of the associated functions are turned off. Driver assist functions that indispensably need to be changed are approaching vehicle support and sway warning system.

### Second Embodiment

Next, a second embodiment will be described. The second embodiment is a mode related to driver assist of safe setting among the groups.

Regarding the settings of safe driver assist, grouping of the driving assist function, the visibility assist function, and the traffic jam assist function has been described. However, grouping from other viewpoints has not been described. There is room for improvement from the viewpoint of improving the convenience of a user.

The second embodiment includes a collision damage reduction function group as a group to which the control unit 204 is capable of providing instructions, that is, a plurality of driver assist functions included in the safe setting. When, for example, the safe setting group is selected in operation to the above-described group setting screen of FIG. 2 and settings are reflected, the control unit 204 collectively provides instructions for settings to the individual functions included in the collision damage reduction function group assigned to the safe setting group. The settings of the individual functions in the safe setting are assigned in advance (setting information (described later)). The driver assist functions included in the safe setting group include at least pre-crash safety (PCS) and lane departure alert (LDA) as the collision damage reduction function group for driver assist. PCS is a function concerned with collision avoidance assist, and LDA is a function concerned with lane departure suppression assist. The safe setting of the second embodiment is configured to be capable of collectively providing instructions to the collision damage reduction function group for mitigating a collision in driving, so a user can get a sense of safety, and the convenience is improved.

The collision damage reduction function group may include front cross traffic alert (FCTA) that is a function concerned with assist when driving at an intersection.. The collision damage reduction function group may include clearance sonar (CSR) that is a function concerned with an alert in the case of approaching an obstacle and parking support brake (PKSB) that is a function concerned with detection of a surrounding stationary object when parking. Clearance sonar is a function of the sonars 134.

Of the driver assist functions included in the safe setting group, PCS and LDA are fixed in default setting and a mode in which these functions cannot be deleted is also assumed; however, the configuration is not necessarily limited thereto. These functions may be customizable and may be deleted by operation of a user.

### Mode of Instructions to Group

Here, a mode of instructions to a group will be described. Similar modes of instructions are adopted for groups according to the following embodiments.

Instructions to the driver assist functions included in a group include instructions to change the activation timings of the driver assist functions included in the group.

Instructions to the driver assist functions included in the group include instructions to collectively change the activation timings of two or more of the driver assist functions included in the group.

Instructions to the driver assist functions included in the group include instructions to change alarm sounds (sound levels) to a user of the driver assist functions included in the group. Instructions to the driver assist functions included in the group include instructions to collectively change alarm sounds (sound levels) to a user of two or more of the driver assist functions included in the group.

Instructions to the driver assist functions included in the group include instructions to change the operating intensities of the driver assist functions included in the group.

Instructions to the driver assist functions included in the group include instructions to collectively change the operating intensities of two or more of the driver assist functions included in the group.

Next, an example of setting information of the driver assist functions in the safe setting will be described. FIGS. 10A-1, 10A-2, 10B-1, and 10B-2 are tables that show an example of settings assigned to the driver assist functions included in the safe setting group corresponding to the second embodiment. The settings of FIGS. 10A-1, 10A-2, 10B-1, and 10B-2 are examples of settings of the individual driver assist functions assigned as the safe setting. Settings are roughly classified by assist purposes into the above-described collision damage reduction function (first assist function), driving assist function (second assist function), and notification function (third assist function). In assignment of settings, settings of detailed functions of each of the driver assist functions are assigned. For the collision damage reduction function, settings of LDA, EDSS, PCS, FCTA, BSM, SEA, CSR, RCTA, PKSB, and SAS are assigned. For the driving assist function, settings of ACC are assigned. For the notification function, settings of AVS, FHL, DMC, and SWS are assigned. Control outlines are the control outlines of driver assist functions. Detailed functions are specific functions for implementing control outlines. The illustrated detailed functions are some of the detailed functions used for each function. There are also detailed functions not set, but those are omitted for the sake of convenience of description. Instructions for these settings are, for example, collectively provided and reflected in the driver assist functions when the above-described collective setting button (a3) in FIG. 2 is depressed.

For each of the detailed functions, ON/OFF, activation timing, change of alarm sound, change of operating intensity, or the like is illustrated as default setting of the detailed function according to a control mode of each detailed function. An instruction to set the setting of switching alert timing to "early" is an example of the instruction to change an activation timing. An instruction to set switching of alarm sound level to "maximum" is an example of the instruction to change an alarm sound. Instructions to set switching of inter-vehicle distance to "longest" and switching of alert sensitivity to "high" are examples of the instruction to change an operating intensity. Instructions to set these settings for detailed functions in a plurality of functions included in a group correspond to instructions to collectively change activation timings or operating intensities.

The above-described setting information is assumed to be stored in the ROM 21 as setting information assigned in advance by group.

When the safe setting group is selected on the setting screen, the group display control unit 206 shows the descriptions and setting information of the functions of the safe setting. For example, FIG. 2 and FIG. 5 illustrate views of safe setting. FIG. 10C illustrates a setting screen with which settings of individual detailed functions are allowed to be changed. As shown in FIG. 10C, in a setting change area (s1), default settings for the detailed functions of the driver assist function are displayed, and candidates allowed to be changed by selection are shown. In the example, a change of settings of the detailed functions of PCS is illustrated. The view of the driver assist function is allowed to be switched with right and left switch buttons (s2). A driver assist function may be configured to be switched from a list view. A user is able to reflect a change in the setting information by selecting a setting from among available candidates. Thus, in an example in which the setting information is allowed to be changed to settings customized from default settings, when there is an underlying function or conflicting function for a target to change the setting, operation or reflection of setting is suppressed by the above-described condition restriction control according to the first embodiment.

A reflect button (s3) that reflects similar settings in settings of similar detailed functions of another function at the time of setting change may be provided. When the reflect button (s3) is depressed, a confirmation screen like, for example, "The alert timings of the other functions are also set to "early"?". When the reflection is approved with the confirmation button, the settings of the other alarm sounds are also changed to similar settings. Thus, when each of the two or more of the driver assist functions includes a change of the alarm sound, the change of the alarm sound can be reflected in the setting(s) of the alarm sound(s) in the other driver assist function(s) different from the set driver assist function. Instructions to change alarm sounds are instructions to collectively change the alarm sounds. The activation timing and the operating intensity can also be similarly reflected. In this way, when each of the two or more of the driver assist functions includes a change of the activation timing, the change of the activation timing can be reflected in the setting(s) of the activation timing(s) of the other driver assist function(s) different from the set driver assist function. Instructions to change activation timings are instructions to collectively change the activation timings. When each of the two or more of the driver assist functions includes a change of the operating intensity, the change of the operating intensity can be reflected in the setting(s) of operating intensity(s) in the other driver assist function(s) different from the set driver assist function. Instructions to change operating intensities are instructions to collectively change the operating intensities. Thus, it is possible to easily perform setting change for similar detailed functions.

### Flow of Control

Next, the flow of control of the second embodiment will be described. FIG. 10D is a flowchart that illustrates the flow of a driver assist process serving as a driver assist method according to the second embodiment. The driver assist process of the second embodiment is, for example, executed when the above-described (C3) safe setting group is selected on the screen. The above-described control related to the specific condition according to the first embodiment is executed as needed, for example, at the timing of receiving operation.

In step S200, the CPU 20 acquires operation to the group setting screen.

In step S202, the CPU 20 determines whether the operation is to select the safe setting group. When the operation is to select the safe setting group, the process proceeds to step S204. When the operation is not to select the safe setting group, the process returns to step S200 and repeats the process.

In step S204, the CPU 20 acquires the setting information of the safe setting from the ROM 21.

In step S206, the CPU 20 shows the descriptions and setting information of the functions of the safe setting on the setting screen.

In step S208, the CPU 20 acquires operation related to the safe setting. The operation related to the safe setting here is setting reflection operation or customize operation. The setting reflection operation is to, for example, depress the collective setting button in a state where the safe setting is selected. The customize operation is to, for example, change, add, and delete individual settings of the above-described driver assist functions in FIG. 3.

In step S210, the CPU 20 determines whether the operation related to the safe setting is setting reflection operation or customize operation. In the case of the setting reflection operation, the process proceeds to step S214. In the case of the customize operation, the process proceeds to step S212.

In step S212, the CPU 20 reflects the details set through the customize operation in the setting information of the safe setting.

In step S214, the CPU 20 provides instructions for setting to the driver assist functions with the set setting information of the safe setting and reflects the settings in the driver assist functions.

According to the second embodiment, it is possible to improve the convenience in a case of setting functions for mitigating a collision as safe driver assist.

### Third Embodiment

Next, a third embodiment will be described. The third embodiment is a mode related to parking assist of the safe setting among the groups.

The third embodiment is a mode that particularly features to set functions concerned with parking assist among the functions included in the safe setting group to which the control unit 204 is capable of providing instructions. The driver assist functions included in the safe setting group according to the third embodiment include at least clearance sonar (CSR) and parking support brake (PKSB) as a driver assist function group for parking assist. CSR is a function concerned with alert in a case of approaching an obstacle. PKSB is a function concerned with detection of a surrounding stationary object when parking. The driver assist function group in the present embodiment is a driver assist function group that reduces traffic accidents in low to middle speed ranges. The safe setting of the third embodiment is configured to be capable of collectively providing instructions to the driver assist function group for mitigating a collision in parking in a parking area or the like. Therefore, a driver can get a sense of safety in a parking scene, and the convenience is improved. Settings can be presented in a way that a user easily understands.

The driver assist function group includes advanced park (AP) that is a function concerned with automatic parking assist and assists in automatic parking and remote parking. The driver assist function group further includes sudden acceleration suppression (SAS) that is a function concerned with control to suppress sudden acceleration due to pedal error, suppresses sudden acceleration due to pedal error, and assists in control at the start of driving. The driver assist function group further includes rear cross traffic alert (RCTA) that is a function concerned with approaching vehicle alert. The driver assist function group further includes safe exit assist (SEA) concerned with a function that assists in ensuring safety when getting off, and gives a warning when opening or closing the door or when getting off. The driver assist function group further includes front cross traffic alert (FCTA) that is a function concerned with assist when driving at an intersection. The driver assist function group further includes pre-crash safety (PCS) that is a function concerned with collision avoidance assist and lane departure alert (LDA) that is a function concerned with lane departure suppression assist.

FIG. 11A is an example of a setting screen with which settings concerned with parking assist are allowed to be selected. As shown in FIG. 11A, in the setting screen (2A) on which the safe setting is selected, a parking assist setting button (s21) for showing and setting the settings related to parking assist is displayed. When the parking assist setting button (s21) is depressed, a parking assist function list screen is displayed.

FIG. 11B is an example of the parking assist function list screen. On the parking assist function list screen (s22), the functions related to parking assist are shown as function buttons (s23) in list form. The function list screen contains similar switch buttons (s24) to those of FIG. 3 function by function and allows to switch between an on state and an off state. It is possible to collectively set the on-off states of the functions through operation of the switch buttons (s24). When the button (s23) for any one of the functions is depressed, a detailed setting screen for parking assist of that function is displayed. In the mode of the safe setting of the second embodiment as well, a safe setting function list screen may be similarly displayed to allow setting changes.

FIG. 11C is an example of a setting screen with which settings of detailed functions related to parking assist are allowed to be changed. As shown in FIG. 11C, in the setting change area (s1), default settings for the detailed functions of the driver assist function are shown, and candidates allowed to be changed by selection are shown. An interface for changing the settings of the setting change area (s1) is similar to that of the second embodiment, and includes a button (s25) for returning to the parking assist function list screen (s22). The example illustrates a setting change of the detailed function PKSB concerned with parking assist. A view of the driver assist function concerned with parking assist can be switched with the right and left switch buttons (s2). A driver assist function may be configured to be switched from a list view. A driver is able to reflect a change in the setting information by selecting a setting from among available candidates. Thus, the setting information is allowed to be changed to settings customized from default settings. When there is an underlying function or conflicting function for a target to change the setting, operation or setting reflection is suppressed by the above-described condition restriction control according to the first embodiment. As described above, when the safe setting is selected on the setting screen, driver assist functions concerned with parking assist, included in the driver assist function group, are allowed to be shown in list form, and detailed functions of the driver assist functions concerned with parking assist are allowed to be changed.

The third embodiment is similar to the second embodiment. Changes of detailed functions of activation timing, alarm sound, and operating intensity are allowed to be reflected in settings of the detailed functions of another driver assist function different from the set driver assist function. Instructions to change the detailed functions are instructions to collective change the detailed functions.

### Flow of Control

Next, the flow of control of the third embodiment will be described. FIG. 11D is a flowchart that illustrates the flow of a driver assist process serving as a driver assist method according to the third embodiment. The driver assist process of the third embodiment is executed as a derivative from the flowchart of the second embodiment. In the process of the third embodiment, initially, operation related to the safe setting is acquired in step S208, and then step S300 is executed. The above-described control related to the specific condition according to the first embodiment is executed as needed, for example, at the timing of receiving operation.

In step S300, the CPU 20 determines whether setting operation concerned with parking assist is received in the acquired operation related to the safe setting. The setting operation concerned with parking assist is to depress the parking assist setting button (s21). When the setting operation concerned with parking assist is received, the process proceeds to step S302. When the setting operation concerned with parking assist is not received, the process proceeds to step S210.

In step S302, the CPU 20 displays the parking assist function list screen (s22). The user operates the parking assist function list screen (s22) and the setting change areas (s1) of the detailed functions to perform customize operation to change settings concerned with the parking assist function.

In step S304, the CPU 20 acquires customize operation concerned with parking assist.

In step S306, the CPU 20 reflects the details set through the customize operation concerned with parking assist in the setting information of the safe setting. After the reflection, the process returns to step S208, and operation related to the safe setting is acquired again.

According to the third embodiment, it is possible to improve the convenience in a case of setting functions when parking for safe driver assist.

### Fourth Embodiment

Next, a fourth embodiment will be described. The fourth embodiment is a mode related to nighttime driving assist of the safe setting among the groups.

The fourth embodiment is a mode related to driver assist functions belonging to a nighttime driving assist group (hereinafter, "nighttime assist group") and includes one or more driver assist functions that activate based on a detection result of the front camera 130. It is possible to collectively provide instructions to functions that activate in nighttime, so it is possible to improve the convenience of a user who intends to drive in nighttime. The front camera 130 is an example of an "illuminance detecting apparatus".

The front camera 130 outputs, to the driver assist apparatus 12, illuminance information indicating the detected illuminance ahead of the vehicle 10. When the driver assist apparatus 12 determines that the amount of light received by the front camera 130 becomes less than a predetermined amount, that is, an area around the vehicle 10 gets dark, based on the acquired illuminance information, the driver assist apparatus 12 activates the driver assist functions that activate based on the detection result of the front camera 130. Hereinafter, in the fourth embodiment, the plurality of driver assist functions belonging to the nighttime assist group may be referred to as "nighttime assist function".

Here, the driver assist apparatus 12 in the fourth embodiment has a functional configuration shown in FIG. 7, similar to that of the first embodiment.

In the fourth embodiment, the control unit 204 is capable of collectively providing instructions for setting to the nighttime assist function. The nighttime assist function includes, for example, AHB, AHS, and side view lamp. AHB is an example of a "first function". AHS is an example of a "second function". Side view lamp is an example of a "third function".

As described above, AHB is a system that detects vehicle light of an oncoming vehicle as a surrounding situation of the vehicle 10 with the front camera 130 and automatically switches between high beam and low beam of the headlight 46 based on the detection result of the front camera 130.

As described above, AHS is a system that detects the illuminance of the light of a forward vehicle, a street light, or the like as a surrounding situation of the vehicle 10 with the front camera 130 and controls the light distribution of the headlight 46 based on the detection result of the front camera 130.

Side view lamp is a system that turns on an auxiliary light illuminating ahead of the vehicle based on the status of the vehicle 10 while the headlight 46 is turned on. The auxiliary light is a light that is incorporated in each of right and left headlight units together with the headlight 46 and capable of illuminating an area diagonally ahead of the vehicle 10. The auxiliary light is an example of "another light".

In side view lamp, any one or both of the right and left auxiliary lights turn on based on the turn direction of the steering wheel, the position of a turn signal lever, and a shift position, as the status of the vehicle 10.

For example, in side view lamp, any one of the right and left auxiliary lights, corresponding to the turn direction of the steering wheel (counterclockwise or clockwise), turns on. Specifically, when the steering wheel is turned clockwise, the auxiliary light incorporated in the right-side headlight unit of the vehicle 10 turns on together with the headlight 46.

For example, in side view lamp, any one of the right and left auxiliary lights, corresponding to the position of the turn signal lever (a first position in which the left-side turn signal turns on or a second position in which the right-side turn signal turns on), turns on. Specifically, when the turn signal lever is located at the first position, the auxiliary light incorporated in the left-side headlight unit of the vehicle 10 turns on together with the headlight 46.

For example, in side view lamp, when the shift position of the vehicle 10 is switched to R range, the two auxiliary lights respectively incorporated in the right and left headlight units turn on together with the headlight 46.

The nighttime assist function in the fourth embodiment further includes another driver assist function in addition to the above-described driver assist functions. Specifically, the nighttime assist function further includes a specific function and a predetermined function. The specific function is a function that activates based on a recognition image from the front camera 130 that recognizes an area ahead of the vehicle 10. The predetermined function is a function that activates based on detection results of the BSM sensors 133E that detect objects approaching the vehicle 10. The front camera 130 is an example of a "camera". The BSM sensors 133E are examples of a "radar sensor". The objects include another vehicle, such as a passenger vehicle and a motorcycle, a pedestrian, and an animal.

In the fourth embodiment, in an example, PCS and FCTA that support collision avoidance between the vehicle 10 and an object are specific examples of the specific function, and SEA that gives a warning to occupants of the vehicle 10 is a specific example of the predetermined function. In this case, PCS and FCTA are examples of a "fourth function", and SEA is an example of a "fifth function". The occupants include a user and a fellow passenger other than the user.

Instructions for settings to the nighttime assist function from the control unit 204 include instructions to set whether to activate the driver assist functions and instructions to change the activation timings of the driver assist functions. Hereinafter, in the fourth embodiment, instructions to set whether to activate the driver assist functions may be referred to as "setting instructions", and instructions to change the activation timings of the driver assist functions may be referred to as "change instructions.

Here, on the setting screen (2B) shown in FIG. 12B (described later), setting instructions to the driver assist functions set to an on state are instructions to enable activation of the functions. Change instructions are instructions to advance the activation timings of the functions as compared to normal times. On the other hand, on the setting screen (2B), setting instructions to the driver assist functions set to an off state are instructions to disable activation of the functions. Change instructions are instructions for not changing the activation timings of the functions, that is, maintaining the activation timings during normal times. "Advancing the activation timing of the function" includes both advancing the timing at which the self-driving ECU 60 starts driving operation, such as acceleration, braking, and steering, based on the driver assist function and advancing the timing to output a warning, such as sound and display, based on the driver assist function.

FIG. 12A is an example of a setting screen with which settings concerned with the nighttime assist function are allowed to be selected. As shown in FIG. 12A, on the setting screen (2A) in which the user selects the nighttime assist group from the selection area (a1), a nighttime assist setting button (s41) for customizing individual driver assist functions of the nighttime assist function is displayed in the display area (a2). When the nighttime assist setting button (s41) is depressed, the setting screen (2B) with which the individual driver assist functions of the nighttime assist function are allowed to be customized is displayed.

FIG. 12B is an example of the setting screen with which the individual driver assist functions of the nighttime assist function are allowed to be customized. The setting screen (2B) shown in FIG. 12B shows a state after the individual driver assist functions of the nighttime assist function are customized by the user in the setting area (b1).

In an example, in the setting area (b1), of the individual driver assist functions of the nighttime assist function, the activation timings of AHB, AHS, side view lamp, FCTA, and SEA are set to early, and the activation timing of PCS remains unchanged. Then, it is assumed that the collective setting button (a3) is depressed in the state shown in the setting area (b1). In this case, the CPU 20 collectively provides instructions to change the nighttime assist function and reflects the changes as collective setting of the nighttime assist group. Collective setting of the nighttime assist group is setting details like advancing the activation timings of AHB, AHS, side view lamp, FCTA, and SEA as compared to normal times and maintaining the activation timing of PCS during normal times. Although not illustrated in the setting area (b1) shown in FIG. 12B, it is, of course, possible to provide a change instruction for another driver assist function or provide change instructions and setting instructions together, in collective setting of the nighttime assist group based on customization details of the user.

Next, the flow of control of the fourth embodiment will be described. FIG. 12C is a flowchart that illustrates the flow of a driver assist process serving as a driver assist method according to the fourth embodiment. The driver assist process of the fourth embodiment is, for example, executed when setting of the above-described nighttime assist group is selected on the screen. The above-described control related to the specific condition according to the first embodiment is executed as needed, for example, at the timing of receiving operation.

In step S400, the CPU 20 acquires operation to the group setting screen.

In step S402, the CPU 20 determines whether the operation is to select the nighttime assist group. When the operation is to select the nighttime assist group, the process proceeds to step S404. When the operation is not to select the nighttime assist group, the process returns to step S400 and repeats the process.

In step S404, the CPU 20 acquires the setting information of the nighttime assist group from the ROM 21.

In step S406, the CPU 20 shows the descriptions of the functions of the nighttime assist group on the setting screen (2A).

In step S408, the CPU 20 determines whether customize operation is received. The customize operation is to, for example, depress the nighttime assist setting button (s41) in a state where the nighttime assist group is selected. In a case where the customize operation is received, the process proceeds to step S410. In a case where the customize operation is not received, the process proceeds to step S414.

In step S410, the CPU 20 displays the setting screen (2B) shown in FIG. 12B. The user operates the setting area (b1) on the setting screen (2B) to perform individual setting operation to customize the individual driver assist functions of the nighttime assist function.

In step S412, the CPU 20 acquires the individual setting operation concerned with the nighttime assist function.

In step S414, the CPU 20 determines whether setting reflection operation is received. The setting reflection operation is to, for example, depress the collective setting button (a3) in a state where the nighttime assist group is selected. In a case where the setting reflection operation is received, the process proceeds to step S416. In a case where the setting reflection operation is not received, the process returns to step S410.

In step S416, the CPU 20 provides instructions for settings to the driver assist functions with the set setting information of the nighttime assist group and reflects the settings in the driver assist functions.

As described above, in the driver assist apparatus 12 in the fourth embodiment, the CPU 20, in the nighttime assist group that is an example of the group configured so that the driver assist function of the vehicle 10 is allowed to be added to or deleted from the group, is capable of collectively providing instructions for settings to a plurality of the driver assist functions including the driver assist function that activates based on the detection result of the front camera 130 capable of detecting illuminance ahead of the vehicle 10. The plurality of the driver assist functions including the driver assist function that activates based on the detection result of the front camera 130 capable of detecting illuminance ahead of the vehicle 10 is the nighttime assist function. Thus, since the driver assist apparatus 12 is capable of collectively providing instructions for settings to the nighttime assist function, it is possible to improve the convenience of the user in setting the plurality of driver assist functions including the driver assist function that activates in a case where an area around the vehicle 10 is dark.

In the driver assist apparatus 12 in the fourth embodiment, the nighttime assist function includes AHB, AHS, and side view lamp. Thus, with the driver assist apparatus 12, it is possible to improve the convenience of the user in setting the plurality of driver assist functions including the driver assist function related to control of the light that illuminates an area ahead of the vehicle 10.

In the driver assist apparatus 12 in the fourth embodiment, the nighttime assist function further includes the specific function that activates based on a recognition image from the front camera 130 that recognizes an area ahead of the vehicle 10. Then, the CPU 20, in providing instructions for settings to the nighttime assist function, is capable of providing instructions to change the activation timing of at least one driver assist function included in the specific function. Thus, with the driver assist apparatus 12, it is possible to change the activation timing of the specific function that activates based on a recognition image from the front camera 130 in a case where an area around the vehicle 10 is dark.

In the driver assist apparatus 12 in the fourth embodiment, the CPU 20 is capable of advancing the activation timings of PCS and FCTA that assist in collision avoidance between the vehicle 10 and an object as compared to normal times as a change of the activation timings. Thus, with the driver assist apparatus 12, it is possible to decrease collision risk between the vehicle 10 and an object by advancing the activation timings of PCS and FCTA as compared to normal times in a case where an area around the vehicle 10 is dark.

In the driver assist apparatus 12 in the fourth embodiment, the nighttime assist function further includes a predetermined function that activates based on detection results of the BSM sensors 133E that detect objects approaching the vehicle 10. Then, the CPU 20, in providing instructions for settings to the nighttime assist function, is capable of providing instructions to change the activation timing of at least one driver assist function included in the predetermined function. Thus, with the driver assist apparatus 12, it is possible to change the activation timing of the predetermined function that activates based on the detection results of the BSM sensors 133E in a case where an area around the vehicle 10 is dark.

In the driver assist apparatus 12 in the fourth embodiment, the CPU 20 advances the activation timing of SEA that gives a warning to occupants of the vehicle 10 as compared to normal times as a change of the activation timing. Thus, with the driver assist apparatus 12, it is possible to cause an occupant to recognize a warning from an early stage by advancing the activation timing of SEA as compared to normal times in a case where an area around the vehicle 10 is dark.

In the fourth embodiment, the nighttime assist function includes all of AHB, AHS, and side view lamp; however, the configuration is not limited thereto. The nighttime assist function just needs to include at least one of AHB, AHS, and side view lamp.

In the fourth embodiment, PCS and FCTA are assumed as examples of the "fourth function"; however, an example of the "fourth function" is not limited thereto. For example, the "fourth function" may include another driver assist function, such as LDA, OAA, and AES, in addition to PCS and FCTA.

In the fourth embodiment, the specific function is a driver assist function that activates based on a recognition image from the front camera 130; however, the configuration is not limited thereto. The specific function just needs to be a driver assist function that activates based on a recognition image from a camera that recognizes an area around the vehicle 10. Therefore, the specific function may be a driver assist function that activates based on a recognition image from the rear camera 131 that recognizes an area behind the vehicle 10. Specifically, the specific function in this case may be RCD and PKSB (O + V + P), or the like.

In the fourth embodiment, SEA is assumed as an example of the "fifth function"; however, the configuration is not limited thereto. The "fifth function" just needs to be a driver assist function that gives a warning to at least one of an occupant and an object. Therefore, the "fifth function" may include, for example, another driver assist function, such as BSM, FHL, and RVAI, in addition to SEA.

In the fourth embodiment, the predetermined function is a driver assist function that activates based on the detection results of the BSM sensors 133E. Therefore, the driver assist functions included in the predetermined function are not limited to SEA and also include another driver assist function, such as PKSB, SCB, and AVS.

In the fourth embodiment, the front camera 130 is assumed as an example of the "illuminance detecting apparatus"; however, an example of the illuminance detecting apparatus is not limited thereto. For example, an illuminance sensor that is mounted on the top surface of an instrument panel in the vehicle 10 and that detects illuminance ahead of the vehicle 10 may be assumed as an example of the "illuminance detecting apparatus". An illuminance sensor in this case may be a sensor that has a light receiving element and that detects light by converting light to current.

In the fourth embodiment, the nighttime assist function includes one or more driver assist functions (for example, AHB, AHS, and side view lamp) that activate based on the detection result of the "illuminance detecting apparatus", such as the front camera 130. However, the configuration is not limited thereto. The driver assist function may be the one that activates based on the fact that a predetermined time period has come, instead of or in addition to the detection result of the "illuminance detecting apparatus", such as the front camera 130.

### Fifth Embodiment

Next, a fifth embodiment will be described. The fifth embodiment is a mode related to a change of assist level among the groups.

An instruction provided to a driver assist function included in a group in the fifth embodiment is configured to include a change instruction for the assist level of the driver assist function. The number of driver assist functions to which a change instruction is provided may be multiple. Thus, assist levels can be collectively changed, so it is possible to improve the convenience of a user who intends to change assist levels.

The fifth embodiment is a mode that particularly aims to optimize settings concerned with assist levels among functions to which the control unit 204 is capable of providing instructions. An assist level is a setting of a detailed function included in a driver assist function. A necessary number of levels are set as needed for an assist level according to the type of detailed function to which the assist level is assigned. Examples of the type of assist level include the activation timing of a driver assist function, an alarm sound to a user of a driver assist function, and the operating intensity of a driver assist function. In an example, levels "early", "standard", and "late" can be set as the levels of the activation timing. In an example, levels "maximum", "standard", and "minimum" can be set as the levels of the alarm sound. In an example, levels "longest, "standard", and "shortest" can be set as the levels of the operating intensity in the case of switching of inter-vehicle distance. Levels "high", "standard", and "low" can be set in the case of switching of alert sensitivity. Levels are not limited to the examples of the above-described three levels and may be set so as to be further divided into five levels, 10 levels, or the like. When the function of Intelligent Transport Systems (ITS) connect is provided, a setting change of two choices, that is, "vehicle to vehicle" or "road to vehicle", of the ITS connect, may be allowed as the type of assist level. The type of alarm sound may be allowed to be selected. In this way, in the present embodiment, setting is allowed for each type of detailed function to which the assist level is assigned. Instructions for settings, which the control unit 204 provides, include instructions to change the assist levels for a plurality of types of assist levels. The instructions to change the assist levels in the above-described example include a change of the activation timing of a driver assist function, a change of the alarm sound to a user of a driver assist function, and a change of the operating intensity of a driver assist function according to a mode of use of detailed functions in driver assist functions included in a group.

FIG. 13A is an example of a setting screen with which settings concerned with assist level are allowed to be selected. As shown in FIG. 13A, on the setting screen (2A), an assist level setting button (s31) for displaying and setting the settings related to assist level is displayed. When the assist level setting button (s31) is depressed, an assist level list screen is displayed. In the example, the safe setting group is selected; however, the group is not limited to the safe setting, and the same applies in a case where any group is selected.

FIG. 13B is an example of the assist level list screen. As shown in FIG. 13B, on the assist level list screen (s32), types of assist levels are shown in list form, and a level setting button (s33) is displayed. When the level setting button (s33) is depressed, the levels become selectable, and the assist levels are collectively changeable by selecting a level button (s34). When an individual detailed setting button (s35) is depressed, the view shifts to a detailed screen. The detailed screen is a screen with which the assist levels of driver assist functions are allowed to be individually set. As described above, assist levels are respectively included in a plurality of driver assist functions, and the assist level list screen is allowed to be displayed. When the settings of assist levels included in an item are collectively changed on the list screen, it is possible to collectively provide instructions to change the assist levels of a plurality of driver assist functions each including the item.

FIG. 13C is an example of the detailed screen with which the assist levels are allowed to be individually set. On the detailed screen (s36), driver assist functions each including a selected type of assist level are shown in a list. For each driver assist function, the assist level is allowed to be individually changed by selecting the level button (s34). The view of the type of assist level is allowed to be switched with the right and left switch buttons (s2). When a function description button (s37) is selected, the description of the function is popped out to be displayed. As described above, a detailed screen that is a screen with which the assist level of each of a plurality of driver assist functions is allowed to be set can be displayed. The levels of the assist level of each of a plurality of driver assist functions are allowed to be set on the detailed screen. For example, a return button may be provided to include a function to reset the assist levels changed by change instructions to default assist levels determined in advance for a group.

### Flow of Control

Next, the flow of control of the fifth embodiment will be described. FIG. 13D is a flowchart that illustrates the flow of a driver assist process serving as a driver assist method according to the fifth embodiment. A basic flow of the driver assist process of the fifth embodiment is similar to that of the third embodiment; however, the group is not limited to the safe setting group. The driver assist process of the fifth embodiment is applicable to all the groups selectable from the selection area (a1). For this reason, processes other than the process related to assist level will also be described again.

In step S500, the CPU 20 acquires operation to the group setting screen.

In step S502, the CPU 20 determines whether the operation is to select a predetermined group of settings. When the operation is to select the predetermined group, the process proceeds to step S504. When the operation is not to select the predetermined group, the process returns to step S500 and repeats the process.

In step S504, the CPU 20 acquires the setting information of the selected group from the ROM 21.

In step S506, the CPU 20 shows the descriptions and setting information of the functions of the group on the setting screen.

In step S508, the CPU 20 acquires operation related to the settings of the group.

In step S510, the CPU 20 determines whether setting operation concerned with assist level is received through the acquired operation related to the settings of the group. The setting operation concerned with assist level is to depress the assist level setting button (s31). When the setting operation concerned with assist level is received, the process proceeds to step S512. When the setting operation concerned with assist level is not received, the process proceeds to step S518.

In step S512, the CPU 20 displays the assist level list screen (s32). The user operates the assist level list screen (s32) and the detailed screen (s36) shiftable from the list screen to perform customize operation to change settings concerned with assist level.

In step S514, the CPU 20 acquires the customize operation concerned with assist level.

In step S516, the CPU 20 reflects the details set through the customize operation concerned with assist level in the setting information of the selected group. After the reflection, the process returns to step S508, and operation related to the selected group is acquired again.

In step S518, the CPU 20 determines whether the operation related to settings is setting reflection operation or customize operation. The setting reflection operation is to, for example, depress the collective setting button (a3) in a state where the predetermined group is selected. In the case of the setting reflection operation, the process proceeds to step S522. In the case of the customize operation, the process proceeds to step S520.

In step S520, the CPU 20 reflects the details set through the customize operation in the setting information of the selected group.

In step S522, the CPU 20 provides instructions for settings to the driver assist functions with the set setting information of the group and reflects the settings in the driver assist functions.

According to the fifth embodiment, it is possible to improve the convenience in a case setting a detailed function related to the assist level of a driver assist function.

### Sixth Embodiment

Next, a sixth embodiment will be described. The sixth embodiment is a mode related to a notification function among the groups.

The sixth embodiment is a mode to set notification-related functions to a user. Groups including notification-related functions (hereinafter, notification functions) are typically, for example, the groups of (C6) "Notice Assist" and (C7) "Early Notice Assist" among the above-described groups. Hereinafter, these groups will be described while being referred to as notification assist groups. The convenience of the user who intends to set notification functions improves by allowing collective instructions for a plurality of notification-related assist functions.

In the sixth embodiment, a function group of notification functions among a plurality of driver assist functions included in a notification assist group to which the control unit 204 is capable of providing instructions includes a monitoring notification function and an activation suggestion function. The monitoring notification function is a collective name of functions performing monitoring of an ambient environment and notification based on a monitoring result. The monitoring notification function includes, for example, a notification function based on monitoring a road (RSA), a notification function based on monitoring a surrounding vehicle, a notification function based on monitoring a condition of a driver (DMS), and a notification function based on monitoring a traffic signal or a road sign. The notification function based on monitoring a surrounding vehicle includes TMN that is a notification function based on monitoring a preceding vehicle, RAVI and AVS that are notification functions based on monitoring a rear vehicle, and ITS that is a notification function based on monitoring a vehicle driving around. The notification function based on monitoring a traffic signal or a road sign includes TMN that is a notification function based on monitoring a traffic signal and RSA that is a notification function based on monitoring a road sign. In the present embodiment, it is sufficient that, among these notification functions, two or more notification functions can be collectively set. Three or four notification functions may be collectively set. The activation suggestion function is a collective name of functions suggesting the user activate a driver assist function. The activation suggestion function includes AVS that is a function concerned with a report from the user and SWS that is a function concerned with a suggestion to take a break for the user.

FIGS. 14A-1, 14A-2, and 14A-3 are examples of settings of a monitoring notification function assigned to the notification assist group. The items and legends of the example of settings are similar to those of the safe setting of FIGS. 10A-1 and 10A-2. The notification assist group includes the groups of (C6) "Notice Assist" and (C7) "Early Notice Assist", and settings of the functions and detailed functions of each of the groups are illustrated. Driver assist functions classified to the notification function (third assist function) are assigned to the notification assist group for the purpose of assisting functions. The assigned driver assist functions correspond to the monitoring notification function and the activation suggestion function. For the monitoring notification function, RSA, RVAI, FHL, TMN, ITS, and DMC are set. For the activation suggestion function, AVS and SWS are set. A default setting of each of the detailed functions of RSA is illustrated. In default settings of the detailed functions of RSA, road sign notification control, red signal notification, switching of a notification method, and speed limit change notification are enabled (ON). The setting of switching of notification speed offset is disabled ("-" in the table). For the "Early Notification Assist", detailed functions that are not set for the "Notification Assist", that is, switching of notification timing, switching of preceding vehicle start notification timing, switching of signal change notification timing, and switching of notification timing, are set to "Early" for early activation. Switching of alert sensitivity is set to "High".

When, for example, the notification assist group is selected in operation to the group setting screen of FIG. 2 and the settings are reflected, the control unit 204 collectively provides instructions for settings to individual functions (detailed functions) included in the driver assist functions assigned to the notification assist group. The driver assist functions assigned to the notification assist group are examples of the notification-related function of the disclosure.

When the notification assist group is selected on the setting screen, the group display control unit 206 shows the descriptions and setting information of the notification assist functions.

In the sixth embodiment as well as the second embodiment, the detailed functions of the activation timings and alarm sounds are allowed to be reflected in the settings of the detailed functions of another driver assist function different from the set driver assist function. Instructions to change the detailed functions are instructions to collective change the detailed functions.

FIG. 14B is an example of a setting screen with which settings of individual detailed functions of notification assist are allowed to be changed. In a setting change area (s41), default settings for the detailed functions of the driver assist function are displayed, and candidates allowed to be changed by selection are shown. In the example, a change of the settings of detailed functions of RSA is illustrated. The view of the driver assist function is allowed to be switched with right and left switch buttons (s42). A driver assist function may be configured to be switched from a list view. A user is able to reflect a change in the setting information by selecting a setting from among available candidates. Thus, the setting information is allowed to be changed to settings customized from default settings.

FIG. 14C is an example of a screen that suggests reporting as an activation suggestion. The control unit 204 executes activation suggestion when an activation suggestion condition is satisfied, and displays the suggestion as an alert (s43) through the notification on the screen of the multimedia device 14. FIG. 14C is an example of a case of being superimposed on the setting screen (2A) and is a case of suggesting reporting based on AVS. An alert of the activation suggestion function has the highest priority in priority level in the view on the screen and is displayed so as to be superimposed on the details in the view. When the user depresses a suggestion execute button (s44), the control unit 204 executes the driver assist function according to the activation suggestion. When a cancel button (s45) is depressed, execution of AVS is cancelled. An example of the driver assist function according to the activation suggestion is navigation of reporting in the case of AVS. In the case of SWS, the user is suggested to take a break. The activation suggestion condition is stored in the ROM 21 in advance. Examples of the activation suggestion condition include a yaw rate and a steering angle velocity in the case of sway warning system. Careless driving or drowsy driving is estimated based on a yaw rate, a steering angle velocity, and the like, and the user is suggested to take a break when the condition applies to such driving. Careless driving is, for example, sudden steering. Drowsy driving is, for example, estimated when there is a long-period sway. For an activation suggestion concerned with reporting, a vehicle getting close to the driving vehicle 10 by a certain distance or shorter is detected, and, when the vehicle drives by the distance for a certain period of time or longer, the user is suggested to report the situation. Navigation to a rest spot may be exemplified.

### Flow of Control

Next, the flow of control of the sixth embodiment will be described. FIG. 14D is a flowchart that illustrates the flow of a driver assist process serving as a driver assist method according to the sixth embodiment. FIG. 14E is a flowchart that illustrates the flow of a driver assist process concerned with activation suggestion according to the sixth embodiment. The driver assist process of the sixth embodiment in FIG. 14D is, for example, executed when the above-described notification assist group is selected on the screen. The flow of the basic process is similar to that of the second embodiment.

In step S600, the CPU 20 acquires operation to the group setting screen.

In step S602, the CPU 20 determines whether the operation is to select the notification assist group. When the operation is to select the notification assist group, the process proceeds to step S604. When the operation is not to select the notification assist group, the process returns to step S600 and repeats the process.

In step S604, the CPU 20 acquires the setting information of the notification assist from the ROM 21.

In step S606, the CPU 20 shows the descriptions and setting information of the functions of the notification assist on the setting screen.

In step S608, the CPU 20 acquires operation related to the notification assist. The operation related to the notification assist here is setting reflection operation or customize operation. The setting reflection operation is to, for example, depress the collective setting button in a state where the notification assist is selected. The customize operation is to, for example, change, add, and delete individual settings of the above-described driver assist functions in FIG. 3.

In step S610, the CPU 20 determines whether the operation related to the notification assist is setting reflection operation or customize operation. In the case of the setting reflection operation, the process proceeds to step S614. In the case of the customize operation, the process proceeds to step S612.

In step S612, the CPU 20 reflects the details set through the customize operation in the setting information of the notification assist.

In step S614, the CPU 20 provides instructions for settings to the driver assist functions with the set setting information of the notification assist and reflects the settings in the driver assist functions.

Next, an activation suggestion will be described. The driver assist process concerned with activation suggestion of FIG. 14E is, for example, periodically executed while the vehicle 10 is driving. The following process routine may be executed for each of the driver assist functions concerned with activation suggestion.

In step S620, the CPU 20 determines whether the activation suggestion condition is satisfied. When the activation suggestion condition is satisfied, the process proceeds to step S622. When the activation suggestion condition is not satisfied, this step is repeated after a lapse of a certain period of time.

In step S622, the CPU 20 shows suggestion details of the driver assist function concerned with activation suggestion on the screen of the multimedia device 14.

In step S624, the CPU 20 determines whether the operation received is to execute the suggested driver assist function or cancel the suggestion. When the operation received is to execute the suggested driver assist function, the process proceeds to step S626; whereas, when the operation received is to cancel the suggestion, the process ends.

In step S626, the CPU 20 executes the driver assist function concerned with the activation suggestion.

According to the sixth embodiment, it is possible to improve the convenience in a case of setting a notification-related detailed function of a driver assist function.

### Seventh Embodiment

Next, a seventh embodiment will be described. The seventh embodiment is a mode related to (C7) eco-driving mode that is a driving mode suppressing fuel consumption among the groups. In the eco-driving mode, settings to suppress fuel consumption are given a higher priority. The fuel consumption in the present embodiment is used as a broad meaning including the fuel consumption of an internal combustion engine, such as a gasoline engine, and the electric power consumption of a battery electric vehicle. Not only the electric power consumption of a battery electric vehicle but also the electric power consumption of a hybrid electric vehicle, a plug-in hybrid electric vehicle, or the like is also included. The eco-driving mode group is an example of the specific group of the disclosure.

The seventh embodiment aims to perform optimization in a case of setting a plurality of driver assist functions of the eco-driving mode group to which the control unit 204 is capable of providing instructions. The convenience of a user when the eco-driving mode is selected improves by allowing to collectively provide instructions for settings to a plurality of driver assist functions included in the eco-driving mode group.

FIGS. 15A-1 and 15A-2 are examples of settings of driver assist functions assigned to the eco-driving mode group. The items and legends of the example of settings are similar to those of the safe setting of FIGS. 10A-1 and 10A-2. Driver assist functions classified to the driving assist function (second assist function) are assigned to the eco-driving mode group for the purpose of assisting functions. ACC that is a function of assisting in follow-up driving while maintaining an inter-vehicle distance from a preceding vehicle and PDA that is a function of assisting in operation according to a driving situation are used for the driver assist functions of the eco-driving mode group. Of detailed functions of ACC and PDA, detailed functions related to fuel consumption are set, and settings of the other detailed functions are disabled ("-" in the table). Detailed functions to be set are set so as to suppress fuel consumption for ACC and PDA. For ACC, switching of inter-vehicle distance is set to "longest". Switching of acceleration and speed suppression during cornering are set to "low". Switching of eco-driving assist amount is set to "high". For PDA, adjustment of assist amount is set to "low". In this way, the settings of operating intensities of the functions concerned with acceleration and deceleration are set so as to be lower than standard operating intensities. These settings are examples of the function concerned with acceleration and deceleration of the disclosure. In this way, the control unit 204 sets the settings of operating intensities of the functions concerned with acceleration and deceleration to the driver assist functions included in the eco-driving mode group. The control unit 204 changes settings concerned with acceleration and deceleration for ACC and PDA. In other words, the settings of the operating intensities of the functions concerned with acceleration and deceleration are set so as to be lower than standard settings for ACC and PDA.

When the eco-driving mode is selected, the control unit 204 changes settings corresponding to suppression of fuel consumption of the vehicle for the driver assist functions included in the eco-driving mode group. When, for example, the eco-driving mode group is selected in operation to the setting screen (2A) of FIG. 2 and the settings are reflected, the control unit 204 collectively provides instructions for settings to the driver assist functions assigned to the eco-driving mode group. In the settings of the eco-driving mode, functions classified to the collision damage reduction function (first assist function) and the notification function (third assist function) are disabled, so the instructions for settings include instructions to disable the settings of these functions When the eco-driving mode group is selected and then the customize button (a4) is depressed on the setting screen (2A), a detailed screen showing the details of functions of the eco-driving mode is displayed.

FIG. 15B is an example of the detailed screen showing the details of functions of the eco-driving mode. On the detailed screen (s51) of the eco-driving mode, default settings of the detailed functions are determined such that fuel consumption is suppressed according to the purpose of the eco-driving mode. Therefore, when the eco-driving mode is selected, the group display control unit 206 executes control (suppression control) to suppress a setting change of the detailed functions, which leads to an increase in fuel consumption. In suppression control, for example, a setting change of the detailed functions to interfere with the eco-driving mode is prohibited. Even when not prohibited, a changeable range is limited. When a setting change is prohibited through suppression control, for example, a detailed function setting button is displayed in a non-selectable state (s52). The group display control unit 206 displays a description (s53) indicating that a setting change is not allowed (s53).

The control unit 204 may determine a condition for suggesting the eco-driving mode and suggest to switch to the eco-driving mode. When, for example, a driving record of the vehicle 10 is collected and then it is detected that the vehicle 10 is driving with a high fuel consumption, the eco-driving mode is suggested. A fuel consumption upper limit may be registered by input of a user, and switching to the eco-driving mode may be suggested when the fuel consumption upper limit is reached. The flow of activation suggestion is similar to that of the fifth embodiment. In this way, a function to make a suggestion to activate the eco-driving mode may be included. The control unit 204 may predict a fuel consumption suppression effect from a driving record in a case where the eco-driving mode is selected and display the fuel consumption suppression effect on the setting screen. Thus, it is possible to assist the user to determine whether to set the eco-driving mode.

### Flow of Control

Next, the flow of control of the seventh embodiment will be described. FIG. 15C is a flowchart that illustrates the flow of a driver assist process serving as a driver assist method according to the seventh embodiment.

In step S700, the CPU 20 acquires operation to the group setting screen.

In step S702, the CPU 20 determines whether the operation is to select the eco-driving mode group. When the operation is to select the eco-driving mode group, the process proceeds to step S704. When the operation is not to select the eco-driving mode group, the process returns to step S700 and repeats the process.

In step S704, the CPU 20 acquires the setting information of the eco-driving mode from the ROM 21.

In step S706, the CPU 20 shows the descriptions and setting information of the functions of the eco-driving mode on the setting screen and executes setting change suppression control.

In step S708, the CPU 20 determines whether setting reflection operation is acquired. When the setting reflection operation is acquired, the process proceeds to step S710. When the setting reflection operation is not acquired, it is assumed as cancellation, and the process ends.

In step S710, the CPU 20 provides instructions for settings to the driver assist functions with the set setting information of the eco-driving mode and reflects the settings in the driver assist functions.

According to the seventh embodiment, it is possible to improve the convenience in a case of setting a driver assist function such that fuel consumption is suppressed.

### Eighth Embodiment

Next, an eighth embodiment will be described. The eighth embodiment is a mode related to a snowy road assist group. The snowy road assist group includes a plurality of driver assist functions. For the plurality of driver assist functions, when at least one of an atmospheric phenomenon outside the vehicle and the condition of a road satisfies a predetermined adverse condition, an assist level regarding at least one of the operating intensity and activation timing of the driver assist function is allowed to be changed.

The atmospheric phenomenon is a concept indicating the condition of atmosphere, such as weather, ambient temperature, humidity, and wind speed. The condition of a road is the condition of a road surface and includes a dry condition, a wet condition, a semi-wet condition, a snow cover condition, a compacted snow condition, a frozen condition, a snow removal condition, a snow melting condition, the presence or absence of sand, the presence or absence of oil, a muddy condition, and a track condition. In an example, in the eighth embodiment, a case where the adverse condition is satisfied is assumed as at least one of a case where the weather outside the vehicle is snowy and a case where the condition of a road around the vehicle 10 is a snow cover condition. The CPU 20 of the driver assist apparatus 12 determines whether the adverse condition is satisfied based on atmospheric phenomenon information indicating an atmospheric phenomenon around the vehicle 10, information from various devices included in the sensor unit 52, and the like. The atmospheric phenomenon information, the information from various devices, and the like are transmitted from an external server such as the cloud server 16.

Hereinafter, a plurality of driver assist functions that belong to the snowy road assist group will be described. In the eighth embodiment, the plurality of driver assist functions that belong to the snowy road assist group can be referred to as "snowy road assist function".

Here, the driver assist apparatus 12 in the eighth embodiment has a functional configuration shown in FIG. 7, similar to that of the first embodiment. In the eighth embodiment, the control unit 204 is capable of collectively providing instructions for settings to the snowy road assist function.

In an example, the snowy road assist function is configured to include driver assist functions of which the assist levels are changeable, communication functions that allow communication between the vehicle 10 and each of another vehicle and a roadside device installed on a road, driver assist functions that use the sonars 134 to exercise the functions, and driver assist functions that use a recognition image from the front camera 130 to exercise the functions. The vehicle 10 implements the communication functions by using a communication interface such as the wireless communication I/F 23 and the communication unit 24 of the driver assist apparatus 12. The sonars 134 are an example of the "clearance sonar", and the front camera 130 is an example of the "camera". Hereinafter, in the eighth embodiment, the driver assist functions of which the assist levels are changeable can be referred to as "first function group", the driver assist functions that use the sonars 134 to exercise the functions can be referred to as "second function group", and the driver assist functions that use a recognition image acquired by the front camera 130 to exercise the functions are referred to as "third function group". The first function group includes, for example, LDA, PCS, and the like. The second function group includes, for example, PKSB(O), all-around PKSB, and the like. The third function group includes, for example, ACC, PDA, and the like.

Here, the communication functions implement a vehicle to vehicle communication system in which the vehicle 10 and another vehicle communicate with each other to directly exchange information on the status of each vehicle and a surrounding situation. For example, with the vehicle to vehicle communication system, when the vehicle 10 is following up another vehicle with ACC, acceleration and deceleration of the vehicle 10 are controlled according to acceleration and deceleration information of the another vehicle, acquired through vehicle to vehicle communication. Therefore, it is possible to reduce the inter-vehicle distance between the vehicle 10 and the another vehicle and fluctuations in the speed of the vehicle 10, with the result that smooth follow-up driving is possible.

The communication functions implement a road to vehicle communication system in which the vehicle 10 and a roadside device communicate with each other to directly exchange information on an oncoming vehicle, a pedestrian, a traffic signal, and the like. The roadside device is a computer installed at, for example, an intersection, a traffic signal, or the like, on a road. With the road to vehicle communication system, it is possible to, for example, call user's attention based on information from the roadside device, acquired through road to vehicle communication. Specifically, with the road to vehicle communication system, when a pedestrian is present at a blind spot of the user at the time of turning to the right at an intersection, a buzzer sound is caused to output from the meter buzzer 45 based on pedestrian information indicating the presence of the pedestrian, transmitted from the roadside device through road to vehicle communication. Thus, it is possible to call user's attention to the presence of the pedestrian.

Instructions for settings to the snowy road assist function from the control unit 204 include an instruction to change the assist level or notification level (described later) of the driver assist function and an instruction to set the presence or absence of activation of the driver assist function. Hereinafter, in the eighth embodiment, an instruction to change the assist level or notification level of the driver assist function can be referred to as "change instruction", and an instruction to set the presence or absence of activation of the driver assist function can be referred to as "setting instruction".

The control unit 204 executes at least one of lowering the operating intensity and advancing the activation timing as a change of assist level in providing instructions for settings to the snowy road assist function. Lowering the operating intensity is to lower the assist force (for example, assist force to steering force, assist force to accelerator depression force, or assist force to brake depression force) of driving operation, such as acceleration, braking, and steering, performed by the driver assist functions included in the first function group. When the vehicle 10 drives on a snowy road that satisfies the adverse condition in the eighth embodiment, the vehicle 10 can be uncontrollable if sudden braking is performed. For this reason, it is possible to suppress a situation in which the vehicle 10 becomes uncontrollable, by lowering assist force to brake depression force. Advancing the activation timing is to advance the timing at which the self-driving ECU 60 starts driving operation based on the driver assist functions. When, for example, the vehicle 10 drives on a snowy road, a braking distance extends as compared to when the vehicle 10 drives on a dry road, so the self-driving ECU 60 advances the timing to start applying brake to thereby making it possible to accurately decelerate to a target location.

The communication functions each allow to change a notification level related to at least one of notification frequency and notification timing to the vehicle 10. Then, the control unit 204 performs at least one of increasing notification frequency and advancing notification timing as a change of notification level in instructions for settings to the snowy road assist function. Increasing notification frequency is to increase the number of times of transmission of information per unit time, transmitted from another vehicle and a roadside device to the vehicle 10. When, for example, the vehicle 10 drives on a snowy road, the visibility of the user gets worse. Therefore, when the number of times of transmission of information per unit time is increased, the amount of information that can be acquired (complemented) from an external device increases, so it is possible to contribute to user safety. Advancing notification timing is to advance the timing to start transmission of predetermined information at the time when another vehicle and a roadside device transmit the predetermined information to the vehicle 10. When, for example, the vehicle 10 drives on a snowy road, the visibility of the user gets worse. Therefore, when the timing to start transmission of predetermined information is advanced, it is possible to early cause the user to understand the details indicated by the predetermined information.

FIG. 16A is an example of a setting screen with which settings concerned with the snowy road assist function are allowed to be selected. As shown in FIG. 16A, on the setting screen (2A) in which the user selects the snowy road assist group from the selection area (a1), a snowy road assist setting button (s81) for customizing individual driver assist functions of the snowy road assist function is displayed in the display area (a2). When the snowy road assist setting button (s81) is depressed, the setting screen (2B) with which the individual driver assist functions of the snowy road assist function are allowed to be customized is displayed.

FIG. 16B is an example of a setting screen with which individual driver assist functions of the snowy road assist function are allowed to be customized. The setting screen (2B) shown in FIG. 16B shows a state after the individual driver assist functions of the snowy road assist function are customized by the user in the setting area (b1).

In an example, in the setting area (b1), LDA and PCS as the driver assist functions included in the first function group, the communication function, PKSB(O) as the driver assist function included in the second function group, and ACC as the driver assist function included in the third function group, are shown as the snowy road assist function. As for the plurality of driver assist functions shown in the setting area (b1), one of a plurality of choices of a pull-down menu is selected by the user, and setting details are respectively displayed in a setting box (b2), a setting box (b3), a setting box (b4), a setting box (b5), and a setting box (b6).

Of the snowy road assist function, each of the pull-down menus corresponding to LDA and PCS has four choices, that is, "assist level 1", "assist level 2", "assist level 3", and "assist level 4". The "assist level 1" is a choice to not change the assist level, that is, to maintain the assist level during normal times. The "assist level 2" is a choice to lower the operating intensity as a change of the assist level. The "assist level 3" is a choice to advance the activation timing as a change of the assist level. The "assist level 4" is a choice to lower the operating intensity and advance the activation timing as a change of the assist level. In an example, the "assist level 4" is shown at the setting box (b2) corresponding to LDA, indicating that lowering the operating intensity and advancing the activation timing of LDA are performed. Thus, for example, the activation timing of LDA is advanced in a situation in which the condition of a road around the vehicle 10 is a snow cover condition, and assist force to steering force, performed by LDA in operation is lowered. The "assist level 3" is shown at the setting box (b3) corresponding to PCS, indicating that the activation timing of PCS is advanced. Thus, for example, the activation timing of PCS is advanced in a situation in which the condition of a road around the vehicle 10 is a snow cover condition.

Of the snowy road assist function, the pull-down menu corresponding to the communication function has four choices, that is, "notification level 1", "notification level 2", "notification level 3", and "notification level 4". The "notification level 1" is a choice to not change the notification level, that is, to maintain the notification level during normal times. The "notification level 2" is a choice to increase the notification frequency as a change of the notification level. The "notification level 3" is a choice to advance the notification timing as a change of the notification level. The "notification level 4" is a choice to increase the notification frequency and advance the notification timing as a change of the notification level. In an example, the "notification level 2" is displayed at the setting box (b4) corresponding to the communication function, indicating that increasing the notification frequency of the communication function is performed. Thus, for example, the number of times of transmission of information per unit time, transmitted from another vehicle and a roadside device to the vehicle 10, increases in a situation in which the condition of a road around the vehicle 10 is a snow cover condition.

Of the snowy road assist function, each of the pull-down menus corresponding to PKSB(O) and ACC has two choices, that is, "ON" and "OFF". "ON" is a choice to activate the driver assist function. "OFF" is a choice to not activate the driver assist function. In an example, "ON" is shown at the setting box (b5) corresponding to PKSB(O), indicating that PKSB(O) activates. "OFF" is shown at the setting box (b6) corresponding to ACC, indicating that ACC does not activate.

Then, it is assumed that the collective setting button (a3) is depressed in the state shown in the setting area (b1). In this case, the CPU 20 collectively provides change instructions and setting instructions to the snowy road assist function and reflects the changes and the settings as collective setting of the snowy road assist group. Collective setting of the snowy road assist group has the setting details, that is, lowering the operating intensity and advancing the activation timing of LDA (assist level 4), advancing the activation timing of PCS (assist level 3), increasing the notification frequency of the communication function (notification level 2), activation of PKSB(O) is on, and activation of ACC is off. In the eighth embodiment, in an example, the pull-down menu corresponding to the communication function has no choice of "OFF" unlike the pull-down menus corresponding to PKSB(O) and ACC. For this reason, in the eighth embodiment, when the collective setting button (a3) is depressed on the setting screen (2B) shown in FIG. 16B, setting details are such that the communication function constantly activates in a situation in which the adverse condition is satisfied.

Next, the flow of control of the eighth embodiment will be described. FIG. 16C is a flowchart that illustrates the flow of a driver assist process serving as a driver assist method according to the eighth embodiment. The driver assist process of the eighth embodiment is, for example, executed when settings of the above-described snowy road assist group are selected on the screen. The above-described control related to the specific condition according to the first embodiment is executed as needed, for example, at the timing of receiving operation.

In step S800, the CPU 20 acquires operation to the group setting screen.

In step S802, the CPU 20 determines whether the operation is to select the snowy road assist group. When the operation is to select the snowy road assist group, the process proceeds to step S804. When the operation is not to select the snowy road assist group, the process returns to step S800 and repeats the process.

In step S804, the CPU 20 acquires the setting information of the snowy road assist group from the ROM 21.

In step S806, the CPU 20 shows the descriptions of the functions of the snowy road assist group on the setting screen (2A).

In step S808, the CPU 20 determines whether customize operation is received. The customize operation is to, for example, depress the snowy road assist setting button (s81) in a state where the snowy road assist group is selected. In a case where the customize operation is received, the process proceeds to step S810. In a case where the customize operation is not received, the process proceeds to step S814.

In step S810, the CPU 20 displays the setting screen (2B) shown in FIG. 16B. The user operates the setting area (b1) on the setting screen (2B) to perform individual setting operation to customize the individual driver assist functions of the snowy road assist function.

In step S812, the CPU 20 acquires the individual setting operation concerned with the snowy road assist function.

In step S814, the CPU 20 determines whether setting reflection operation is received. The setting reflection operation is to, for example, depress the collective setting button (a3) in a state where the snowy road assist group is selected. In a case where the setting reflection operation is received, the process proceeds to step S816. In a case where the setting reflection operation is not received, the process returns to step S810.

In step S816, the CPU 20 provides instructions for settings to the driver assist functions with the set setting information of the snowy road assist group and reflects the settings in the driver assist functions.

As described above, in the driver assist apparatus 12 in the eighth embodiment, the CPU 20, in the snowy road assist group that is an example of the group configured so that the driver assist function of the vehicle 10 can be added or deleted, is capable of collectively providing instructions for settings to a plurality of the driver assist functions (snowy road assist function). For the plurality of driver assist functions, when at least one of the weather outside the vehicle and the condition of a road satisfies a predetermined adverse condition, the assist levels of the driver assist functions are allowed to be changed. Thus, since the driver assist apparatus 12 is capable of collectively providing instructions for settings to the snowy road assist function, it is possible to improve the convenience of the user in setting of a plurality of driver assist functions of which the assist levels are allowed to be changed in a case where the adverse condition is satisfied.

In the driver assist apparatus 12 in the eighth embodiment, the CPU 20 executes at least one of lowering the operating intensity and advancing the activation timing of the driver assist function as a change of the assist level in providing instructions for settings to the snowy road assist function. Thus, with the driver assist apparatus 12, it is possible to increase the safety of the user at the time when the driver assist function activates in a situation in which the adverse condition is satisfied. For example, the driver assist apparatus 12 advances the activation timing of PCS in a situation in which the condition of a road around the vehicle 10 is a snow cover condition. Therefore, the driver assist apparatus 12 is capable of assisting in collision avoidance that takes a braking distance on a snow cover road into consideration.

In the driver assist apparatus 12 in the eighth embodiment, the snowy road assist function further includes the communication function that allows communication between the vehicle 10 and each of another vehicle and a roadside device. Then, the CPU 20 is capable of providing an instruction to enable the communication function in providing instructions for settings to the snowy road assist function as the function of the control unit 204. Thus, with the driver assist apparatus 12, it is possible to aim at the safety of the user based on information acquired from another vehicle and a roadside device in a case where the adverse condition is satisfied.

In the driver assist apparatus 12 in the eighth embodiment, the CPU 20 executes at least one of increasing the notification frequency and advancing the notification timing as a change of the notification level in providing instructions for settings to the snowy road assist function. Thus, with the driver assist apparatus 12, when at least one of increasing the notification frequency and advancing the notification timing is performed in a situation in which the adverse condition is satisfied, it is possible to increase the safety of the user in a situation in which the adverse condition is satisfied.

In the driver assist apparatus 12 in the eighth embodiment, the CPU 20 is capable of providing instructions to disable the driver assist functions (second function group) that use the sonars 134 to exercise the functions of the snowy road assist function in providing instructions for settings to the snowy road assist function as the function of the control unit 204. Thus, with the driver assist apparatus 12, the driver assist functions included in the second function group do not activate in a situation in which the adverse condition is satisfied, so it is possible to suppress activation of the driver assist functions due to erroneous detection of the sonars 134.

In the driver assist apparatus 12 in the eighth embodiment, the CPU 20 is capable of providing instructions to disable the driver assist functions (third function group) that use a recognition image from the front camera 130 to exercise the functions in providing instructions for settings to the snowy road assist function as the function of the control unit 204. Thus, with the driver assist apparatus 12, the driver assist functions included in the third function group do not activate in a situation in which the adverse condition is satisfied, so it is possible to suppress activation of the driver assist functions based on an unclear recognition image from the front camera 130.

In the eighth embodiment, a case where the adverse condition is satisfied is assumed as at least one of a case where the weather outside the vehicle is snowy and a case where the condition of a road around the vehicle 10 is a snow cover condition; however, the case where the adverse condition is satisfied is not limited thereto. The case where the adverse condition is satisfied may be set as needed to, for example, a case where the weather outside the vehicle is rainy, a case where the condition of a road is frozen, or the like.

In the eighth embodiment, the CPU 20 is capable of performing both lowing the operating intensity and advancing the activation timing as a change of the assist level; however, the configuration is not limited thereto. The CPU 20 may be capable of only any one of both. Specifically, the CPU 20 may be capable of performing only lowering the operating intensity or only advancing the activation timing as a change of the assist level.

In the eighth embodiment, the communication function is capable of performing communication between the vehicle 10 and each of another vehicle and a roadside device; however, the configuration is not limited thereto. The communication function may be capable of performing only communication with any one of both. Specifically, the communication function may be capable of performing only communication between another vehicle and the vehicle 10 or only communication between a roadside device and the vehicle 10.

In the eighth embodiment, the CPU 20 is capable of performing both increasing the notification frequency and advancing the notification timing as a change of the notification level; however, the configuration is not limited thereto. The CPU 20 may be capable of only any one of both. Specifically, the CPU 20 may be capable of performing only increasing the notification frequency or only advancing the notification timing as a change of the notification level.

In the eighth embodiment, LDA and PCS are illustrated as the driver assist functions of which the assist levels are allowed to be changed; however, examples of the driver assist functions are not limited thereto. For example, the driver assist functions may include not only LDA and PCS but also other driver assist functions, such as OAA, AES, and ADTJA.

In the eighth embodiment, PKSB(O) and all-around PKSB are illustrated as the driver assist functions that use the sonars 134 to exercise the functions; however, examples of the driver assist functions are not limited thereto. For example, the driver assist functions may include not only PKSB(O) and all-around PKSB but also other driver assist functions, such as PVM, SIM, and MTM.

In the eighth embodiment, ACC and PDA are illustrated as the driver assist functions that use a recognition image from the front camera 130 to exercise the functions; however, example of the driver assist functions are not limited thereto. For example, the driver assist functions may include not only ACC and PDA but also other driver assist functions, such as LCA and LTA.

In the eighth embodiment, the CPU 20 is capable of providing instructions to disable the driver assist functions that use a recognition image from the front camera 130 to exercise the functions in providing instructions for settings to the snowy road assist function. However, the configuration is not limited thereto. The driver assist functions just need to use a recognition image from a camera that recognizes an area around the vehicle 10 to exercise the functions. Therefore, the driver assist functions may be driver assist functions that activate based on a recognition image from the rear camera 131 that recognizes an area behind the vehicle 10. Specifically, the driver assist functions may be RCD, RCTA, and the like.

In the eighth embodiment, the CPU 20 may be capable of collectively providing instructions to disable at least one of the plurality of driver assist functions included in the second function group and the plurality of driver assist functions included in the third function group on the setting screen (2B) shown in FIG. 16B.

### Ninth Embodiment

Next, a ninth embodiment will be described. The ninth embodiment is a mode related to a sport mode that collectively disables a plurality of grouped driver assist functions.

In the ninth embodiment, the plurality of grouped driver assist functions that can be collectively disabled is all the driver assist functions including at least one of pre-crash safety (PCS) and secondary collision brake (SCB). In the sport mode of the ninth embodiment, the user is able to collectively provide instructions to disable, in a specific place, a plurality of driver assist functions including driver assist functions needed at the time of driving in a street. Examples of the specific place include a circuit, a driving school, a private land with control of access, and a place set in advance by the user. For example, a driver may not want intervention to driver's driving operation or limitations on the speed with a speed limiter at the time of driving in motor sports taking place in a circuit. In contrast, in the sport mode of the present embodiment, when the location information of the vehicle indicates a specific place, the user is able to collectively disable the plurality of driver assist functions, so it is possible to improve the convenience of the user who intends to disable the driver assist functions.

The acquisition unit 200 of the present embodiment acquires information on the current location from the location information of the vehicle. The acquisition unit 200 specifically acquires information on the current location of the vehicle by using the GPS and map data 41 of the multimedia device 14. Information on the current location, acquired by the acquisition unit 200, is, for example, information indicating a circuit where cancellation of the speed limiter is possible. Information on the current location, acquired by the acquisition unit 200, is not limited to a circuit and may be a driving school, a private land with control of access, a place set in advance by the user, or the like. The acquisition unit 200 may be configured to use the GPS of the mobile terminal 15. In this case, the acquisition unit 200 acquires location information from the mobile terminal 15 via the wireless communication I/F 23.

The restricting unit 202 of the present embodiment allows a plurality of driver assist functions to be collectively disabled based on the information on the current location, acquired by the acquisition unit 200. When the restricting unit 202 allows a plurality of driver assist functions to be collectively disabled, the restricting unit 202 suggests a driver change the settings of the driver assist functions through display of the multimedia device 14 (see FIG. 17B). A plurality of driver assist functions that the restricting unit 202 allows to be collectively disabled is some or all of the above-described driver assist functions.

FIG. 17A is a view that shows an example of a setting screen for setting driver assist functions by group according to the ninth embodiment. Hereinafter, differences from FIG. 2 will be described below. The remaining configuration is similar to that of FIG. 2, so the detailed description thereof is omitted.

In the example of FIG. 17A, when the collective setting button (a3) is depressed in a state where the description of the sport mode is shown in the display area (a2), instructions to disable the settings of all the driver assist functions are collectively provided to the driver assist functions, and are reflected as collective setting of the sport mode. when the current location of the vehicle is not a circuit, the collective setting button (a3) is displayed as grayed out (not shown). When the collective setting button (a3) is displayed as grayed out, collective setting of the sport mode is not reflected even when the collective setting button (a3) is depressed. At the time when the collective setting button (a3) is depressed, collective setting of the sport mode may be reflected, and the speed limiter may be cancelled.

FIG. 17B is a view that shows an example of a suggestion screen making a suggestion to set driver assist functions by group according to the ninth embodiment. A suggestion area (i1) of the present embodiment is displayed on the multimedia device 14 at the time when entry of the vehicle into a circuit is detected. The suggestion area (i1) may be displayed in an expanded view by switching the view of the setting area (b1) or may be displayed in a superimposed manner. In the illustrated screen, in the suggestion area (i1), a suggestion to set the sport mode, an affirmation button (i2) to indicate affirmation to the suggestion, and a negation button (i3) to indicate negation to the suggestion are shown. Here, when the affirmation button (i2) is depressed, a process similar to that in a case where the collective setting button (a3) is depressed in a state where the sport mode is displayed in the display area (a2) is executed. When the negation button (i3) is depressed, the settings of the driver assist functions are not changed.

### Flow of Control

FIG. 17C is a flowchart that illustrates the flow of a driver assist process serving as a driver assist method executed by the driver assist apparatus 12 according to the ninth embodiment. The driver assist process of the present embodiment is, for example, a process that is executed at the time when the driver is driving the vehicle. The driver assist process may be configured to be executed after it is confirmed that the vehicle is stopped, for example, when the vehicle enters a circuit and is parked.

In step S900, the CPU 20 acquires location information of the vehicle from the GPS of the multimedia device 14.

In step S901, the CPU 20 determines whether the place indicated by the location information is a circuit. The CPU 20 specifically makes a determination by using the location information acquired in step S900 and the map data 41. When the CPU 20 determines that the place indicated by the location information is a circuit (YES in step S901), the process proceeds to step S902. On the other hand, when the CPU 20 determines that the place indicated by the location information is not a circuit (NO in step S901), the process ends the driver assist process.

In step S902, the CPU 20 suggests the driver collectively turn off all the driver assist functions.

In step S903, the CPU 20 determines whether there are instructions for a change. The CPU 20 specifically makes a determination based on instructions from the driver in response to the suggestion of step S902. When the CPU 20 determines that there are instructions for a change (YES in step S903), the process proceeds to step S904. On the other hand, when the CPU 20 determines that there are no instructions for a change (NO in step S903), the CPU 20 ends the driver assist process.

In step S904, the CPU 20 changes the settings of the driver assist functions. The CPU 20 specifically collectively disables all the driver assist functions. Then, the CPU 20 ends the driver assist process.

The driver assist apparatus 12 according to the ninth embodiment allows all the driver assist functions to be collectively disabled when the location information of the vehicle indicates a circuit. For this reason, with the driver assist apparatus 12 of the present embodiment, in a specific place, such as a circuit, it is possible to omit driver's effort to individually disable the plurality of driver assist functions that intervene driver's driving operation. With the driver assist apparatus 12 of the present embodiment, since it is possible to collectively disable all the driver assist functions, the driver is able to drive the vehicle without receiving the influence of the driver assist functions. Then, with the driver assist apparatus 12 of the present embodiment, it is possible to suppress the operations of the driver assist functions in a place like a circuit where there is no speed limit.

When the vehicle enters a circuit, the driver assist apparatus 12 according to the ninth embodiment suggests the driver collectively disable all the driver assist functions. For this reason, with the driver assist apparatus 12 of the present embodiment, it is possible to inform the driver of coming to a place where two or more of the driver assist functions are allowed to be disabled.

The driver assist apparatus 12 according to the ninth embodiment includes at least one of PCS and SCB in the driver assist functions allowed to be disabled. For this reason, with the driver assist apparatus 12 of the present embodiment, driver assist functions useful at the time when the vehicle drives in a street can be disabled.

The driver assist apparatus 12 according to the ninth embodiment collectively disables all the driver assist functions through collective setting of the sport mode. However, the configuration is not limited thereto. The driver assist apparatus 12 may collectively disable the driver assist functions other than some of the driver assist functions. For this reason, with the driver assist apparatus 12 of the present embodiment, the driver is able to drive the vehicle only with the minimum driver assist functions.

### Tenth Embodiment

Next, a tenth embodiment will be described. The tenth embodiment is a mode related to a support-off mode that collectively disables a plurality of grouped driver assist functions.

In the tenth embodiment, the plurality of grouped driver assist functions that are allowed to be collectively disabled is all the driver assist functions including at least one of pre-crash safety (PCS) and secondary collision brake (SCB). In the support-off mode of the tenth embodiment, when the driver does not need a plurality of driver assist functions, the user is able to collectively provide instructions to disable the plurality of driver assist functions including driver assist functions needed at the time of driving in a street. Therefore, in the support-off mode, when, for example, the user who has a driving skill and that can be acquired from driver information intends to disable driver assist functions, it is possible to improve the convenience of the user.

The acquisition unit 200 of the present embodiment acquires information on the driver. The acquisition unit 200 specifically acquires a state of driver's steering operation that is the condition of the driver from the driver monitor camera 110 that is a driver monitor. The state of driver's steering, acquired by the acquisition unit 200, is, for example, whether the driver is feeling that the steering support performed by the driver assist functions, which is a driver's driving preference, is uncomfortable, whether a hands-off function is being used, or the like. The acquisition unit 200 may acquire license information

(such as class 1 driver's license, class 2 driver's license, and motorsports license) owned by a driver, which is the proficiency of the driver, by capturing a driver's license or the like with the driver monitor camera 110.

The acquisition unit 200 acquires information on the driver through a digital key for unlocking the vehicle. The acquisition unit 200 acquires, for example, a history of settings of driver assist functions, that is, driver's driving preferences, or license information owned by the driver. The history of settings of driver assist functions or the license information is stored in the cloud server 16 in association with the digital key. The information on the driver, acquired by the acquisition unit 200, may be a driving history related to driver's driving, acquired from various sensors included in the sensor units 50, 51, 52.

The restricting unit 202 of the present embodiment allows a plurality of driver assist functions to be collectively disabled based on information on the driver, acquired by the acquisition unit 200. When the restricting unit 202 allows a plurality of driver assist functions to be collectively disabled, the restricting unit 202 suggests a driver change the settings of the driver assist functions through display of the multimedia device 14 (see FIG. 18B). A plurality of driver assist functions that the restricting unit 202 allows to be collectively disabled is some or all of the above-described driver assist functions.

FIG. 18A is a view that shows an example of a setting screen for setting driver assist functions by group according to the tenth embodiment. Hereinafter, differences from FIG. 2 will be described below. The remaining configuration is similar to that of FIG. 2, so the detailed description thereof is omitted.

In the example of FIG. 18A, in the display area (a2), "manual driving mode" that becomes selectable based on driver information is allowed to be switched between an on state and an off state with a first setting button (a21) for switching to the on state or the off state, and "passenger transport mode" that becomes selectable based on driver information is allowed to be switched between an on state and an off state with a second setting button (a22) to switch to the on state or the off state. Here, the "manual driving mode" is a mode to collectively disable PCS and SCB. The "manual driving mode" is allowed to be selected when it is determined that the driver prefers driving without a plurality of driver assist functions (manual driving). The "passenger transport mode" is a mode to collectively disable all the driver assist functions. The "passenger transport mode" is allowed to be selected when the driver owns a license for passenger transport.

Then, the description of the support-off mode is shown in the display area (a2). When the collective setting button (a3) is depressed in a state where the first setting button (a21) is on, instructions to disable each of the settings of the plurality of driver assist functions that are to be disabled in this mode are collectively provided to the driver assist functions. In other words, collective setting of the support-off mode is reflected. The same applies when the collective setting button (a3) is depressed in a state where the second setting button (a22) is on. When both the first setting button (a21) and the second setting button are on, the collective setting button (a3) may be displayed as grayed out to not reflect collective setting of the support-off mode even when the collective setting button (a3) is depressed. The "manual driving mode" and the "passenger transport mode" are examples of a plurality of grouped driver assist functions that are allowed to be collectively disabled.

In the example of FIG. 18A, the second setting button (a22) is displayed as grayed out. When, for example, the driver has no license for passenger transport, the second setting button (a22) is displayed as grayed out. When the second setting button (a22) is displayed as grayed out, the second setting button (a22) cannot be turned on. When it is determined that the driver does not prefer manual driving, the first setting button (a21) is displayed as grayed out, and the first setting button (a21) cannot be turned on. When both the first setting button (a21) and the second setting button (a22) are displayed as grayed out, the collective setting button (a3) may be displayed as grayed out to not reflect collective setting of the support-off mode even when the collective setting button (a3) is depressed.

FIG. 18B is a view that shows an example of a suggestion screen making a suggestion to set driver assist functions by group according to the tenth embodiment. A suggestion area (j1) of the present embodiment is displayed on the multimedia device 14 when it is determined that the driver owns a license for passenger transport. The suggestion area (j1) may be displayed in an expanded view by switching the view of the setting area (b1) or may be displayed in a superimposed manner. In the illustrated screen, in the suggestion area (j1), a suggestion to set the passenger transport mode of the support-off mode, an affirmation button (j2) to indicate affirmation to the suggestion, and a negation button (j3) to indicate negation to the suggestion are shown. Here, when the affirmation button (j2) is depressed, a process similar to that in a case where the support-off mode is displayed in the display area (a2) and the collective setting button (a3) is depressed in a state where the passenger transport mode is on is executed. When the negation button (j3) is depressed, the settings of the driver assist functions are not changed.

### Flow of Control

FIG. 18C is a flowchart that illustrates the flow of a driver assist process serving as a driver assist method executed by the driver assist apparatus 12 according to the tenth embodiment. The driver assist process of the present embodiment is, for example, a process that is executed at the time when the driver is driving the vehicle. The driver assist process may be configured to be executed after it is confirmed that the vehicle is stopped, for example, when the vehicle is parked. In step S1000 (described later), when driver information indicating that a driver needs support of the driver assist functions is acquired, the driver assist process of the present embodiment may be ended or a plurality of driver assist functions may be forcibly enabled.

In step S1000, the CPU 20 determines whether driver's license information is acquired from a digital key. When the CPU 20 determines that the driver's license information is acquired (YES in step S1000), the process proceeds to step S1001. On the other hand, when the CPU 20 determines that the driver's license information is not acquired (NO in step S1000), the process proceeds to step S1003.

In step S1001, when the CPU 20 determines whether the driver owns a license for passenger transport. When the CPU 20 determines that the driver owns the license (YES in step S1001), the process proceeds to step S1002. On the other hand, when the CPU 20 determines that the driver does not own the license (NO in step S1001), the process proceeds to step S1003.

In step S1002, the CPU 20 suggests the driver collectively turn off all the driver assist functions. Then, the CPU 20 proceeds to step S1006.

In step S1003, the CPU 20 determines whether the state of driver's steering operation is acquired from the driver monitor camera 110. When the CPU 20 determines that the state of steering operation is acquired (YES in step S1003), the process proceeds to step S1004. On the other hand, when the CPU 20 determines that the state of driver's steering operation is not acquired (NO in step S1004), the CPU 20 ends the driver assist process.

In step S1004, the CPU 20 determines whether the driver prefers manual driving. The CPU 20 specifically determines whether to prefer manual driving from the state of driver's steering operation, acquired in step S1003. When the CPU 20 determines that the driver prefers manual driving (YES in step S1004), the process proceeds to step S1005. On the other hand, when the CPU 20 determines that the driver does not prefer manual driving (NO in step S1004), the CPU 20 ends the driver assist process.

In step S1005, the CPU 20 suggests the driver collectively turn off PCS and SCB.

In step S1006, the CPU 20 determines whether there are instructions for a change. The CPU 20 specifically makes a determination based on instructions from the driver in response to the suggestion of step S1002 or step S1005. When the CPU 20 determines that there are instructions for a change (YES in step S1006), the process proceeds to step S1007. On the other hand, when the CPU 20 determines that there are no instructions for a change (NO in step S1006), the CPU 20 ends the driver assist process.

In step S1007, the CPU 20 changes the settings of the driver assist functions. The CPU 20 specifically collectively disables the driver assist functions, suggested in step S1002 or step S1005. Then, the CPU 20 ends the driver assist process.

The driver assist apparatus according to the tenth embodiment allows a plurality of driver assist functions to be collectively disabled based on the state of driver's steering operation, acquired from the driver monitor camera 110, or the driver's license information stored in association with a digital key. For this reason, with the driver assist apparatus of the present embodiment, it is possible to omit user's effort to individually disable the plurality of driver assist functions that are not needed driver by driver. With the driver assist apparatus of the present embodiment, it is possible to collectively disable a plurality of driver assist functions according to driver's driving preferences or proficiency that can be determined from a video. Then, with the driver assist apparatus of the present embodiment, it is possible to collectively disable a plurality of driver assist functions according to driver's driving preferences or proficiency that can be determined from information stored in the past.

The driver assist apparatus according to the tenth embodiment suggests the driver collectively disable a plurality of driver assist functions based on the state of driver's steering operation or driver's license information. For this reason, with the driver assist apparatus of the present embodiment, when the driver meets a predetermined condition, it is possible to prompt the driver to collectively disable a plurality of driver assist functions not needed for the driver.

The driver assist apparatus according to the tenth embodiment includes at least one of PCS and SCB in the driver assist functions allowed to be disabled. For this reason, with the driver assist apparatus of the present embodiment, driver assist functions useful at the time when the vehicle drives in a street can be disabled.

The driver assist apparatus according to the tenth embodiment is capable of collectively disable all the driver assist functions when the driver owns a license for passenger transport. Therefore, with the driver assist apparatus of the present embodiment, a driver with a high proficiency is able to drive the vehicle without receiving the influence of the driver assist functions.

### Eleventh Embodiment

Next, an eleventh embodiment will be described. As described in the above embodiments, the vehicle 10 is capable of individually switching a plurality of driver assist functions between an enabled state and a disabled state through collective setting. At this time, if the driver forgets setting details of the driver assist functions, set before, the driver may be bewildered of non-activation of predetermined driver assist functions when the vehicle 10 is driving. The vehicle 10 according to the eleventh embodiment is equipped with an informing function that informs a driver of the current setting details of the driver assist functions set for the vehicle 10 before the vehicle 10 drives.

The driver assist apparatus 12 in the eleventh embodiment has the functional configuration shown in FIG. 7 as in the case of the first embodiment.

In the eleventh embodiment, the group display control unit 206 informs the driver of the current setting details of the driver assist functions set for the vehicle 10 before the vehicle 10 drives. The group display control unit 206 is an example of an "informing unit". Here, the phrase "before the vehicle 10 drives" means timing before the vehicle 10 stopped in a predetermined parking space begins to start forward or backing up. In the eleventh embodiment, the group display control unit 206 displays the current setting details on the multimedia device 14 before the shift position of the vehicle 10 is changed to R range or D range. More specifically, the group display control unit 206 displays the current setting details on the multimedia device 14 immediately after the door of the vehicle 10 is unlocked and a predetermined system that makes it possible to perform display on the multimedia device 14 starts up (for example, IG-ON).

In the eleventh embodiment, the control unit 204 acquires, from the ROM 21, the setting information indicating the setting details of the driver assist functions set for the vehicle 10, based on the fact that the door of the vehicle 10 is unlocked. Then, the control unit 204 provides instructions for settings to the driver assist functions with the acquired setting information and reflects the settings in the driver assist functions.

Here, in the eleventh embodiment, the ROM 21 has a configuration area and a comparison area. The configuration area stores setting information indicating the setting details of the driver assist functions set for the vehicle 10. The comparison area stores setting information indicating the setting details of the driver assist functions when driving in the past (past setting details), to be compared with the current setting details shown in the setting information stored in the configuration area. The time when driving in the past is an example of a "predetermined time point in the past". The control unit 204 updates the details stored in the comparison area by writing the setting information stored in the configuration area to the comparison area at the time when the vehicle 10 ends driving. At the time when the vehicle 10 ends driving, the control unit 204 updates the details stored in the configuration area by writing the setting information indicating the setting details of the driver assist functions set during the current driving to the configuration area.

Hereinafter, a display example of the multimedia device 14 and the flow of control in the eleventh embodiment will be described in order of a first mode, a second mode, and a third mode.

### First Mode

FIG. 19A is a first example of a confirmation screen (s110) showing current setting details of driver assist functions. The confirmation screen (s110) shown in FIG. 19A has a first area (s111) and a second area (s112). The first area (s111) shows current setting details. The second area (s112) shows differences between the past setting details and the current setting details.

The fact that ACC is on, ERT is off, AHB is on, AHS is on, and the like is shown as the current setting details in the first area (s111) shown in FIG. 19A. The fact that SEA having been on when driving in the past is off in the current setting details, or the like, is shown as the differences in the second area (s112).

Here, a return button (s113) for returning the setting details of the driver assist functions set for the vehicle 10 to the past setting details is displayed in the second area (s112). When the return button (s113) is depressed, instructions to return the setting details of the driver assist functions to the past setting details, and the display content of the first area (s111) is changed to show the past setting details.

Next, the flow of control of the first mode will be described. FIG. 19B is a first flowchart that illustrates the flow of a driver assist process serving as a driver assist method executed by the driver assist apparatus according to the eleventh embodiment. The driver assist process of the eleventh embodiment is executed based on, for example, the fact that the door of the vehicle 10 is unlocked.

In step S1100, the CPU 20 acquires the setting information from each of the configuration area and the comparison area in the ROM 21.

In step S1101, the CPU 20 provides instructions for settings to the driver assist functions with the acquired setting information of the configuration area and reflects the settings in the driver assist functions.

In step S1102, the CPU 20 shows the setting details of the setting information of the configuration area on the multimedia device 14 as the current setting details.

In step S1103, the CPU 20 determines whether the two pieces of setting information acquired in step S1100 have the same details. When the two pieces of setting information have the same details, the process ends. When the two pieces of setting information do not have the same details, the process proceeds to step S1104.

In step S1104, the CPU 20 shows differences between the past setting details and the current setting details on the multimedia device 14.

In step S1105, the CPU 20 determines whether predetermined operation to the vehicle 10 is received. The predetermined operation is to, for example, depress the return button (s113). When the predetermined operation is received, the process proceeds to step S1106. When the predetermined operation is not received, the process ends.

In step S1106, the CPU 20 provides instructions for settings to the driver assist functions with the setting information of the comparison area and reflects the settings in the driver assist functions.

In step S1107, the CPU 20 shows the setting details of the setting information of the comparison area on the multimedia device 14 as the current setting details. Second Mode

FIG. 19C is a second example of a confirmation screen (s110) showing current setting details of driver assist functions. The confirmation screen (s110) shown in FIG. 19C has a first area (s111) and a third area (s114). The first area (s111) shows current setting details. The third area (s114) shows driver assist functions that are off, that is, the disabled driver assist functions. The display content of the first area (s111) shown in FIG. 19C is similar to that of FIG. 19A.

The fact that PCS, FCTA, or the like are off is shown in the third area (s114) shown in FIG. 19C. A switch button (s115) for turning on specific driver assist functions that are off, that is, switching the specific driver assist functions to an enabled state, is displayed in the third area (s114). When the switch button (s115) is depressed, instructions are provided to the driver assist functions to switch the specific driver assist functions to an on state, and the display content of the first area (s111) is changed to the one that the specific driver assist functions are on. The specific driver assist functions are, for example, driver assist functions that assist in collision avoidance between the vehicle 10 and an object, such as PCS and FCTA.

Next, the flow of control of the second mode will be described. FIG. 19D is a second flowchart that illustrates the flow of a driver assist process serving as a driver assist method executed by the driver assist apparatus according to the eleventh embodiment.

In step S1110, the CPU 20 acquires the setting information from the configuration area in the ROM 21.

In step S1111, the CPU 20 provides instructions for settings to the driver assist functions with the acquired setting information of the configuration area and reflects the settings in the driver assist functions.

In step S1112, the CPU 20 displays the setting details of the setting information of the configuration area on the multimedia device 14 as the current setting details.

In step S1113, the CPU 20 determines whether the specific driver assist functions are disabled. When the specific driver assist functions are disabled, the process proceeds to step S1114. When the specific driver assist functions are enabled, the process ends.

In step S1114, the CPU 20 shows the fact that the specific driver assist functions are disabled, on the multimedia device 14.

In step S1115, the CPU 20 determines whether specific operation to the vehicle 10 is received. The specific operation is to, for example, depress the switch button (s115). When the specific operation is received, the process proceeds to step S1116. When the specific operation is not received, the process ends.

In step S1116, the CPU 20 provides instructions to the driver assist functions to switch the specific driver assist functions to an enabled state and reflects the enabled state in the specific driver assist functions.

In step S1117, the CPU 20 shows the setting details in which the specific driver assist functions are enabled, on the multimedia device 14 as current setting details. Third Mode

FIG. 19E is a third example of a confirmation screen (s110) showing current setting details of driver assist functions. The confirmation screen (s110) shown in FIG. 19E has a first area (s111) that shows current setting details. The current setting details of driver A are shown in the first area (s111) in FIG. 19E. In this way, in the third mode, among setting details of driver assist functions of a plurality of drivers registered in advance, setting details corresponding to a driver in the vehicle 10 are shown. The display content of the first area (s111) shown in FIG. 19E is similar to that of FIG. 19A.

Next, the flow of control of the third mode will be described. FIG. 19F is a third flowchart that illustrates the flow of a driver assist process serving as a driver assist method executed by the driver assist apparatus according to the eleventh embodiment.

In step S1120, the CPU 20 acquires key information of a smart key used to unlock the door of the vehicle 10.

In step S1121, the CPU 20 acquires, from the ROM 21, the setting information corresponding to the acquired key information. In the third mode, a plurality of pieces of setting information respectively associated with a plurality of pieces of key information of smart keys is stored in the ROM 21. In other words, in the third mode, setting information associated with each of the pieces of key information of the smart keys is stored in the ROM 21 as setting information indicating setting details of the driver assist functions of a corresponding one of the drivers.

In step S1122, the CPU 20 provides instructions for settings to the driver assist functions with the acquired setting information and reflects the settings in the driver assist functions.

In step S1123, the CPU 20 shows the setting details of the acquired setting information on the multimedia device 14 as the current setting details of the driver in the vehicle 10. The CPU 20 may execute the processes of steps shown in FIG. 19B or FIG. 19D as a process from step S1123.

As described above, in the driver assist apparatus 12 in the eleventh embodiment, the CPU 20 is capable of individually switching a plurality of driver assist functions in the vehicle 10 between an enabled state and a disabled state as the function of the control unit 204. Then, the CPU 20 informs the driver of the current setting details of the driver assist functions set for the vehicle 10 before the vehicle 10 drives. Thus, with the driver assist apparatus 12, it is possible to, before the vehicle 10 drives, cause the driver to grasp the current setting details by informing the driver of the current setting details of the driver assist functions before the vehicle 10 drives.

In the driver assist apparatus 12 in the eleventh embodiment, the CPU 20 informs the driver of differences between the past setting details and the current setting details when the setting details different from the current setting details have been set when driving in the past. The case where the past setting details differ from the current setting details is, for example, a case where the driver stops driving the vehicle 10 in a state where the driver has changed the setting details of the driver assist functions during the last driving. In this case, the CPU 20, when the vehicle 10 stops driving, writes setting information indicating the setting details before change, stored in the configuration area, to the comparison area, and writes setting information indicating the setting details after change to the configuration area, thus updating the details stored in each area. With the above configuration, with the driver assist apparatus 12, it is possible to, before the vehicle 10 drives, cause the driver to grasp differences between the past setting details and the current setting details by informing the driver of the differences before the vehicle 10 drives.

In the driver assist apparatus 12 in the eleventh embodiment, when the CPU 20 receives predetermined operation to the vehicle 10, the CPU 20 provides instructions to change the setting details to the past setting details. Thus, with the driver assist apparatus 12, it is possible to return the setting details of the driver assist functions to the past setting details by providing instructions to change the setting details to the past setting details.

In the driver assist apparatus 12 in the eleventh embodiment, when, of a plurality of driver assist functions, the specific driver assist functions are disabled, the CPU 20 informs the driver, before the vehicle 10 drives, that the specific driver assist functions are disabled. Thus, with the driver assist apparatus 12, it is possible to, before the vehicle 10 drives, cause the driver to grasp that the specific driver assist functions do not activate by informing the driver, before the vehicle 10 drives, that the specific driver assist functions are disabled.

In the driver assist apparatus 12 in the eleventh embodiment, the specific driver assist functions are driver assist functions that assist in collision avoidance between the vehicle 10 and an object. Thus, with the driver assist apparatus 12, it is possible to, before the vehicle 10 drives, cause the driver to grasp that the driver assist functions do not activate by informing the driver, before the vehicle 10 drives, that the driver assist functions that assist in collision avoidance are disabled.

In the driver assist apparatus 12 in the eleventh embodiment, when the CPU 20 receives specific operation to the vehicle 10, the CPU 20 provides instructions to switch the specific driver assist functions to an enabled state. Thus, with the driver assist apparatus 12, it is possible to change the setting details of the driver assist functions to details in which the specific driver assist functions are enabled by providing instructions to switch the specific driver assist functions to an enabled state.

In the driver assist apparatus 12 in the eleventh embodiment, from among the setting details of driver assist functions of a plurality of drivers registered in advance, the CPU 20 provides instructions for the setting details corresponding to the driver in the vehicle 10 to the plurality of driver assist functions. Thus, with the driver assist apparatus 12, it is possible to reflect setting details of driver assist functions, corresponding to each driver, by providing instructions for the setting details corresponding to the driver in the vehicle 10 to a plurality of the driver assist functions.

In the eleventh embodiment, displaying various pieces of information on the multimedia device 14 has been described as an example of the informing function; however, an informing method with the informing function is not limited thereto. For example, the informing method with the informing function may be output of various pieces of information from a speaker mounted on the vehicle 10 or may be both display of various pieces of information on the multimedia device 14 and output of various pieces of information from the speaker.

In the eleventh embodiment, PCS and FCTA have been described as examples of the "specific driver assist function"; however, examples of the "specific driver assist function" are not limited thereto. Examples of the "specific driver assist function" may include another driver assist function, such as LDA, OAA, and AES, in addition to PCS and FCTA.

In the eleventh embodiment, the CPU 20 may prohibit the vehicle 10 from driving until predetermined confirmation operation by a driver is received through the confirmation screen (s110). Thus, it is possible to reduce a situation in which the vehicle 10 drives in a state where the driver forgets the setting details of the driver assist functions set before.

In the eleventh embodiment, setting information indicating the setting details of driver assist functions set for the vehicle 10 and setting information indicating the past setting details of driver assist functions to be compared with the current setting details are stored in the ROM 21; however, the configuration is not limited thereto. For example, these pieces of setting information may be stored in an external server such as the cloud server 16.

### Twelfth Embodiment

Next, a twelfth embodiment will be described. The twelfth embodiment is a mode related to a notification unnecessary driving mode that collectively disables notification-related functions (notification functions) among a plurality of grouped driver assist functions. In the present embodiment, the notification unnecessary driving mode group is assumed to be applied as, for example, a group associated a group (sub-group) or a specific group for putting restrictions on a group, to groups, such as the above-described safe setting group and other chauffeur mode group and the like. The chauffeur mode is a mode that sets driver assist functions to provide further comfortable transportation to a fellow passenger.

In the twelfth embodiment, when the notification unnecessary driving mode group is selected, the restricting unit 202 acquires the notification functions from among the driver assist functions included in the designated group and collectively disables the notification functions. The driver assist functions included in the designated group are driver assist functions of the group in which the settings have been already reflected through instructions. Examples of the group in which the settings haven been already reflected include the case of the safe setting of the second embodiment. When the safe setting has been already set, the settings of AVS, FHL, DMC, and SWS have been reflected as the notification functions. In this case, these notification functions of the already-set safe setting are acquired and are collectively disabled. In other words, by selecting the notification unnecessary driving mode, a setting change is reflected such that the settings of the notification functions included in the already-set group are collectively disabled. Determination to cancel the notification unnecessary driving mode may be received from a user. When cancellation is approved, the notification functions that have been disabled are controlled to return to enabled settings. The notification functions to be disabled in the present embodiment may be a case by driver assist function or by detailed function included in a driver assist function. The notification unnecessary driving mode group overwrites to disable only the notification functions for settings of the already-set group. In other words, the notification unnecessary driving mode is a mode to partially disable the driver assist functions. When the restricting unit 202 disables the notification functions, PCS that is a function concerned with collision avoidance assist, SCB that is a function concerned with measures for a vehicle that bumps into the rear of a stopped vehicle, and DMS that is a function concerned with determination as to the condition of a driver are excluded from targets to be disabled and maintained in an enabled state, while the notification functions of the other driver assist functions are set as targets to be disabled.

At the time when the notification unnecessary driving mode is selected, the restricting unit 202 acquires occupant information and a driving purpose and, when a suggestion condition for the notification unnecessary driving mode related to an occupant or a driving purpose is satisfied, makes a suggestion to select the notification unnecessary driving mode. Any one of the occupant information and the driving purpose may be acquired. Examples of the occupant information include a detection result that the registered driver gets in and a detection result that a passenger gets into a rear seat. When the occupant information is used for the suggestion condition, it is assumed that the suggestion condition is satisfied when one or both of these detection results are acquired. The registered driver is, for example, a driver registered as a target of the notification unnecessary driving mode in advance and is a driver that provides service by driving. For example, a select screen for the driving purpose is displayed on the multimedia device 14, and is selected by input of the driver. Examples of selectable items of the driving purpose include shopping, commutation, sightseeing, pickup, and taking for a drive. The types of driving purpose are classified into driving of ordinary transportation purpose, such as shopping and commutation, and driving accompanying service to a fellow passenger, such as sightseeing, pickup, and taking for a drive. Therefore, when the driving purpose is used for the suggestion condition, it is assumed that the suggestion condition is satisfied when driving accompanying service is selected as a driving purpose. Setting such a condition is because a case where a driver feels uncomfortable if an alarm sounds as in the case of an ordinary driver although a professional driver is driving. Such a condition is because, in a vehicle that aims at transportation accompanying service to a passenger, the passenger may feel uncomfortable if an alarm sounds as in the case of a general passenger vehicle.

FIG. 20A is an example of a screen that suggests the notification unnecessary driving mode. FIG. 20A is an example of a case where a suggestion alert (sb 1) is shown in a superimposed manner on the setting screen (2A). The notification functions are collectively disabled when the user depresses a suggestion execute button (sb2). A detailed screen of the already-set driver assist functions at current point in time when a check details button (sb3) is depressed. When a cancel button (sb4) is depressed, disabling the notification functions due to the notification unnecessary driving mode is not reflected.

FIG. 20B is an example of a setting screen for driver assist functions concerned with disabling of the notification functions. On the setting screen (sb5), notification functions to be disabled are shown in a disable area (sb6), and driver assist functions allowed for setting are shown in an enable area (sb7). The setting of each of the driver assist functions shown in the enable area (sb7) is allowed to be changed with a setting button. When a button (sb8) of any one of the driver assist functions is depressed, it is possible to shift the view to a detailed screen by detailed function.

FIG. 20C is an example of a detailed screen by detailed function concerned with disabling of the notification function. On the detailed screen (sb9), of the driver assist functions, the detailed function of the notification function to be disabled is shown in a disable area (sb10), and detailed functions allowed for setting are shown in an enable area (sb11). FIG. 20C is an example of PKSB and shows that obstacle approach alert corresponding to the notification function by detailed function of PKSB is disabled. The setting of each of the detailed functions shown in the enable area (sb11) is allowed to be changed with a setting button. The view is allowed to be switched to the view of the type of assist level with right and left switch buttons (sb12). FIG. 20B and FIG. 20C are examples of a mode in which the settings of other functions other than the notification-related functions are allowed to be changed.

### Flow of Control

Next, the flow of control of the twelfth embodiment will be described. FIG. 20D is a flowchart that illustrates flow of a driver assist process serving as a driver assist method according to the twelfth embodiment.

In step S1200, the CPU 20 acquires occupant information and a driving purpose.

In step S1202, the CPU 20 determines whether the suggestion condition of the notification unnecessary driving mode related to occupant or driving purpose is satisfied based on the occupant information and the driving purpose. When the suggestion condition is satisfied, the process proceeds to step S1204. When the suggestion condition is not satisfied, the process ends.

In step S1204, the CPU 20 makes a suggestion to select the notification unnecessary driving mode.

In step S1206, the CPU 20 acquires operation related to setting of the notification unnecessary driving mode. The operation related to setting is execution operation or setting check operation. When the operation is cancelled, the process ends.

In step S1208, the CPU 20 acquires the already-set notification functions of the group.

In step S1210, the CPU 20 determines whether the operation related to setting is execution operation or setting check operation. In the case of the execution operation, the process proceeds to step S1218. In the case of the setting check operation, the process proceeds to step S1212.

In step S1212, the CPU 20 displays the notification unnecessary driving mode setting screen.

In step S1214, the CPU 20 acquires customize operation to driver assist functions and detailed functions allowed for setting.

In step S1216, the details set through the customize operation are reflected in the setting information as the settings of the notification unnecessary driving mode.

In step S1218, the CPU 20 provides instructions for settings to the driver assist functions with the setting information set for the notification unnecessary driving mode and collectively disables the notification functions.

According to the twelfth embodiment, it is possible to improve the convenience in a case where notification-related driver assist functions are disabled according to a situation.

In the above-described embodiments, various processors other than the CPU 20 may execute various processes executed by the CPU reading software (program) and running the software (program). Examples of the processors in this case include a programmable logic device (PLD) of which the circuit configuration is changeable after production, such as a field-programmable gate array (FPGA), and a dedicated electrical circuit that is a processor having a circuit configuration designed exclusively to execute a specific process, such as a graphics processing unit (GPU) and an application specific integrated circuit (ASIC). The above-described processes may be executed by one of these various processors or may be executed by a combination of two or more processors of the same type or different types (for example, a plurality of FPGAs, a combination of a CPU and an FPGA, or the like). The hardware structures of these various processors are more specifically electrical circuits made up of combinations of circuit elements, such as semiconductor elements.

In the above-described embodiments, a mode in which an information processing program is stored (installed) in advance in a non-transitory computer-readable recording medium has been described. For example, a program is stored in advance in the ROM 21. However, the configuration is not limited thereto. Each program may be provided in a form recorded on a non-transitory recording medium, such as a compact disc read only memory (CD-ROM), a digital versatile disc read only memory (DVD-ROM), and a universal serial bus (USB) flash drive. An information processing program may be in a form downloaded from an external device via a network.

The flows of processes described in the above embodiments are only illustrative. An unnecessary step may be deleted, a new step may be added, or the order of processing may be interchanged, without departing from the scope of the invention.

## Claims

1. A driver assist apparatus (12) comprising one or more processors configured to:
collectively provide instructions of settings with group, the settings being set to driver assist functions included in the group, and the group being configured so that the driver assist function of a vehicle (10) is allowed to be added to or deleted from the group; and
execute condition restriction control to restrict satisfaction of a specific condition based on a relationship between a plurality of the driver assist functions in the group.

2. The driver assist apparatus (12) according to claim 1, wherein the specific condition is a state where a first driver assist function is present in the group in a state where a second driver assist function that underlies activation of the first driver assist function is not present in the group.

3. The driver assist apparatus (12) according to claim 2, wherein the specific condition is when the second driver assist function is deleted from the group while the first driver assist function and the second driver assist function both are present in the group.

4. The driver assist apparatus (12) according to claim 2, wherein the specific condition is when the first driver assist function is added to the group while the second driver assist function is not present in the group.

5. The driver assist apparatus (12) according to claim 3, wherein the condition restriction control is control to delete the first driver assist function from the group when the specific condition is satisfied.

6. The driver assist apparatus (12) according to claim 4, wherein the condition restriction control is control to add the second driver assist function to the group when the specific condition is satisfied.

7. The driver assist apparatus (12) according to any one of claims 2 to 6, wherein the condition restriction control includes displaying a character string or icon indicating that activation of the first driver assist function needs the second driver assist function.

8. The driver assist apparatus (12) according to any one of claims 2 to 4, wherein the condition restriction control is control to restrict addition of the driver assist function to the group or deletion of the driver assist function from the group.

9. A driver assist method executed by a computer, the driver assist method comprising:
executing condition restriction control to restrict satisfaction of a specific condition based on a relationship between a plurality of driver assist functions of a vehicle (10) in a group configured so that the driver assist function is allowed to be added to or deleted from the group; and
collectively providing instructions of settings with the group, the setting being set to the driver assist functions included in the group.

10. A non-transitory storage medium storing instructions that are executable by one or more processors and that cause the one or more processors to perform functions comprising:
executing condition restriction control to restrict satisfaction of a specific condition based on a relationship between a plurality of driver assist functions of a vehicle (10) in a group configured so that the driver assist function is allowed to be added to or deleted from the group; and
collectively providing instructions of settings with the group, the setting being set to the driver assist functions included in the group.
